# EUROPEAN PATENT APPLICATION

(11) **EP 2 570 938 A1**
(43) Date of publication of application: **20.03.2013**
(21) Application number: 12006324.3
(22) Date of filing: 07.09.2012
(51) Int. Cl.: G06F 17/30

(54) **System and method for ordering semantic sub-keys utilizing superlative adjectives**

(30) Priority: 16.09.2011 US 201161535895 P; 27.08.2012 US 201213595343
(71) Applicant: Lexxe Pty Ltd., Epping, NSW 2121 (AU)
(72) Inventor: Qiao, Hong Liang, Epping NSW 2121 (AU)
(74) Representative: Müller-Boré & Partner Patentanwälte

(57) **Abstract**

A method, computer-readable medium, and a computer system for determining an ordering is disclosed. A search query including a semantic key and a superlative adjective may be accessed, where the semantic key may be associated with a plurality of semantic sub-keys. At least one respective instance of at least one respective superlative adjective in at least one respective document may be determined for each semantic sub-key of the plurality of semantic sub-keys. Each instance of the at least one respective instance may include a respective superlative adjective that is associated with a respective sentiment of a respective semantic sub-key of the plurality of semantic sub-keys. An ordering of the plurality of semantic sub-keys may be determined based on the at least one respective instance of at least one respective superlative adjective in at least one respective document.

## Description

### BACKGROUND OF THE INVENTION

Conventional search engines commonly use keywords from a user-input search query to locate and display webpages. For example, if a user were interested in learning about which countries border the United States, the user may enter a search query of "country bordering United States." In response, a conventional search engine would typically return webpages with all or some of the four words "country," "bordering," "United," and "States."

Although conventional search engines may be used to locate webpages that contain certain words, it is difficult or impossible for conventional search engines to return search results that are relevant to a search query associated with sentiment. For example, if a user wants to know which arcade game is the best, a search query may be input that includes the words "best" and "arcade game." However, such a query would typically cause a conventional search engine to return many irrelevant webpages that contain information other than an indication of which arcade game title is considered the best.

### SUMMARY OF THE INVENTION

Accordingly, a need exists to determine and/or provide information that is more relevant to a search query associated with sentiment. Embodiments of the present invention provide novel solutions to these needs and others as described below.

Embodiments of the present invention are directed to a method, computer-readable medium, and a computer system for determining an ordering. More specifically, a search query including a semantic key and a superlative adjective may be accessed, where the semantic key may be associated with a plurality of semantic sub-keys. At least one respective instance of at least one respective superlative adjective in at least one respective document may be determined for each semantic sub-key of the plurality of semantic sub-keys. Each instance of the at least one respective instance may include a respective superlative adjective that is associated with a respective sentiment of a respective semantic sub-key of the plurality of semantic sub-keys. An ordering of the plurality of semantic sub-keys may be determined based on the at least one respective instance of at least one respective superlative adjective in at least one respective document. Accordingly, where a search query is associated with sentiment (e.g., the search query includes a superlative adjective), an ordering of semantic sub-keys (e.g., associated with a semantic key included in the search query) may be automatically determined (e.g., by determining, for each semantic sub-key, at least one respective instance of at least one respective superlative adjective in at least one respective document) that provides information relevant to the search query.

Additionally, where search results (e.g., generated responsive to a search performed based on the search query) are processed (e.g., filtered, ranked, etc.) based on the ordering of the semantic sub-keys, search results (e.g., that are associated with sentiment of one or more portions of the search query, that are associated with sentiment of at least one semantic sub-key associated with a semantic key of the search query, etc.) may be returned or generated that are more relevant to the search query. Further, where at least one operation is performed based on the ordering of the semantic sub-keys to generate data (e.g., an image associated with the ordering of semantic sub-keys, an image associated with search results generated responsive to a search performed based on the search query, etc.) for display and/or to display the data, data may be generated and/or displayed that is more relevant to the search query.

In one embodiment, a computer-implemented method of determining an ordering includes accessing a search query, wherein the search query includes a semantic key and a superlative adjective. A plurality of semantic sub-keys associated with the semantic key is determined. The method also includes determining, for each semantic sub-key of the plurality of semantic sub-keys, at least one respective instance of at least one respective superlative adjective in at least one respective document, wherein each instance of the at least one respective instance includes a respective superlative adjective that is associated with a respective sentiment of a respective semantic sub-key. A first ordering of the plurality of semantic sub-keys is determined based on the at least one respective instance of the at least one respective superlative adjective in the at least one respective document.

In another embodiment, a computer-readable medium may have computer-readable program code embodied therein for causing a computer system to perform a method of determining an ordering. And in one embodiment, a system may include a processor and a memory, wherein the memory includes instructions for causing the processor to implement a method of determining an ordering.

### CONCEPTS

The following concepts are supported by the present application:
1. A computer-implemented method of determining an ordering, said method comprising:
   accessing a search query, wherein said search query comprises a semantic key and a superlative adjective;
   determining a plurality of semantic sub-keys associated with said semantic key;
   determining, for each semantic sub-key of said plurality of semantic sub-keys, at least one respective instance of at least one respective superlative adjective in at least one respective document, wherein each instance of said at least one respective instance comprises a respective superlative adjective that is associated with a respective sentiment of a respective semantic sub-key; and
   determining a first ordering of said plurality of semantic sub-keys based on said at least one respective instance of said at least one respective superlative adjective in said at least one respective document.
2. The method of Concept 1 further comprising:
   determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
   comparing said first and second orderings; and
   if said first and second orderings match, performing at least one operation to generate first data, and wherein said performing further comprises performing said at least one operation based on an ordering selected from a group consisting of said first ordering and said second ordering.
3. The method of Concept 2, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.
4. The method of Concept 1 further comprising:
   determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
   comparing said first and second orderings;
   if said first and second orderings differ, generating second data based on said at least one respective instance and said plurality of sentiment scores; and
   determining a third ordering of said plurality of semantic sub-keys based on said second data.
5. The method of Concept 4, wherein said generating second data further comprises performing an operation selected from a group consisting of: normalizing said at least one respective instance with respect to said plurality of sentiment scores to generate said second data; normalizing said plurality of sentiment scores with respect to said at least one respective instance to generate said second data; and averaging said at least one respective instance and said plurality of sentiment scores to generate said second data.
6. The method of Concept 4 further comprising:
   performing, based on said third ordering, at least one operation to generate third data.
7. The method of Concept 6, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.
8. The method of Concept 1 further comprising:
   determining a category associated with said superlative adjective, and
   wherein said determining said respective quantity of instances further comprises determining said respective quantity of instances in said at least one document of at least one superlative adjective associated with said category.
9. The method of Concept 8, wherein said category is selected from a group consisting of positive and negative.
10. A computer-readable medium having computer-readable program code embodied therein for causing a computer system to perform a method of determining an ordering, said method comprising:
   accessing a search query, wherein said search query comprises a semantic key and a superlative adjective;
   determining a plurality of semantic sub-keys associated with said semantic key;
   determining, for each semantic sub-key of said plurality of semantic sub-keys, at least one respective instance of at least one respective superlative adjective in at least one respective document, wherein each instance of said at least one respective instance comprises a respective superlative adjective that is associated with a respective sentiment of a respective semantic sub-key; and
   determining a first ordering of said plurality of semantic sub-keys based on said at least one respective instance of said at least one respective superlative adjective in said at least one respective document.
11. The computer-readable medium of Concept 10, wherein said method further comprises:
   determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
   comparing said first and second orderings; and
   if said first and second orderings match, performing at least one operation to generate first data, and wherein said performing further comprises performing said at least one operation based on an ordering selected from a group consisting of said first ordering and said second ordering.
12. The computer-readable medium of Concept 11, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.
13. The computer-readable medium of Concept 10, wherein said method further comprises:
   determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
   comparing said first and second orderings;
   if said first and second orderings differ, generating second data based on said at least one respective instance and said plurality of sentiment scores; and
   determining a third ordering of said plurality of semantic sub-keys based on said second data.
14. The computer-readable medium of Concept 13, wherein said generating second data further comprises performing an operation selected from a group consisting of: normalizing said at least one respective instance with respect to said plurality of sentiment scores to generate said second data; normalizing said plurality of sentiment scores with respect to said at least one respective instance to generate said second data; and averaging said at least one respective instance and said plurality of sentiment scores to generate said second data.
15. The computer-readable medium of Concept 13, wherein said method further comprises:
   performing, based on said third ordering, at least one operation to generate third data.
16. The computer-readable medium of Concept 15, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.
17. The computer-readable medium of Concept 10, wherein said method further comprises:
   determining a category associated with said superlative adjective, and
   wherein said determining said respective quantity of instances further comprises determining said respective quantity of instances in said at least one document of at least one superlative adjective associated with said category.
18. The computer-readable medium of Concept 17, wherein said category is selected from a group consisting of positive and negative.
19. A system comprising a processor and a memory, wherein said memory comprises instructions for causing said processor to implement a method of determining an ordering, said method comprising:
   accessing a search query, wherein said search query comprises a semantic key and a superlative adjective;
   determining a plurality of semantic sub-keys associated with said semantic key;
   determining, for each semantic sub-key of said plurality of semantic sub-keys, at least one respective instance of at least one respective superlative adjective in at least one respective document, wherein each instance of said at least one respective instance comprises a respective superlative adjective that is associated with a respective sentiment of a respective semantic sub-key; and
   determining a first ordering of said plurality of semantic sub-keys based on said at least one respective instance of said at least one respective superlative adjective in said at least one respective document.
20. The system of Concept 19, wherein said method further comprises:
   determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
   comparing said first and second orderings; and
   if said first and second orderings match, performing at least one operation to generate first data, and wherein said performing further comprises performing said at least one operation based on an ordering selected from a group consisting of said first ordering and said second ordering.
21. The system of Concept 20, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.
22. The system of Concept 19, wherein said method further comprises:
   determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
   comparing said first and second orderings;
   if said first and second orderings differ, generating second data based on said at least one respective instance and said plurality of sentiment scores; and
   determining a third ordering of said plurality of semantic sub-keys based on said second data.
23. The system of Concept 22, wherein said generating second data further comprises performing an operation selected from a group consisting of: normalizing said at least one respective instance with respect to said plurality of sentiment scores to generate said second data; normalizing said plurality of sentiment scores with respect to said at least one respective instance to generate said second data; and averaging said at least one respective instance and said plurality of sentiment scores to generate said second data.
24. The system of Concept 22, wherein said method further comprises:
   performing, based on said third ordering, at least one operation to generate third data.
25. The system of Concept 24, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.
26. The system of Concept 19, wherein said method further comprises:
   determining a category associated with said superlative adjective, and
   wherein said determining said respective quantity of instances further comprises determining said respective quantity of instances in said at least one document of at least one superlative adjective associated with said category.
27. The system of Concept 26, wherein said category is selected from a group consisting of positive and negative.

### BRIEF DESCRIPTION OF THE DRAWINGS

The present invention is illustrated by way of example, and not by way of limitation, in the figures of the accompanying drawings and in which like reference numerals refer to similar elements.
Figure 1A shows a first flowchart of a computer-implemented process for analyzing sentiment in accordance with one embodiment of the present invention.
Figure 1B shows a second flowchart of a computer-implemented process for analyzing sentiment in accordance with one embodiment of the present invention.
Figure 1C shows a third flowchart of a computer-implemented process for analyzing sentiment in accordance with one embodiment of the present invention.
Figure 2 shows an exemplary system for analyzing sentiment in accordance with one embodiment of the present invention.
Figure 3 shows components of an exemplary sentiment analysis component in accordance with one embodiment of the present invention.
Figure 4 shows an exemplary data structure including sentiment data in accordance with one embodiment of the present invention.
Figure 5 shows an exemplary data structure including sentiment data for at least one document in accordance with one embodiment of the present invention.
Figure 6A shows a first exemplary data structure illustrating a score reduction resulting from affected portions being associated with the same name, phrase or other grammatical unit and also being associated with the same effecting portion in accordance with one embodiment of the present invention.
Figure 6B shows a second exemplary data structure illustrating a score reduction resulting from affected portions being associated with the same name, phrase or other grammatical unit and also being associated with the same effecting portion in accordance with one embodiment of the present invention.
Figure 6C shows a third exemplary data structure illustrating a score reduction resulting from affected portions being associated with the same name, phrase or other grammatical unit and also being associated with the same effecting portion in accordance with one embodiment of the present invention.
Figure 7A shows a first exemplary data structure illustrating a score reduction resulting from an affected portion and a corresponding effecting portion being associated with the same name, phrase or other grammatical unit in accordance with one embodiment of the present invention.
Figure 7B shows a second exemplary data structure illustrating a score reduction resulting from an affected portion and a corresponding effecting portion being associated with the same name, phrase or other grammatical unit in accordance with one embodiment of the present invention.
Figure 8A shows a first exemplary data structure illustrating a score combination or increase resulting from affected portions being associated with the same name, phrase or other grammatical unit and also being associated with different effecting portions in accordance with one embodiment of the present invention.
Figure 8B shows a second exemplary data structure illustrating a score combination or increase resulting from affected portions being associated with the same name, phrase or other grammatical unit and also being associated with different effecting portions in accordance with one embodiment of the present invention.
Figure 9 shows an exemplary data structure including sentiment data for a theme and/or a semantic key in accordance with one embodiment of the present invention.
Figure 10 shows an exemplary data structure including classification data associated with score data in accordance with one embodiment of the present invention.
Figure 11 shows a flowchart of a computer-implemented process for processing data in accordance with one embodiment of the present invention
Figure 12 shows a flowchart of a computer-implemented process for performing at least one operation in accordance with one embodiment of the present invention.
Figure 13A shows exemplary system 1300A for processing data in accordance with one embodiment of the present invention.
Figure 13B shows an exemplary system for performing at least one operation in accordance with one embodiment of the present invention.
Figure 14A shows an exemplary on-screen graphical user interface for accessing data associated with a search in accordance with one embodiment of the present invention.
Figure 14B shows exemplary an on-screen graphical user interface for accessing at least one portion of data associated with a search in accordance with one embodiment of the present invention.
Figure 15 shows an exemplary on-screen graphical user interface for automatically suggesting at least one command in accordance with one embodiment of the present invention.
Figure 16A shows an exemplary on-screen graphical user interface associated with at least one search result in accordance with one embodiment of the present invention.
Figure 16B shows an exemplary on-screen graphical user interface for displaying at least one search result in accordance with one embodiment of the present invention.
Figure 16C shows an exemplary on-screen graphical user interface for displaying sentiment data associated with at least one search result in accordance with one embodiment of the present invention.
Figure 17A shows a first portion of a flowchart of an exemplary computer-implemented process for determining an ordering in accordance with one embodiment of the present invention.
Figure 17B shows a second portion of a flowchart of an exemplary computer-implemented process for determining an ordering in accordance with one embodiment of the present invention.
Figure 18 shows an exemplary diagram associated with an ordering of data in accordance with one embodiment of the present invention.
Figure 19 shows an exemplary data structure including an ordering of semantic sub-keys in accordance with one embodiment of the present invention.
Figure 20 shows an exemplary data structure including an ordering of semantic sub-keys in accordance with one embodiment of the present invention.
Figure 21 shows an exemplary computer system platform upon which embodiments of the present invention may be implemented.

### DETAILED DESCRIPTION OF THE INVENTION

Reference will now be made in detail to embodiments of the present invention, examples of which are illustrated in the accompanying drawings. While the present invention will be discussed in conjunction with the following embodiments, it will be understood that they are not intended to limit the present invention to these embodiments alone. On the contrary, the present invention is intended to cover alternatives, modifications, and equivalents which may be included with the spirit and scope of the present invention as defined by the appended claims. Furthermore, in the following detailed description of the present invention, numerous specific details are set forth in order to provide a thorough understanding of the present invention. However, embodiments of the present invention may be practiced without these specific details. In other instances, well-known methods, procedures, components, and circuits have not been described in detail so as not to unnecessarily obscure aspects of the present invention.

### Notation and Nomenclature

Some regions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing the terms such as "aborting," "accepting," "accessing," "adding," "adjusting," "analyzing," "applying," "assembling," "assigning," "balancing," "blocking," "calculating," "capturing," "combining," "comparing," "collecting," "creating," "debugging," "defining," "depicting," "detecting," "determining," "displaying," "establishing," "executing," "filtering," "flipping," "generating," "grouping," "hiding," "identifying," "initiating," "interacting," "matching," "modifying," "monitoring," "moving," "ordering," "outputting," "performing," "placing," "presenting," "processing," programing," "querying," "ranking," "removing," "repeating," "resuming," "sampling," "selecting," "simulating," "sorting," "storing," "subtracting," "suspending," "tracking," "transcoding," "transforming," "unblocking," "using," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

### Embodiments of the Present Invention

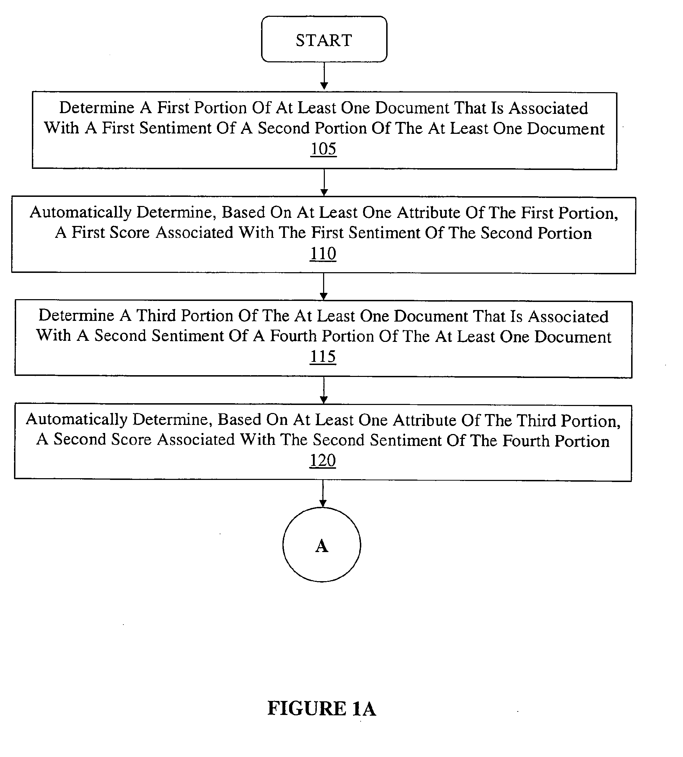

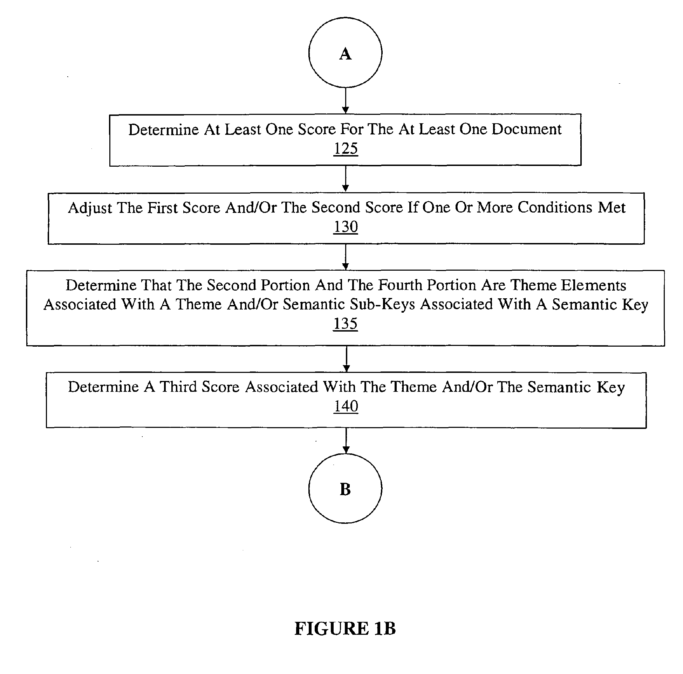

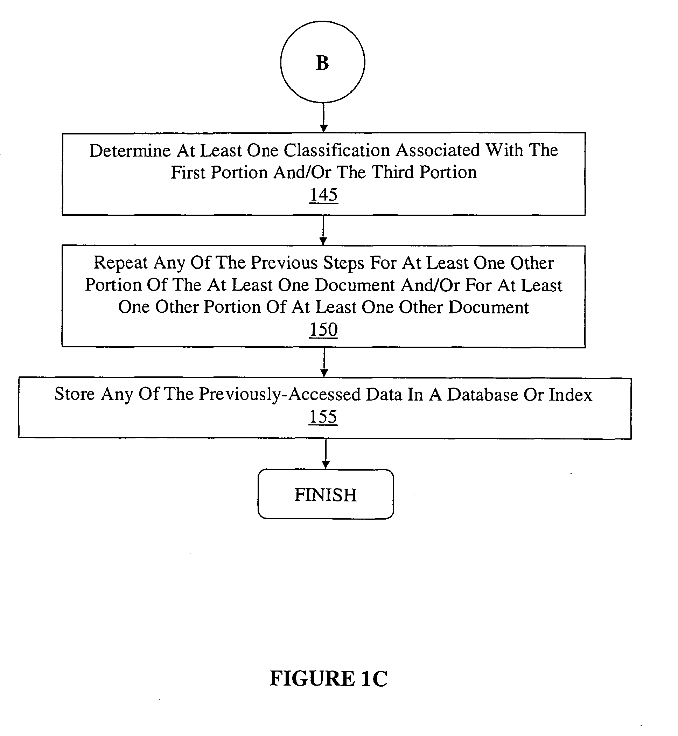

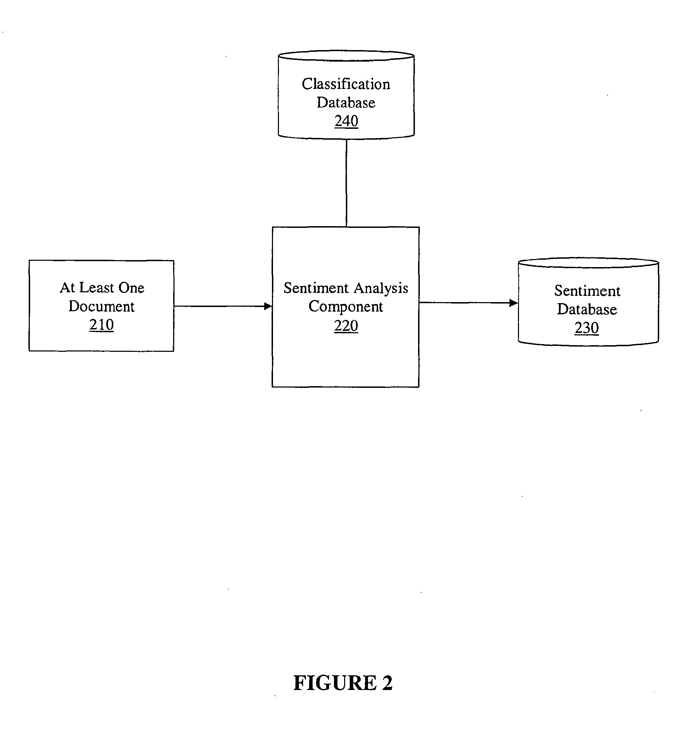

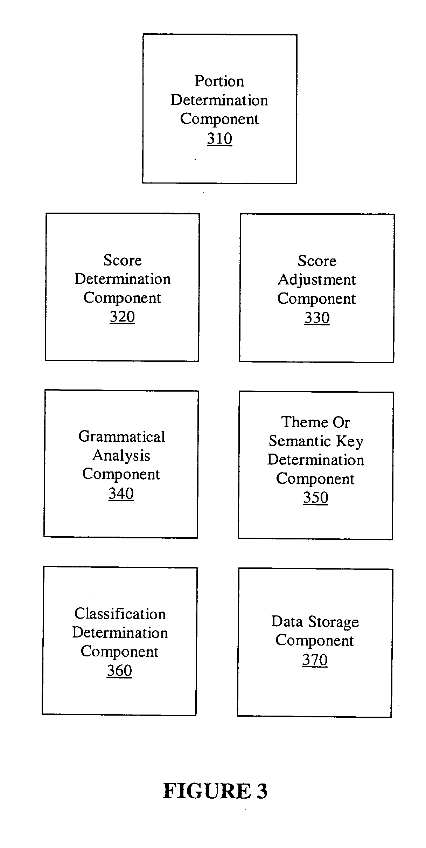

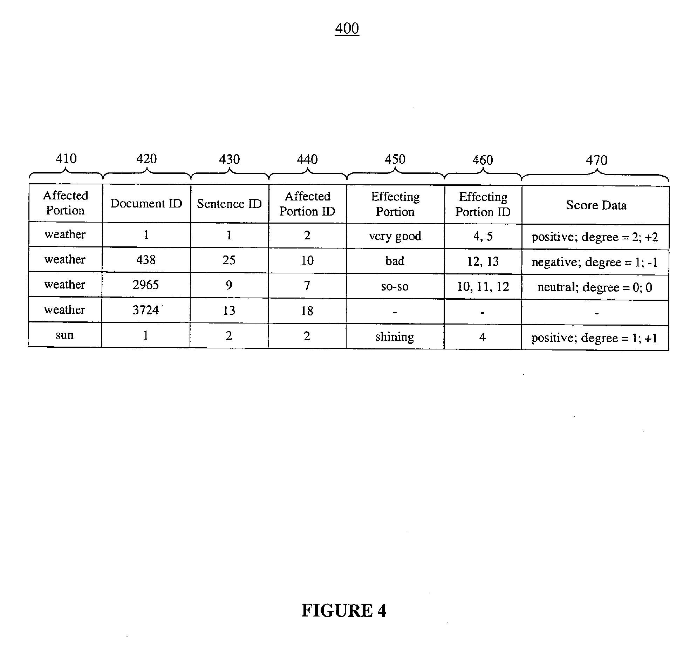

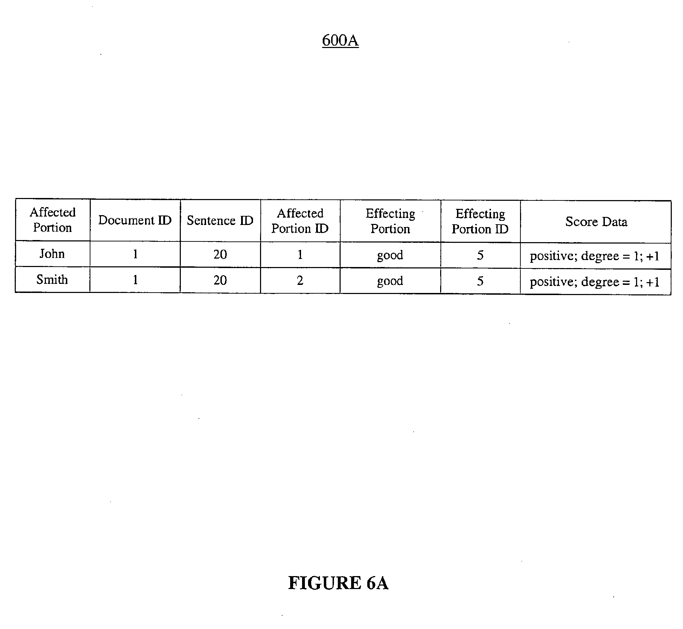

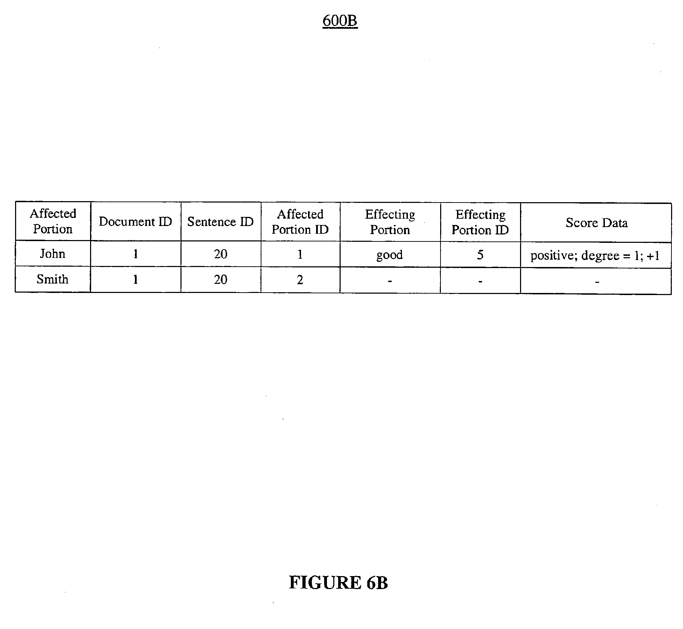

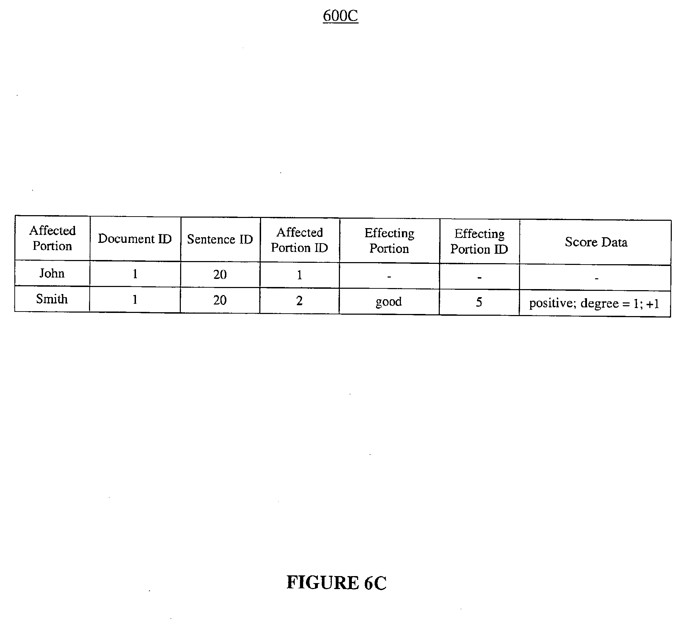

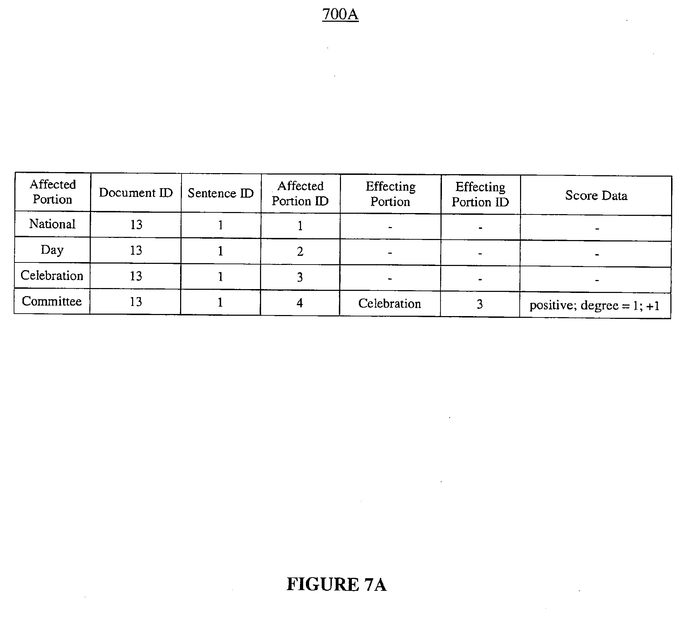

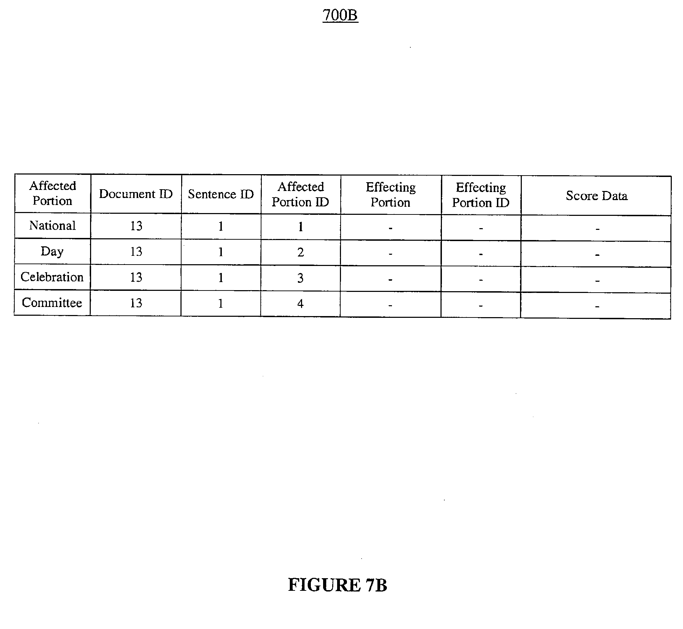

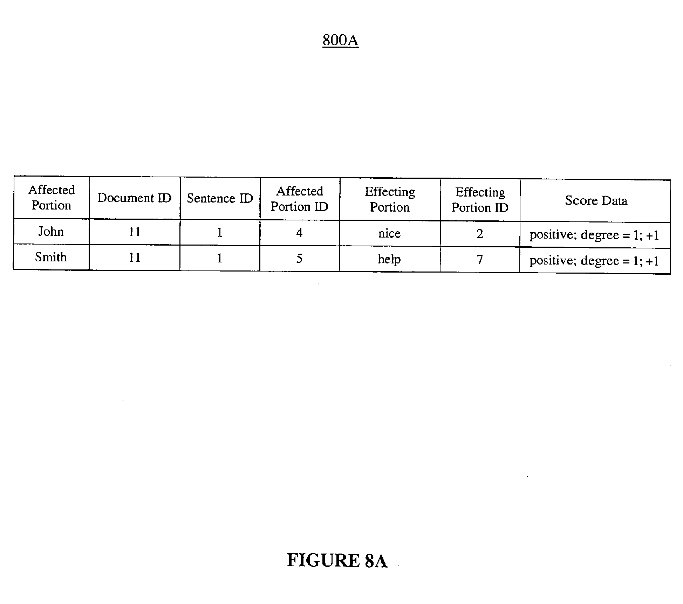

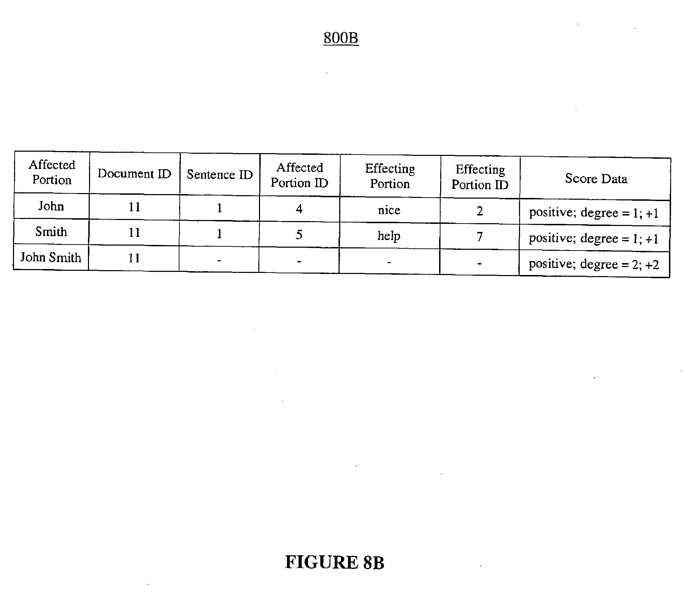

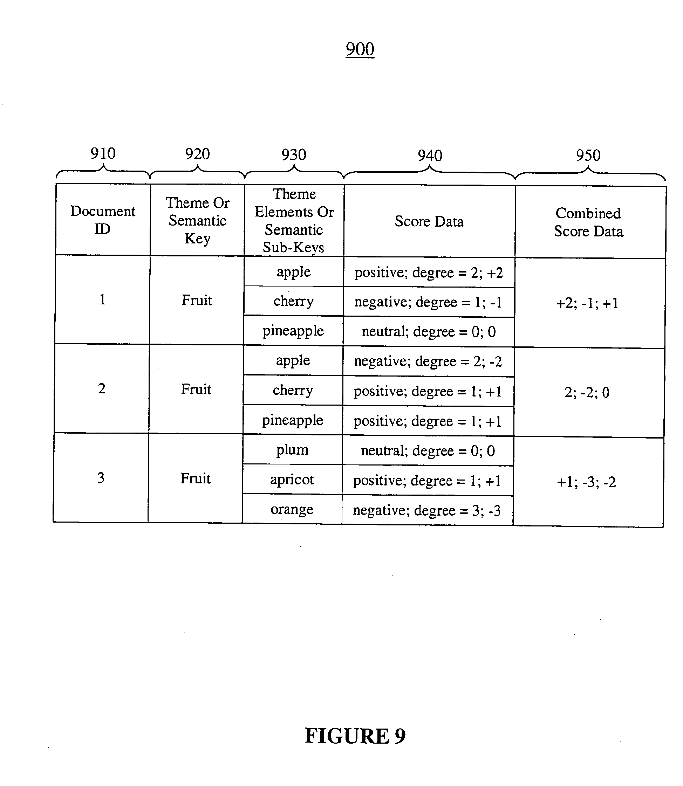

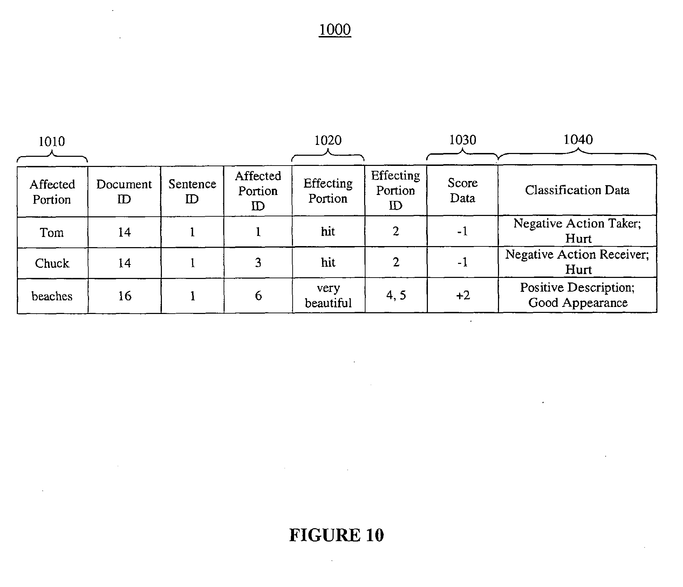

In one embodiment, data associated with sentiment of one or more portions of at least one document may be generated (e.g., in accordance with process 100 of Figures 1A, 1B and 1C, using one or more components of system 200 of Figure 2, using one or more components of processing component 220 of Figure 3, etc.). The data may include at least one score (e.g., as shown in Figures 4, 5, 6A, 6B, 6C, 7A, 7B, 8A, 8B, 9, 10, etc.), at least one category (e.g., as shown in Figure 4, 5, 6A, 6B, 6C, 7A, 7B, 8A, 8B, 9, 10, etc.), at least one degree (e.g., as shown in Figure 4, 5, 6A, 6B, 6C, 7A, 7B, 8A, 8B, 9, 10, etc.), at least one classification (e.g., as shown in Figure 10), or some combination thereof. The data may be modified or changed (e.g., a score may be reduced if portions of a document being scored are part of the same phrase or name as depicted in Figures 6A, 6B and 6C; a score may be reduced if one portion of a phrase or name causes another portion of the phrase or name to be scored as depicted in Figures 7A and 7B; sentiment data may be added for a name or phrase by combining or using information associated with portions of the name or phrase as depicted in Figures 8A and 8B; sentiment data may be added for a theme or semantic key by combining or using information associated with theme elements or semantic sub-keys as depicted in Figure 9; sentiment data may be added for a theme or semantic key by combining or using information associated with theme elements or semantic sub-keys as depicted in Figure 9; etc.) in one embodiment. And in one embodiment, the data may be stored (e.g., in a database or index for subsequent use).

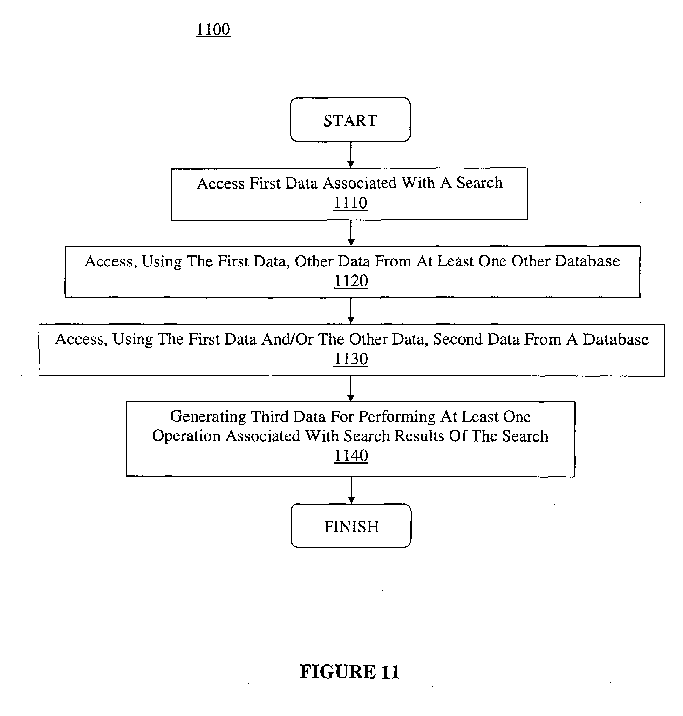

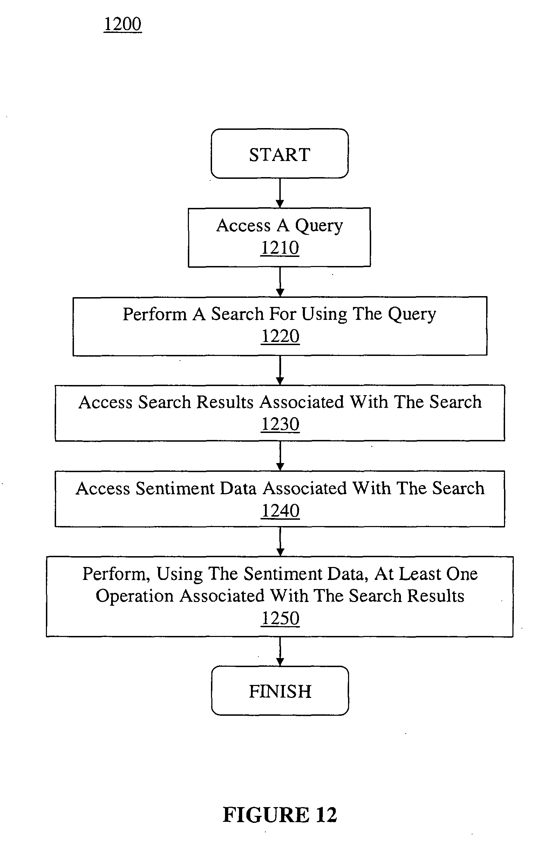

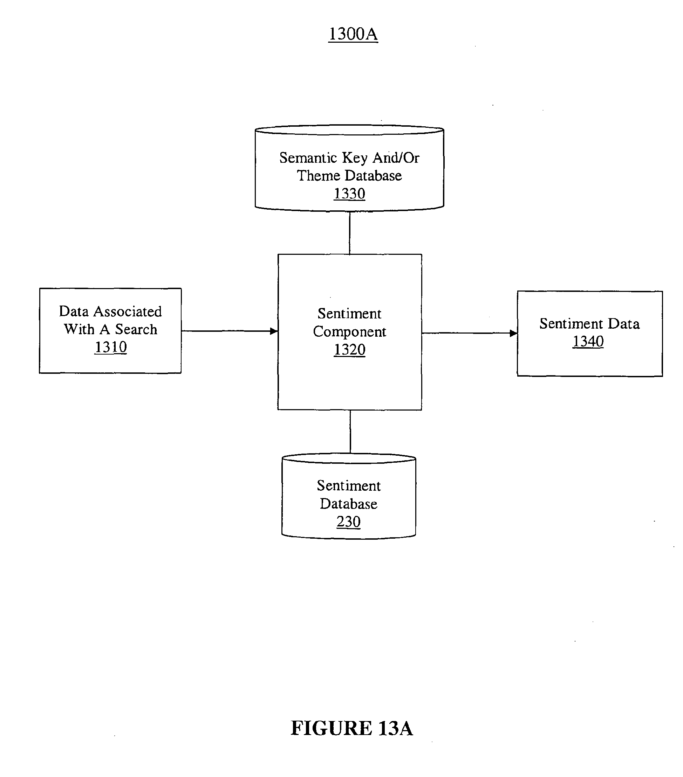

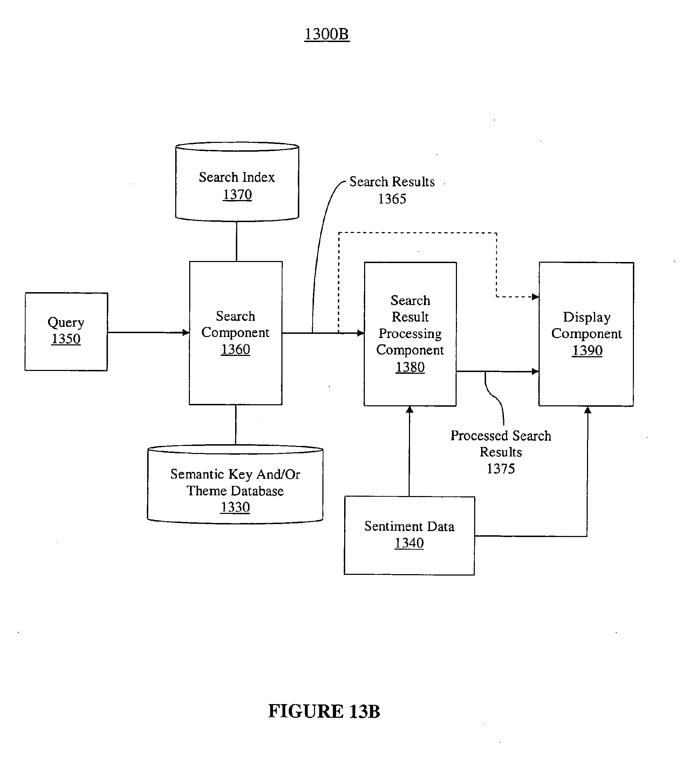

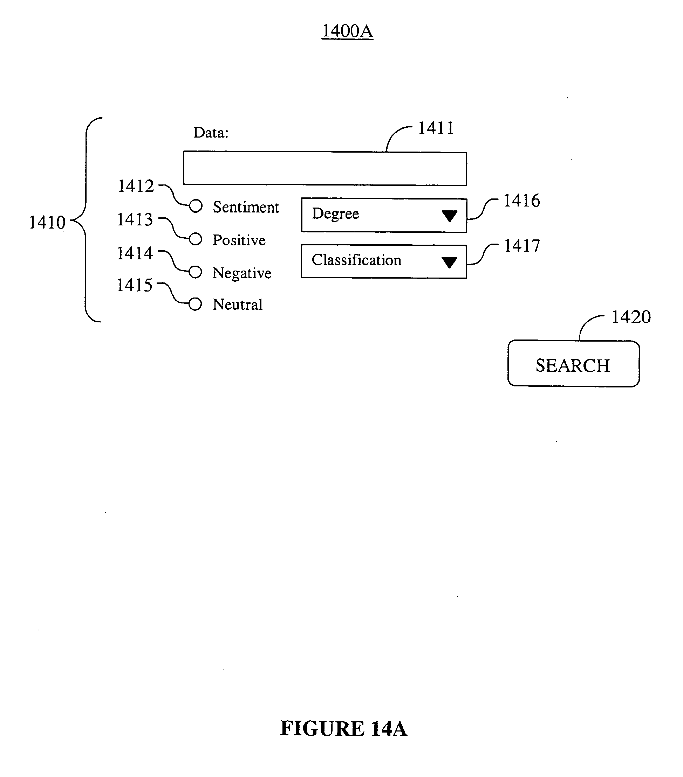

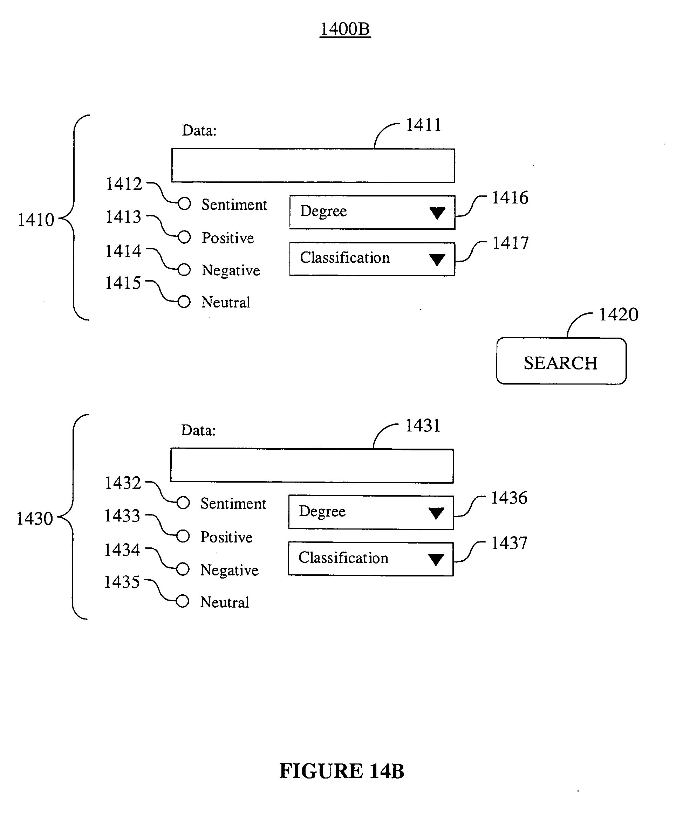

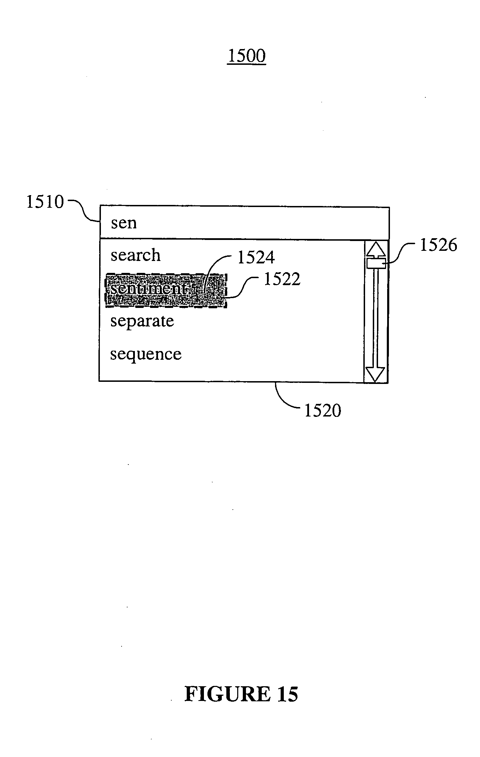

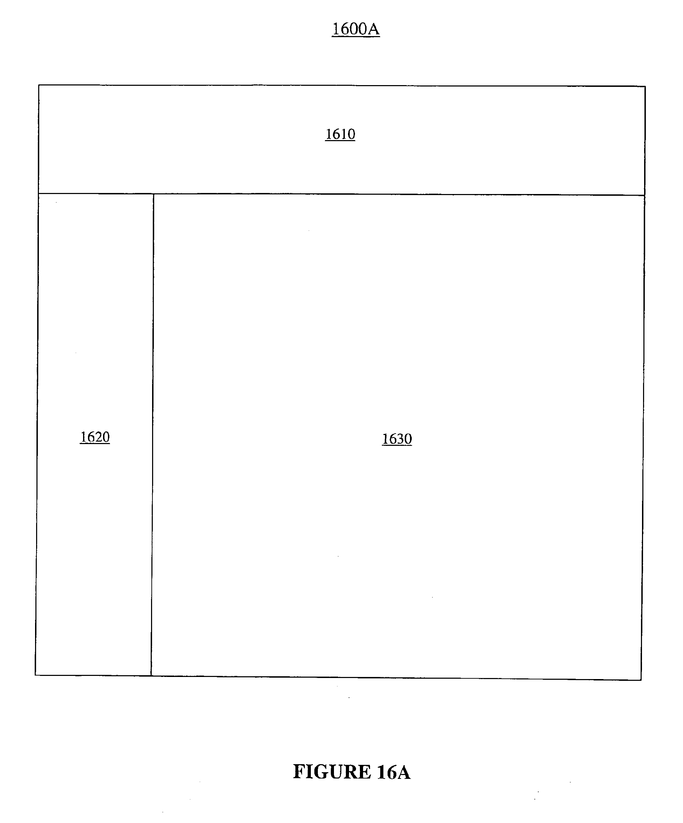

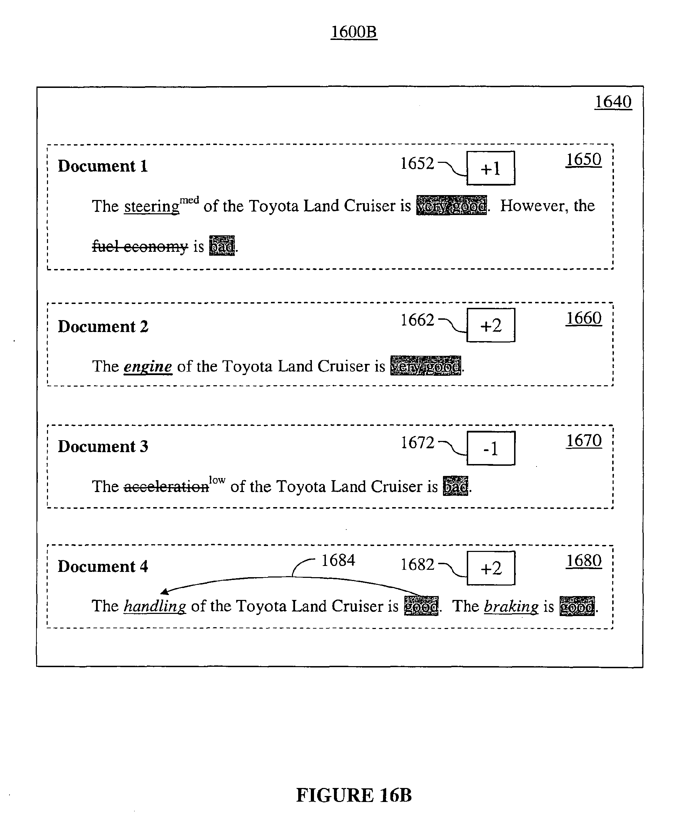

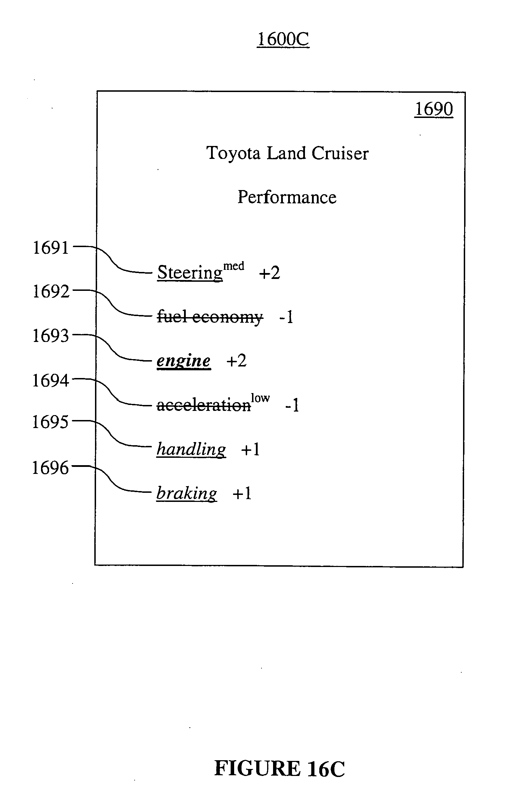

Data associated with sentiment of one or more portions of at least one document may be accessed (e.g., in accordance with process 1100 of Figure 11, using one or more components of system 1300A of Figure 13A, etc.) and/or used (e.g., in accordance with process 1200 of Figure 12, using one or more components of system 1300B of Figure 13B, etc.) in one embodiment. For example, data associated with sentiment of one or more portions of at least one document may be accessed from a database using data associated with a search (e.g., a query used for the search to generate search results, information associated with the search results, at least a portion of the search results, at least one command, etc.). The data associated with the search may be input (e.g., by a user) using a user interface (e.g., graphical user interface 1400A of Figure 14A, graphical user interface 1400B of Figure 14B, graphical user interface 1500 of Figure 15, etc.) in one embodiment. The data may be used to generate other data for performing at least one operation associated with search results (e.g., generated as a result of the search). The at least one operation may include filtering the search results, ranking the search results, displaying an image associated with the at least one sentiment (e.g., a background or other feature of a webpage which indicates a sentiment associated with a plurality of search results, a background or other feature of a particular search result which indicates a sentiment associated with the particular search result or some portion thereof, an image displayed separate from the search results which indicates a sentiment associated with one or more of the search results or some portion thereof, etc.), some combination thereof, etc. The image may be displayed using and/or as part of a graphical user interface (e.g., 1600A of Figure 16A, 1600B of Figure 16B, 1600C of Figure 16C, etc.) in one embodiment.

### Generation of Sentiment Data

Figures 1A, 1B and 1C show a flowchart of computer-implemented process 100 for automatically generating sentiment data in accordance with one embodiment of the present invention. Figure 2 shows exemplary system 200 for analyzing sentiment in accordance with one embodiment of the present invention. As shown in Figure 2, sentiment analysis component 220 may analyze sentiment associated with at least one document 210 (or at least one portion thereof) to generate data associated with the sentiment of one or more portions of at least one document 210 (e.g., "sentiment data"), where the sentiment data may be stored in sentiment index or database 230 in one embodiment. Sentiment database 230 may include one or more data structures (e.g., 400, 500, 600A, 600B, 600C, 700A, 700B, 800A, 800B, 900, 1000, some combination thereof, etc.). Figure 3 shows components of exemplary sentiment analysis component 220 in accordance with one embodiment of the present invention.

Turning to Figure 1A, step 105 involves determining a first portion of at least one document that is associated with a first sentiment of a second portion of the at least one document. For example, where a document includes the sentence "the weather is very good," step 105 may involve determining that "very good" (e.g., the first portion) is associated with a sentiment of "weather" (e.g., the second portion).

In one embodiment, step 105 may involve determining that the first portion effects or modifies the second portion, or conversely, that the second portion is affected by the first portion. In one embodiment, step 105 may involve determining (e.g., using a grammatical analyzer) that the first and second portions are within the same sentence, within the same sentence fragment, within the same paragraph, within a predetermined proximity (e.g., defined in terms of a number of words, a number of sentences, a number of paragraphs, etc.) to one another in a document, etc. In one embodiment, step 105 may involve determining (e.g., using a grammatical analyzer) that the first and second portions are within different sentences, within different sentence fragments, within different paragraphs, outside of a predetermined proximity (e.g., defined in terms of a number of words, a number of sentences, a number of paragraphs, etc.) to one another in a document, etc. And in one embodiment, step 105 may involve determining (e.g., using a grammatical analyzer) that the first and second portions are grammatically related (e.g., subject and predicate, subject and verb, verb and object, noun and adjective, pronoun and adjective, noun and adverb, pronoun and adverb, etc.). It should be appreciated that the first portion and the second portion may be any part of speech (e.g., a noun, verb, pronoun, adjective, adverb, preposition, conjunction, interjection, etc.), where the first and second portions may be the same part of speech (e.g., both nouns, both verbs, etc.) or different parts of speech.

In one embodiment, the first portion and/or second portion may be included in a sentence or sentence fragment that does not form a question. For example, when parsing a document to locate or identify the first portion and/or second portion, sentences or sentence fragments forming questions may be skipped in one embodiment.

In one embodiment, the first portion and/or the second portion of the at least one document may include at least one respective word. The first and second portions may be in the same document, or alternatively, may be in different documents in one embodiment. The at least one document may include at least one webpage, at least one electronic document, at least one electronic file, advertising content, some combination thereof, etc.

As shown in Figure 1A, step 110 involves automatically determining, based on at least one attribute of the first portion, a first score associated with the first sentiment of the second portion. In one embodiment, the at least one attribute of the first portion may be a category (e.g., positive, negative, neutral, etc.) associated with the first sentiment. For example, "very good" in the previous example may be determined to belong to or otherwise be associated with a positive category in step 110. As another example, "bad" or "very bad" may be determined to belong to or otherwise be associated with a negative category in step 110. And as yet another example, "so-so" or "average" may be determined to belong to or otherwise be associated with a neutral category in step 110. In this manner, the first score (e.g., associated with the first sentiment of the second portion) determined in step 110 may be positive, negative, or neutral based on at least one attribute of the first portion.

In one embodiment, the at least one attribute of the first portion may be a degree associated with the first sentiment. For example, "very good" in the previous example may be determined to be associated with a medium degree or a particular numerical degree (e.g., 2 out of 3, where 1 may be a low degree, 2 may be a medium degree and 3 may be a high degree) in step 110. As another example, "excellent" may be determined to be associated with a high degree or a particular numerical degree (e.g., 3 out of 3, where 1 may be a low degree, 2 may be a medium degree and 3 may be a high degree) in step 110. And as yet another example, "good" may be determined to be associated with a low degree or a particular numerical degree (e.g., 1 out of 3, where 1 may be a low degree, 2 may be a medium degree and 3 may be a high degree) in step 110.

Although degrees associated with positive sentiments have been discussed in the previous examples, it should be appreciated that degrees may also be associated with negative sentiments. Additionally, although specific degrees have been discussed (e.g., low, medium, high, certain numerical degrees, etc.), it should be appreciated that a different number of degrees (e.g., less than or more than 3, etc.) or different types of degrees may-be used in other embodiments.

As shown in Figure 1A, step 115 involves determining a third portion of the at least one document that is associated with a second sentiment of a fourth portion of the at least one document. For example, where a document includes the sentence "the water is bad," step 115 may involve determining that "bad" (e.g., the third portion) is associated with a sentiment of "water" (e.g., the fourth portion).

In one embodiment, step 115 may involve determining that the third portion effects or modifies the fourth portion, or conversely, that the fourth portion is affected by the third portion. In one embodiment, step 115 may involve determining (e.g., using a grammatical analyzer) that the third and fourth portions are within the same sentence, within the same sentence fragment, within the same paragraph, within a predetermined proximity (e.g., defined in terms of a number of words, a number of sentences, a number of paragraphs, etc.) to one another in a document, etc. In one embodiment, step 115 may involve determining (e.g., using a grammatical analyzer) that the third and fourth portions are within different sentences, within different sentence fragments, within different paragraphs, outside of a predetermined proximity (e.g., defined in terms of a number of words, a number of sentences, a number of paragraphs, etc.) to one another in a document, etc. And in one embodiment, step 115 may involve determining (e.g., using a grammatical analyzer) that the third and fourth portions are grammatically related (e.g., subject and predicate, subject and verb, verb and object, noun and adjective, pronoun and adjective, noun and adverb, pronoun and adverb, etc.). It should be appreciated that the third portion and the fourth portion may be any part of speech (e.g., a noun, verb, pronoun, adjective, adverb, preposition, conjunction, interjection, etc.), where the third and fourth portions may be the same part of speech (e.g., both nouns, both verbs, etc.) or different parts of speech.

In one embodiment, the third portion and/or fourth portion may be included in a sentence or sentence fragment that does not form a question. For example, when parsing a document to locate or identify the third portion and/or fourth portion, sentences or sentence fragments forming questions may be skipped in one embodiment.

In one embodiment, the third portion and/or the fourth portion of the at least one document may include at least one respective word. The third and fourth portions may be in the same document, or alternatively, may be in different documents in one embodiment. The at least one document may include at least one webpage, at least one electronic document, at least one electronic file, advertising content, some combination thereof, etc.

As shown in Figure 1A, step 120 involves automatically determining, based on at least one attribute of the third portion, a second score associated with the second sentiment of the fourth portion. In one embodiment, the at least one attribute of the third portion may be a category (e.g., positive, negative, neutral, etc.) associated with the second sentiment. For example, "bad" in the previous example may be determined to belong to or otherwise be associated with a negative category in step 120. As another example, "good" or "very good" may be determined to belong to or otherwise be associated with a positive category in step 120. And as yet another example, "so-so" or "average" may be determined to belong to or otherwise be associated with a neutral category in step 120. In this manner, the second score (e.g., associated with the second sentiment of the fourth portion) determined in step 120 may be positive, negative, or neutral based on at least one attribute of the third portion.

In one embodiment, the at least one attribute of the third portion may be a degree associated with the second sentiment. For example, "bad" in the previous example may be determined to be associated with a low degree or a particular numerical degree (e.g., 1 out of 3, where 1 may be a low degree, 2 may be a medium degree and 3 may be a high degree) in step 120. As another example, "very bad" may be determined to be associated with a medium degree or a particular numerical degree (e.g., 2 out of 3, where 1 may be a low degree, 2 may be a medium degree and 3 may be a high degree) in step 120. And as yet another example, "extremely bad" may be determined to be associated with a high degree or a particular numerical degree (e.g., 3 out of 3, where 1 may be a low degree, 2 may be a medium degree and 3 may be a high degree) in step 120.

Although degrees associated with negative sentiments have been discussed in the previous examples, it should be appreciated that degrees may also be associated with positive sentiments. Additionally, although specific degrees have been discussed (e.g., low, medium, high, certain numerical degrees, etc.), it should be appreciated that a different number of degrees (e.g., less than or more than 3, etc.) or different types of degrees may be used in other embodiments.

In one embodiment, steps 105 and/or 115 of process 100 may be performed by portion determination component 310 of sentiment analysis component 220 (e.g., as shown in Figure 3). And in one embodiment, steps 110 and/or 120 of process 100 may be performed by score determination component 320 of sentiment analysis component 220 (e.g., as shown in Figure 3).

Figure 4 shows exemplary data structure 400 including sentiment data (e.g., data associated with sentiment of one or more portions of at least one document) in accordance with one embodiment of the present invention. As shown in Figure 4, each row of data structure 400 may include respective score data (e.g., in column 470) that is associated with a respective effecting portion (e.g., in column 450) and/or a respective affected portion (e.g., in column 410). In one embodiment, one or more of the effecting portions (e.g., in column 450) may be analogous to the first portion (e.g., determined in step 105 of process 100) and/or the third portion (e.g., determined in step 115 of process 100), whereas one or more of the affected portions (e.g., in column 410) may be analogous to the second portion and/or the fourth portion. In this manner, each of the effecting portions (e.g., in column 450) may be associated with a respective sentiment (e.g., associated with the score data in column 470) of a respective affected portion (e.g., in column 410).

As shown in Figure 4, one or more columns of data structure 400 (e.g., columns 420, 430 and 440) may provide a respective location of each affected portion in column 410. For example, column 420 may include a respective document identifier associated with each affected portion in column 410, column 430 may include a respective sentence identifier (e.g., a sentence number or numbers, etc.) associated with each affected portion in column 410, and column 440 may include a respective affected portion identifier (e.g., a word number or numbers, etc.) associated with each affected portion in column 410. As a further example, the first row in data structure 400 may correspond to the first sentence in Document "1" which reads: "[t]he weather is very good." In this case, the word "weather" may be an affected portion (e.g., modified or affected by the effecting portion "very good") located in the second word of the first sentence of Document "1."

One or more columns of data structure 400 (e.g., columns 420, 430 and 460) may provide a respective location of each effecting portion in column 450. For example, column 420 may include a respective document identifier associated with each effecting portion in column 450, column 430 may include a respective sentence identifier (e.g., a sentence number or numbers, etc.) associated with each effecting portion in column 450, and column 460 may include a respective effecting portion identifier (e.g., a word number or numbers, etc.) associated with each effecting portion in column 450. Using the above example where the first sentence in Document "1" reads "[t]he weather is very good," the words "very good" may be an effecting portion (e.g., associated with a sentiment of the affected word "weather") located in the fourth and fifth words of the first sentence of Document "1."

As shown in Figure 4, each portion of score data in column 470 may include at least one respective score (e.g., determined in accordance with step 110 and/or step 120 of process 100). Each score may be determined by at least one respective attribute (e.g., a category, a degree, etc.) of a respective effecting portion (e.g., in column 450). For example, the score of "+2" in the first row may be determined based on a positive category and a degree of 2 associated with the effecting portion of "very good." As another example, the score of "-1" in the second row may be determined based on a negative category and a degree of 1 associated with the effecting portion of "bad." As yet another example, the score of "0" in the third row may be determined based on a neutral category and/or a degree of 0 associated with the effecting portion of "so-so.

Accordingly, data structure 400 may be used to access or determine data associated with sentiment of one or more portions of at least one document (e.g., by indexing a database or index including data structure 400). For example, where one or more affected portions within data structure 400 are associated with "Toyota Land Cruiser," the sentiment of the Toyota Land Cruiser may be easily and efficiently determined by indexing data structure 400 (e.g., using the affected portion "Toyota Land Cruiser") to access sentiment data associated with the Toyota Land Cruiser (e.g., indicating opinions or feelings about the Toyota Land Cruiser which may be positive, negative, neutral, positive of a certain degree, negative of a certain degree, etc.). The sentiment data may be determined from a plurality of documents or sources in one embodiment, thereby increasing the reliability and/or accuracy of the data accessed. Additionally, in one embodiment, the sentiment data may be further processed (e.g., to determine sentiment associated with a larger portion of a document, to determine sentiment associated with an entire document, to determine sentiment associated with a plurality of documents, etc.) to provide further information and/or analysis as discussed herein.

Turning to Figure 1B, step 125 involves determining a respective score for each document of the at least one document. Step 125 may be performed by score determination component 320 of sentiment analysis component 220 (e.g., as shown in Figure 3) in one embodiment.

In one embodiment, step 125 may involve determining at least one respective score (e.g., a respective positive score, a respective negative score, a respective neutral score, some combination thereof, etc.) for each document of the at least one document. A positive score may be determined for a document by adding or combining each of the positive scores for a plurality of affected portions of the document (e.g., a document with two affected portions each with a respective score of "+2" may result in a combined positive score for the document of "4"), based on the number of affected portions of the document associated with a positive score (e.g., a document with 10 affected portions associated with positive scores may result in a combined positive score for the document of "10"), etc. A negative score may be determined for a document by adding or combining each of the negative scores for a plurality of affected portions of the document (e.g., a document with two affected portions each with a respective score of "-1" may result in a combined negative score for the document of "2"), based on the number of affected portions of the document associated with a negative score (e.g., a document with 15 affected portions associated with negative scores may result in a combined negative score for the document of "15"), etc. A neutral score may be determined by combining the positive and negative scores (e.g., a document with two affected portions with scores of "+2" and "-2" may result in a combined neutral score of "0"), based on the number of affected portions of the document associated with a neutral score (e.g., a document with 5 affected portions associated with neutral scores may result in a combined neutral score for the document of "5"), etc.

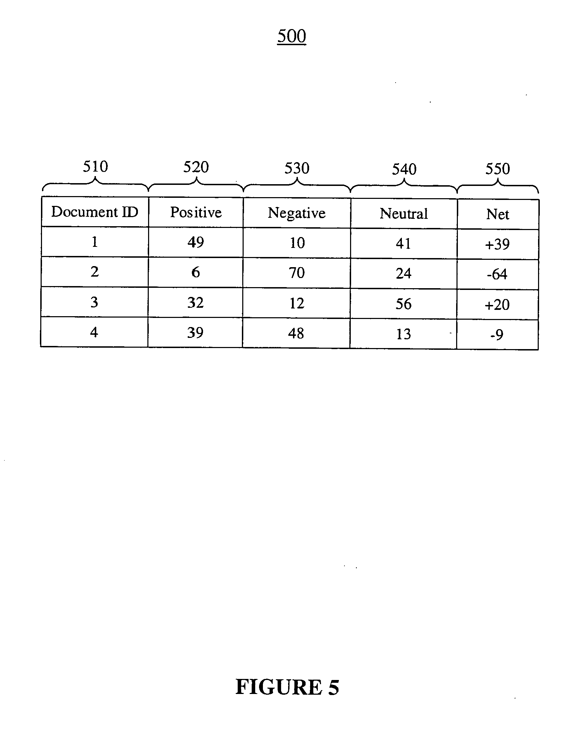

Figure 5 shows exemplary data structure 500 including sentiment data for at least one document in accordance with one embodiment of the present invention. As shown in Figure 5, each row of data structure 500 may include at least one respective score (e.g., a positive score in column 520, a negative score in column 530, a neutral score in column 540, a net score in column 550, some combination thereof, etc.) for a respective document (e.g., in column 510). In one embodiment, one or more of the scores in columns 520, 530 and/or 540 may be determined based on a number of affected portions of a document that are associated with each category (e.g., positive, negative, neutral, etc.), a percentage of the affected portions of a document that are associated with each category (e.g., positive, negative, neutral, etc.), etc. For example, in one embodiment, the numbers in columns 520, 530 and 540 for any given row may add to 100 indicating that 100 percent of the affected portions of the document are accounted for in the data of these columns (e.g., 520, 530 and 540). In one embodiment, one or more of the scores in column 520 may be determined by adding or combining respective positive scores of respective affected portions of each document. One or more of the scores in column 530 may be determined by adding or combining respective negative scores of respective affected portions of each document in one embodiment. And in one embodiment, one or more of the scores in column 550 may be determined by adding or combining a respective positive score (e.g., in column 520) with a respective negative score (e.g., in column 530) for each document.

Accordingly, data structure 500 may be used to access or determine data associated with sentiment of at least one document (e.g., by indexing a database or index including data structure 500). The sentiment data (e.g., positive sentiment data in column 520, negative sentiment data in column 530, neutral sentiment data in column 540, etc.) may be used, for example, in combination with a search (e.g., to generate search results including one or more documents listed in column 510 of data structure 500) to determine the sentiment of something (e.g., identified in the query for the search) across the one or more documents of the search results. Additionally, the net sentiment data (e.g., in column 550) may allow a determination of whether the overall sentiment for each document is positive or negative and/or how positive or negative the sentiment is. In this manner, a larger amount of data may be advantageously represented in a more concise and/or comprehensible manner (e.g., when presenting the data using a webpage, graphical user interface, etc.) as discussed herein.

Turning back to Figure 1B, step 125 may involve determining at least one score (e.g., a positive score, a negative score, a neutral score, some combination thereof, etc.) for a plurality of documents in one embodiment. The at least one score may be determined by combining, adding, etc. the data of data structure 400 and/or data structure 500. In this manner, sentiment data for a plurality of documents (e.g., included within or otherwise associated with search results) may be easily and/or efficiently determined (e.g., which may be used to indicate sentiment of search results or a portion thereof, etc.).

Step 130 involves adjusting the first score (e.g., determined in step 110) and/or the second score (e.g., determined in step 120) if one or more conditions are met. Step 130 may be performed by score adjustment component 330 (either alone or in combination with grammatical analysis component 340) of sentiment analysis component 220 (e.g., as shown in Figure 3) in one embodiment. In one embodiment, grammatical analysis component 340 may be used to determine if a plurality of portions of at least one document are associated with the same name, phrase or other grammatical unit.

In one embodiment, step 130 may involve reducing one or more of a plurality of scores associated with a plurality of affected portions if the plurality of affected portions is associated with the same name, phrase or other grammatical unit and also is associated with a plurality of effecting portions that are the same (e.g., causing the plurality of scores to result from the same effecting portion). For example, Figures 6A, 6B and 6C show exemplary data structures (e.g., 600A, 600B and 600C, respectively) illustrating a score reduction resulting from affected portions being associated with the same name, phrase or other grammatical unit and also being associated with the same effecting portion in accordance with one embodiment of the present invention.

As shown in Figure 6A, data structure 600A may include sentiment data associated with the affected portions "John" and "Smith" which may be part of the name or phrase "John Smith." Both "John" and "Smith" are associated with a score of "+1" based on at least one attribute of the same effecting portion "good." Accordingly, since both "John" and "Smith" (e.g., the plurality of affected portions) are associated with the same name or phrase and also are associated with the same effecting portion "good," the score associated with either affected portion (e.g., "John" or "Smith") may be reduced. For example, Figure 6B shows a reduction of the score associated with the affected portion "Smith," while Figure 6C shows a reduction of the score associated with the affected portion "John." In this manner, the overall score for the name or phrase "John Smith" will be only "+1 (based on the effecting portion "good") instead of the artificially high score of "+2" that would otherwise result from combining the respective "+1" scores if one of the scores had not been reduced.

Although Figures 6A, 6B and 6C only depict a name or phrase with two words, it should be appreciated that a name, phrase or other grammatical unit may include more than two words in other embodiments. In this case, more than one score may be reduced in step 130 if the affected portions are associated with the same effecting portion (e.g., causing the scores to result from the same effecting portion).

In one embodiment, step 130 may involve reducing at least one score associated with at least one affected portion if the at least one affected portion and a corresponding at least one effecting portion are associated with the same name, phrase or other grammatical unit. For example, Figures 7A and 7B show exemplary data structures (e.g., 700A and 700B, respectively) illustrating a score reduction resulting from an affected portion and a corresponding effecting portion being associated with the same name, phrase or other grammatical unit in accordance with one embodiment of the present invention.

As shown in Figure 7A, data structure 700A may include sentiment data associated with the affected portions "National," "Day," "Celebration" and "Committee" which may be part of the name or phrase "National Day Celebration Committee." Accordingly, since both "Committee" (e.g., the affected portion) and "Celebration" (e.g., the corresponding effecting portion) are associated with the same name or phrase, the score associated with the affected portion "Committee" may be reduced as illustrated in Figure 7B.

Although Figures 7A and 7B only depict the reduction of one score, it should be appreciated that any number of scores may be reduced in other embodiments. For example, where a plurality of affected portions and at least one corresponding effecting portion are associated with the same name, phrase or other grammatical unit, then a plurality of scores (e.g., associated with the plurality of affected portions) may be reduced in step 130.

In one embodiment, step 130 may involve increasing or combining scores associated with a plurality of affected portions if the plurality of affected portions is associated with the same name, phrase or other grammatical unit and also is associated with a plurality of effecting portions that are the different (e.g., causing the plurality of scores to result from different effecting portions). For example, Figures 8A and 8B show exemplary data structures (e.g., 800A and 800B, respectively) illustrating a score combination or increase resulting from affected portions being associated with the same name, phrase or other grammatical unit and also being associated with different effecting portions in accordance with one embodiment of the present invention.

As shown in Figure 8A, data structure 800A may include sentiment data associated with the affected portions "John" and "Smith" which may be part of the name or phrase "John Smith." Both "John" and "Smith" are associated with a score of "+1" based on at least one respective attribute of the effecting portions "nice" and "help." Accordingly, since both "John" and "Smith" (e.g., the plurality of affected portions) are associated with the same name or phrase and also are associated with the different effecting portions "nice" and "help," the scores associated with the affected portions (e.g., "John" and "Smith") may be combined or increased. For example, Figure 8B shows the respective scores of "+1" for "John" and "Smith" have been combined or increased to form the score of "+2" associated with the name or phrase "John Smith."

Although Figure 8B shows the addition of data to data structure (e.g., the last row associated with the name or phrase "John Smith"), it should be appreciated that scores may be combined or increased in other manners in other embodiments. For example, the score associated with either "John" or "Smith" may be increased from "+1" to "+2" in one embodiment.

Turning back to Figure 1B, step 135 involves determining that the second portion and the fourth portion are theme elements associated with a theme and/or are semantic sub-keys associated with a semantic key. In one embodiment, a theme associated with the second and fourth portions (e.g., as theme elements) may be determined in step 135 in accordance with United States Patent Application Number 12/884,395, filed September 17, 2010, and entitled "METHOD AND SYSTEM FOR SCORING TEXTS." In one embodiment, a semantic key associated with the second and fourth portions (e.g., as semantic sub-keys) may be determined in step 135 in accordance with United States Patent Application Number 12/112,774, filed April 30, 2008, entitled "SYSTEM AND METHOD FOR ENHANCING SEARCH RELEVANCY USING SEMANTIC KEYS" and/or in accordance with United States Patent Application Number 13/012,690, filed January 24, 2011, entitled "IMPROVED SEARCHING USING SEMANTIC KEYS."

As an example, where the second portion includes the word "apple" and the fourth portion includes the word "cherry," step 135 may involve determining that the second portion (e.g., the word "apple") and the fourth portion (e.g., the word "cherry") are theme elements associated with the theme "fruit." As another example, where the second portion includes the word "apple" and the fourth portion includes the word "cherry," step 135 may involve determining that the second portion (e.g., the word "apple") and the fourth portion (e.g., the word "cherry") are semantic sub-keys associated with the semantic key "fruit."

In one embodiment, the theme or the semantic key that are determined in step 135 may not be an affected portion of the at least one document including the second portion and/or the fourth portion. And in one embodiment, the theme or the semantic key that are determined in step 135 may not be included in any portion of the at least one document including the second portion and/or the fourth portion.

Figure 9 shows exemplary data structure 900 including sentiment data for a theme and/or a semantic key in accordance with one embodiment of the present invention. As shown in Figure 9, data structure 900 may include respective score data (e.g., in column 940) for each theme element and/or semantic sub-key (e.g., in column 930). The theme elements and/or semantic sub-keys in column 930 may be one or more affected portions (e.g., described with respect to other Figures) of at least one document (e.g., in column 910) in one embodiment.

Column 920 may include at least one theme and/or at least one semantic key associated with the theme elements and/or semantic sub-keys in column 930 (e.g., as determined in step 135). For example, the theme or semantic key "fruit" in document "1" (depicted in Figure 9 in the first row of data structure 900) may be determined in step 135 based on one or more of the associated portions (e.g., affected portions, theme elements, semantic sub-keys, some combination thereof, etc.) in column 930 (e.g., "apple," "cherry," "pineapple," some combination thereof, etc.). In one embodiment, the information in column 920 may be added to data structure 900 after the information in column 930 (e.g., responsive to performing step 135).

As shown in Figure 1B, step 140 involves determining a third score associated with the theme and/or the semantic key. In one embodiment, the third score may be determined in step 140 based on the sentiment data of the corresponding theme elements and/or semantic sub-keys (e.g., in column 930 of data structure 900). In one embodiment, the third score determined in step 140 may include at least a portion of the combined score data (e.g., a combined positive sentiment score, a combined negative sentiment score, a net sentiment score, some combination thereof, etc.) in column 950 of data structure 900 of Figure 9.

As shown in Figure 9, data structure may include respective combined score data in column 950 for each of the documents in column 910 and/or each of the themes or semantic keys in column 920. For example, the combined score data associated with document "2" may include a combined positive sentiment score (e.g., "+2" determined in step 140 by adding or averaging the positive scores of "+1" and "+1" from the corresponding score data in column 940), a combined negative sentiment score (e.g., "-2" determined in step 140 by adding or averaging the negative scores of "-2" from the corresponding score data in column 940), a net sentiment score (e.g., determined in step 140 by averaging or adding the combined positive sentiment score and the combined negative sentiment score), some combination thereof, etc. In other embodiments, different or other sentiment data (e.g., other score data, other combined score data, classification data, etc.) may be included in column 950 or another column of data structure 900.

In one embodiment, step 135 of process 100 may be performed by theme or semantic key determination component 350 of sentiment analysis component 220 (e.g., as shown in Figure 3). And in one embodiment, step 140 of process 100 may be performed by score determination component 320 of sentiment analysis component 220 (e.g., as shown in Figure 3).

As shown in Figure 1C, step 145 involves determining at least one classification associated with the first portion (e.g., determined in step 105) and/or the third portion (e.g., determined in step 115). The at least one classification may explain why a sentiment of a portion was determined (e.g., in step 110, in step 120, etc.) to be in a certain category (e.g., positive, negative, neutral, etc.), to have a certain degree (e.g., 1, 2, 3, 4, low, medium, high, etc.), etc. In one embodiment, the at least one classification may be an action taker (e.g., a positive action taker such as a benefactor, a negative action taker such as an offender, etc.), an action receiver (e.g., a positive action receiver such as a beneficiary, a negative action receiver such as a victim, etc.), a description (e.g., a positive description, a negative description, etc.), an identity (e.g., a positive identity such as Superman or The Red Cross, a negative identity such as Hitler or Nazi, etc.), etc. And in one embodiment, step 145 may be performed by classification determination component 360 of sentiment analysis component 220 (e.g., as shown in Figure 3).

Figure 10 shows exemplary data structure 1000 including classification data associated with score data in accordance with one embodiment of the present invention. As shown in Figure 10, each row of data structure 1000 may include respective score data (e.g., in column 1030) that is associated with a respective effecting portion (e.g., in column 1020) and/or a respective affected portion (e.g., in column 1010). Additionally, data structure 1000 may also include respective classification data (e.g., in column 1040) associated with each score data (e.g., in column 1030) and/or each affected portion (e.g., in column 1010).

Taking the first and second rows of data structure 1000 (e.g., associated with the sentence "Tom hit Chuck") as an example, the effecting portion "hit" (e.g., in column 1020) may be associated with a sentiment of at least one affected portion (e.g., "Tom" in column 1010, "Chuck" in column 1010, etc.). A sentiment score of "-1" (e.g., as shown in column 1030) may be determined (e.g., in step 110, step 120, etc.) based on at least on attribute of the effecting portion (e.g., the word "hit" which may be associated with a negative sentiment or category, the lack of a modifier for the word "hit" may be associated with a degree of "1," etc.). Additionally, a respective classification (e.g., "Negative Action Taker; Hurt" as shown in column 1040, "Negative Action Receiver; Hurt" as shown in column 1040, etc.) associated with each affected portion (e.g., "Tom" in column 1010, "Chuck" in column 1010, etc.) and/or each effecting portion (e.g., "hit" as shown in column 1020) may be determined in step 145. In this manner, the classification data (e.g., in column 1040) may explain or otherwise be associated with why score data (e.g., a category, a degree, a score, other sentiment data, etc.) was determined for an affected portion (e.g., in column 1010) and/or an effecting portion (e.g., in column 1020). The classification data may also explain why a sentiment (e.g., associated with the score data in column 1030) of at least one affected portion (e.g., "Tom" in column 1010, "Chuck" in column 1010, etc.) was determined (e.g., in step 110, in step 120, etc.) to be in a certain category (e.g., positive, negative, neutral, etc.), to have a certain degree (e.g., 1, 2, 3, 4, low, medium, high, etc.), etc.

Taking the third row of data structure 1000 (e.g., associated with the sentence "Gold Coast has beautiful beaches") as another example, the effecting portion "very beautiful" (e.g., in column 1020) may be associated with a sentiment of the affected portion "beaches" (e.g., in column 1010). A sentiment score of "+2" (e.g., as shown in column 1030) may be determined (e.g., in step 110, step 120, etc.) based on at least on attribute of the effecting portion (e.g., the word "beautiful" which may be associated with a positive sentiment or category, the word "very" modifying "beautiful" may be associated with a degree of "2," etc.). Additionally, a classification (e.g., "Positive Description; Good Appearance" as shown in column 1040) associated with the affected portion (e.g., "beaches" in column 1010) and/or the effecting portion (e.g., "very beautiful" as shown in column 1020) may be determined in step 145. In this manner, the classification data (e.g., in column 1040) may explain or otherwise be associated with why score data (e.g., a category, a degree, a score, other sentiment data, etc.) was determined for an affected portion (e.g., in column 1010) and/or an effecting portion (e.g., in column 1020). The classification data may also explain why a sentiment (e.g., associated with the score data in column 1030) of an affected portion (e.g., "beaches" in column 1010) was determined (e.g., in step 110, in step 120, etc.) to be in a certain category (e.g., positive, negative, neutral, etc.), to have a certain degree (e.g., 1, 2, 3, 4, low, medium, high, etc.), etc.

In one embodiment, the at least one classification (or classification data associated therewith) may be determined in step 145 by indexing a database (e.g., classification database 240) using an effecting portion (e.g., in column 1020) to obtain classification data (e.g., in column 1040). The indexing may be performed by classification determination component 360 of sentiment analysis component 220 in one embodiment. In this manner, the database (e.g., classification database 240) may include an index of portions (e.g., effecting portions such as "hit," "beaches," etc.) and classification data (e.g., "Negative Action Taker; Hurt," "Negative Action Receiver; Hurt," "Positive Description; Good Appearance," etc.) in one embodiment.

As shown in Figure 1C, step 150 involves repeating any of the previous steps (e.g., of process 100) for at least one other portion of the at least one document and/or for at least one other portion of at least one other document. Step 150 may be performed by one or more components of sentiment analysis component 220 (e.g., as shown in Figure 3). In this manner, score data (e.g., including at least one category, at least one degree, at least one score, etc.), classification data associated therewith, data associated with at least one theme and/or at least one theme element, data associated with at least one semantic key and/or at least one semantic sub-key, other sentiment data, etc. may be determined and/or adjusted in step 150 for at least one other portion of the at least one document and/or for at least one other portion of at least one other document.

Step 155 involves storing any of the previously-accessed data (e.g., in any of the previous steps of process 100) in a database or index. For example, step 155 may involve storing any of the previously-accessed data in sentiment database 230 (e.g., as shown in Figure 2) in one embodiment. In one embodiment, step 155 may be performed by data storage component 370 of sentiment analysis component 220 (e.g., as shown in Figure 3).

In one embodiment, data stored in step 155 may be subsequently accessed and used. For example, the data stored in step 155 may be accessed and used to perform a search for at least one document, to process search results of a search for at least one document, etc. As another example, the data stored in step 155 may be accessed and used to perform at least one operation associated with search results. In one embodiment, the at least one operation may include filtering the search results, ranking the search results, displaying an image associated with the at least one sentiment (e.g., a background or other feature of a webpage which indicates a sentiment associated with a plurality of search results, a background or other feature of a particular search result which indicates a sentiment associated with the particular search result or some portion thereof, an image displayed separate from the search results which indicates a sentiment associated with one or more of the search results or some portion thereof, etc.), some combination thereof, etc.

Although Figure 2 shows a specific number and arrangement of components, it should be appreciated that Figure 2 may include a different number and/or arrangement of components in other embodiments. Although Figure 3 shows a specific number and arrangement of components, it should be appreciated that Figure 3 may include a different number and/or arrangement of components in other embodiments.

Although Figures 4 through 10 depict data structures (e.g., 400, 500, 600A, 600B, 600C, 700A, 700B, 800A, 800B, 900, 1000, etc.) with a certain amount and type of data, it should be appreciated that one or more of the data structures (e.g., 400, 500, 600A, 600B, 600C, 700A, 700B, 800A, 800B, 900, 1000, etc.) may include a different amount and/or type of data in other embodiments. Additionally, although Figures 4 through 10 depict data structures (e.g., 400, 500, 600A, 600B, 600C, 700A, 700B, 800A, 800B, 900, 1000, etc.) with a certain arrangement of data, it should be appreciated that the data structures (e.g., 400, 500, 600A, 600B, 600C, 700A, 700B, 800A, 800B, 900, 1000, etc.) may include a different arrangement of data in other embodiments.

### Use of Sentiment Data

Figure 11 shows a flowchart of computer-implemented process 1100 for processing data in accordance with one embodiment of the present invention. Figure 11 will be described in conjunction with Figure 13A, where Figure 13A shows exemplary system 1300A for processing data in accordance with one embodiment of the present invention.

As shown in Figure 11, step 1110 involves accessing first data (e.g., 1310 of Figure 13A) associated with a search (e.g., to be performed by search component 1360 of Figure 13B). The first data may include at least a portion of a query used for the search to generate search results (e.g., 1365 of Figure 13B, at least one document 210 of Figure 2, etc.), information associated with the search results (e.g., a list of identifiers of documents included in the search results, other information, etc.), at least a portion of the search results, at least one command, some combination thereof, etc. In one embodiment, the at least one command may include at least one command accessed and/or used by a sentiment component (e.g., 1320) to generate and/or process sentiment data (e.g., at least one score, at least one category, at least one degree, at least one classification, etc.). For example, the at least one command may include a request for at least one document associated with at least one sentiment category (e.g., positive, negative, neutral, some combination thereof, etc.), a request for at least one document associated with at least one sentiment degree (e.g., 1, 2, 3, 4, low, medium, high, some combination thereof, etc.), a request for at least one document associated with at least one sentiment classification (e.g., an action taker, an action receiver, a description, an identity, some combination thereof, etc.), some combination thereof, etc. In one embodiment, the at least one command may include at least one command input by a user via a graphical user interface (e.g., 1400A of Figure 14A, 1400B of Figure 14B, 1500 of Figure 15, etc.), some combination thereof, etc. In one embodiment, the search results may include at least one document (e.g., 210 of Figure 2) such as at least one webpage, at least one electronic document, at least one electronic file, advertising content, some combination thereof, etc.

In one embodiment, the first data accessed in step 1110 may include at least one theme, at least one theme element, at least one semantic key, at least one semantic sub-key, some combination thereof, etc. And in one embodiment, the first data may be accessed in step 1110 by a sentiment component (e.g., 1320 of Figure 13A).

As shown in Figure 11, step 1120 involves accessing, using the first data (e.g., accessed in step 1110), other data from at least one other database (e.g., semantic key and/or theme database 1330 as shown in Figure 13A, another database, etc.). In one embodiment, the first data may include at least one semantic key, and the other data may include at least one semantic sub-key associated with the at least one semantic key. In one embodiment, the first data may include at least one semantic sub-key, and the other data may include at least one semantic key associated with the at least one semantic sub-key. In one embodiment, the first data may include at least one theme, and the other data may include at least one theme element associated with the at least one theme. In one embodiment, the first data may include at least one theme element, and the other data may include at least one theme associated with the at least one theme element. And in one embodiment, the other data may not be a part of (e.g., be different from) the first data and/or at least one document associated with the first data.

Step 1130 involves accessing, using the first data (e.g., accessed in step 1110) and/or the other data (e.g., accessed in step 1120), second data from a database (e.g., sentiment database 230 as shown in Figure 13A). In one embodiment, step 1130 may involve indexing the database using the first data and/or the other data to retrieve or access the second data. The second data may include at least one score, at least one category associated with at least one sentiment, at least one degree, at least one classification, data stored in a sentiment database (e.g., 230, etc.), data stored in at least one data structure (e.g., 400, 500, 600A, 600B, 600C, 700A, 700B, 800A, 800B, 900, 1000, etc.), some combination thereof, etc.

As such, in one embodiment, use of the other data (e.g., alone or in combination with the first data) to access the second data may provide one or more advantages. For example, where the other data is associated with a theme or theme element of a document, the second data (e.g., accessed in step 1130) may more accurately or precisely represent the sentiment of one or more portions of the document since it is accessed or determined based on a theme or theme element of the document. As another example, where the other data is associated with a semantic key (e.g., which may be a focus, concept, etc.) or semantic sub-key (e.g., which may be a word or phrase associated with the semantic key) of a query (e.g., used to generate search results including at least one document), the second data (e.g., accessed in step 1130) may more accurately or precisely represent the sentiment of one or more portions of the document since it is accessed or determined based on a semantic key or semantic sub-key of the query. Additionally, since the other data may not be found in the document itself in one embodiment, the quality and/or quantity of information provided by the second data may be further increased since more data (e.g., the other data in combination with the first data) may be used to determine or access the second data.

In one embodiment, step 1120 may be optional and omitted. In this case, step 1130 may involve accessing the second data using the first data (e.g., and not the other data).

As shown in Figure 11, step 1140 involves generating third data (e.g., sentiment data 1340 of Figure 13A) for performing at least one operation (e.g., as described with respect to step 1240 of process 1200 of Figure 12) associated with search results (e.g., including at least one document) of the search. In one embodiment, the third data may be generated in step 1140 based on the first data (e.g., accessed in step 1110), the other data (e.g., accessed in step 1120), the second data (e.g., accessed in step 1130), some combination thereof, etc.

Figure 12 shows a flowchart of computer-implemented process 1200 for performing at least one operation in accordance with one embodiment of the present invention. Figure 12 will be described in conjunction with Figure 13B, where Figure 13B shows exemplary system 1300B for performing at least one operation in accordance with one embodiment of the present invention.

As shown in Figure 12, step 1210 involves accessing a query (e.g., 1350). The query may be included in or include data associated with a search (e.g., 1310 of Figure 13A). The query may include at least one word, at least one phrase, at least one name, semantic data, score data, classification data, a portion of data (e.g., an effecting portion; an affected portion; a portion of data similar to the first portion, second portion, third portion, fourth portion, etc. as discussed with respect to process 100; etc.), some combination thereof, etc. The query may be accessed in step 1210 by a search component (e.g., 1360). And in one embodiment, the query accessed in step 1210 may be input using a region (e.g., 1411, 1431, 1510, some combination thereof, etc.) of a graphical user interface (e.g., 1400A, 1400B, 1500, some combination thereof, etc.).

Step 1220 involves performing a search using the query (e.g., accessed in step 1210). The search may be performed (e.g., by search component 1360), in one embodiment, using search index 1370. For example, the query or a portion thereof may be used to index the search index (e.g., 1370) to access at least one document or data associated therewith. Step 1220 may involve generating search results (e.g., 1365) that include one or more documents.

Search index 1370 may be a keyword search index (e.g., used to perform a keyword search) in one embodiment. In one embodiment, search index 1370 may include information associated with a theme (e.g., at least one theme, at least one theme element, etc.), where the information may be used to perform a search based on at least one theme and/or at least one theme element. Search index 1370 may include information associated with a semantic key (e.g., at least one semantic key, at least one semantic sub-key, etc.) in one embodiment, where the information may be used to perform a search based on at least one semantic key and/or at least one semantic sub-key.

As shown in Figure 12, step 1230 involves accessing search results associated with the search. The search results (e.g., 1365) may include at least one document (e.g., 210 of Figure 2, etc.) or data associated therewith. The search results may be generated and/or output by a search component (e.g., 1360 in step 1220).

Step 1240 involves accessing sentiment data associated with the search (e.g., performed in step 1220). In one embodiment, the sentiment data accessed in step 1240 may be generated in accordance with one or more steps of process 1100 of Figure 11. As such, the sentiment data may be the "third data" generated in step 1140 in one embodiment, and therefore, may be determined or generated based on the "first data associated with a search" (e.g., a query used for the search to generate search results, information associated with the search results, at least a portion of the search results, at least one command, etc.) as accessed in step 1110.

In one embodiment, the sentiment data accessed in step 1240 may be associated with or determined based on the search query (e.g., 1350 accessed in step 1210). For example, the query (e.g., 1310) may be provided to a sentiment component (e.g., 1320 as part of data associated with a search 1310), and therefore, the sentiment data (e.g., 1340) may be generated by the sentiment component (e.g., 1320) based on the query (e.g., 1310) in one embodiment. As a more specific example, the sentiment data (e.g., 1340) may include sentiment data (e.g., at least one score, at least one category, at least one degree, at least one classification, etc.) associated with one or more portions (e.g., including at least one word, at least one phrase, etc.) of the search query, one or more themes associated with the search query (e.g., as determined by sentiment component 1320 using data accessed from database 1330 as shown in Figure 13A, as determined by search component 1360 using data accessed from database 1330 as shown in Figure 13B, some combination thereof, etc.), one or more theme elements associated with the search query (e.g., as determined by sentiment component 1320 using data accessed from database 1330 as shown in Figure 13A, as determined by search component 1360 using data accessed from database 1330 as shown in Figure 13B, some combination thereof, etc.), one or more semantic keys associated with the search query (e.g., as determined by sentiment component 1320 using data accessed from database 1330 as shown in Figure 13A, as determined by search component 1360 using data accessed from database 1330 as shown in Figure 13B, some combination thereof, etc.), one or more semantic sub-keys associated with the search query (e.g., as determined by sentiment component 1320 using data accessed from database 1330 as shown in Figure 13A, as determined by search component 1360 using data accessed from database 1330 as shown in Figure 13B, some combination thereof, etc.), etc.

In one embodiment, the sentiment data accessed in step 1240 may be associated with or determined based on at least a portion of the search results (e.g., 1365 accessed in step 1230) and/or information associated with search results (e.g., a list of identifiers of documents included in the search results, other information, etc.). For example, at least a portion of the search results (e.g., 1365) and/or information associated with search results may be provided to a sentiment component (e.g., 1320 as part of data associated with a search 1310), and therefore, the sentiment data (e.g., 1340) may be generated by the sentiment component (e.g., 1320) based on the search results (e.g., 1365) and/or information associated with search results in one embodiment. As a more specific example, the sentiment data (e.g., 1340) may include sentiment data (e.g., at least one score, at least one category, at least one degree, at least one classification, etc.) associated with at least one portion of the search results and/or information associated therewith, one or more themes associated with at least one portion of the search results and/or information associated therewith (e.g., as determined by sentiment component 1320 using data accessed from database 1330 as shown in Figure 13A, as determined by search component 1360 using data accessed from database 1330 as shown in Figure 13B, some combination thereof, etc.), one or more theme elements associated with at least one portion of the search results and/or information associated therewith (e.g., as determined by sentiment component 1320 using data accessed from database 1330 as shown in Figure 13A, as determined by search component 1360 using data accessed from database 1330 as shown in Figure 13B, some combination thereof, etc.), one or more semantic keys associated with at least one portion of the search results and/or information associated therewith (e.g., as determined by sentiment component 1320 using data accessed from database 1330 as shown in Figure 13A, as determined by search component 1360 using data accessed from database 1330 as shown in Figure 13B, some combination thereof, etc.), one or more semantic sub-keys associated with at least one portion of the search results and/or information associated therewith (e.g., as determined by sentiment component 1320 using data accessed from database 1330 as shown in Figure 13A, as determined by search component 1360 using data accessed from database 1330 as shown in Figure 13B, some combination thereof, etc.), etc.

In one embodiment, the sentiment data accessed in step 1240 may be associated with or determined based on at least one command (e.g., a request for at least one document associated with at least one sentiment category; a request for at least one document associated with at least one sentiment degree; a request for at least one document associated with at least one sentiment classification; at least one command input by a user via a graphical user interface such as graphical user interface 1400A of Figure 14A, graphical user interface 1400B of Figure 14B and/or graphical user interface 1500 of Figure 15; some combination thereof; etc.). For example, the at least one command may be provided to a sentiment component (e.g., 1320 as part of data associated with a search 1310), and therefore, the sentiment data (e.g., 1340) may be generated by the sentiment component (e.g., 1320) based on the at least one command in one embodiment. As a more specific example, the sentiment data (e.g., 1340) may include sentiment data (e.g., at least one score, at least one category, at least one degree, at least one classification, etc.) associated with the at least one command, one or more themes associated with the at least one command (e.g., as determined by sentiment component 1320 using data accessed from database 1330 as shown in Figure 13A, as determined by search component 1360 using data accessed from database 1330 as shown in Figure 13B, some combination thereof, etc.), one or more theme elements associated with the at least one command (e.g., as determined by sentiment component 1320 using data accessed from database 1330 as shown in Figure 13A, as determined by search component 1360 using data accessed from database 1330 as shown in Figure 13B, some combination thereof, etc.), one or more semantic keys associated with the at least one command (e.g., as determined by sentiment component 1320 using data accessed from database 1330 as shown in Figure 13A, as determined by search component 1360 using data accessed from database 1330 as shown in Figure 13B, some combination thereof, etc.), one or more semantic sub-keys associated with the at least one command (e.g., as determined by sentiment component 1320 using data accessed from database 1330 as shown in Figure 13A, as determined by search component 1360 using data accessed from database 1330 as shown in Figure 13B, some combination thereof, etc.), etc.

Figure 14A shows exemplary on-screen graphical user interface (GUI) 1400A for accessing data associated with a search (e.g., 1310) in accordance with one embodiment of the present invention. As shown in Figure 14A, regions 1410 may allow entry of data associated with a search (e.g., 1310), where the data associated with the search may include at least a portion of at least one query (e.g., 1350), at least one command (e.g., a request for at least one document associated with at least one sentiment category, a request for at least one document associated with at least one sentiment degree, a request for at least one document associated with at least one sentiment classification, some combination thereof, etc.), some combination thereof, etc. Region 1420 may be used to execute or perform a search based on data entered using region 1410.

In one embodiment, a query may be entered (e.g., using region 1411) without any commands associated with sentiment. For example, if the text "Toyota Land Cruiser performance" is entered into either region 1411, a search (e.g., a keyword search, a search based on at least one theme and/or at least one theme element, a search based on at least one semantic key and/or at least one semantic sub-key, some combination thereof, etc.) may be performed to generate search results including at least one document including the words or phrases "Toyota Land Cruiser" and "performance" or other data associated therewith (e.g., at least one theme associated with "Toyota Land Cruiser" and/or "performance," at least one theme element associated with "Toyota Land Cruiser" and/or "performance," at least one semantic key associated with "Toyota Land Cruiser" and/or "performance," at least one semantic sub-key associated with "Toyota Land Cruiser" and/or "performance," some combination thereof, etc.).

In one embodiment, region 1410 may be used to enter or input a query and at least one command associated with any category of sentiment (e.g., positive, negative, neutral, some combination thereof, etc.). For example, region 1411 may be used to enter a query (e.g., "Toyota Land Cruiser") and at least one command associated with any category of sentiment by separating the at least one command and the query by a colon or other symbol (e.g., entering the text "sentiment: Toyota Land Cruiser" into region 1411). Alternatively, region 1411 may be used to enter a query (e.g., "Toyota Land Cruiser") while region 1412 may be used to enter or select at least one command associated with any category of sentiment. In either case, sentiment data (e.g., 1340) may be accessed (e.g., in step 1240) based on at least a portion of the query and/or the at least one command. The sentiment data may be associated with or include at least one sentiment (e.g., associated with at least one category of positive, negative, neutral or some combination thereof as selected or indicated using region 1411 and/or region 1412) of the Toyota Land Cruiser. As such, the sentiment data may be used to perform (e.g., in step 1250 as discussed herein) at least one operation (e.g., filtering, ranking, generating data for displaying an image, displaying an image, some combination thereof, etc.) associated with search results (e.g., accessed in step 1230, generated responsive to an interaction with region 1420, etc.). In one embodiment, the search results (e.g., processed search results 1375 of Figure 13B) may include at least one document including at least one affected portion (e.g., associated with any category of sentiment as selected or indicated using region 1411 and/or region 1412), where the at least one affected portion may include the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.). As such, the search may provide search results associated with any category of sentiment (e.g., selected or indicated using region 1411 and/or region 1412) of the Toyota Land Cruiser.

In one embodiment, region 1410 may be used to enter or input a query and at least one command associated with at least one particular category of sentiment (e.g., positive, negative, neutral, some combination thereof, etc.). For example, region 1411 may be used to enter a query (e.g., "Toyota Land Cruiser") and at least one command associated with at least one particular category of sentiment (e.g., the word "positive" or the like to request results associated with a positive sentiment, the word "negative" or the like to request results associated with a negative sentiment, the word "neutral" or the like to request results associated with a neutral sentiment, some combination thereof, etc.) by separating the at least one command and the query by a colon or other symbol (e.g., entering the text "positive: Toyota Land Cruiser" into region 1411, entering the text "negative: Toyota Land Cruiser" into region 1411, entering the text "neutral: Toyota Land Cruiser" into region 1411, etc.). Alternatively, region 1411 may be used to enter a query (e.g., "Toyota Land Cruiser") while at least one other region (e.g., 1413, 1414, 1415, some combination thereof, etc.) may be used to enter or select at least one command associated with at least one particular category of sentiment (e.g., positive, negative, neutral, some combination thereof, etc.). In either case, sentiment data (e.g., 1340) may be accessed (e.g., in step 1240) based on at least a portion of the query and/or the at least one command. The sentiment data may be associated with or include at least one sentiment (e.g., associated with at least one category of positive, negative, neutral or some combination thereof as selected or indicated using region 1411, region 1413, region 1414, region 1415, some combination thereof, etc.) of the Toyota Land Cruiser. As such, the sentiment data may be used to perform (e.g., in step 1250 as discussed herein) at least one operation (e.g., filtering, ranking, generating data for displaying an image, displaying an image, some combination thereof, etc.) associated with search results (e.g., accessed in step 1230, generated responsive to an interaction with region 1420, etc.). In one embodiment, the search results (e.g., processed search results 1375 of Figure 13B) may include at least one document including at least one affected portion (e.g., associated with at least one particular category of sentiment selected or indicated using region 1411, region 1413, region 1414, region 1415, some combination thereof, etc.), where the at least one affected portion may include the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.). As such, the search may provide search results associated with at least one particular category of sentiment (e.g., selected or indicated using region 1411, region 1413, region 1414, region 1415, some combination thereof, etc.) of the Toyota Land Cruiser.

In one embodiment, region 1410 may be used to enter or input a query and at least one command associated with at least one particular degree of sentiment (e.g., 1, 2, 3, 4, low, medium, high, etc.). For example, region 1411 may be used to enter a query (e.g., "Toyota Land Cruiser") and at least one command associated with at least one particular degree of sentiment (e.g., the word "low" or the like to request results associated with a low degree of sentiment, the word "medium" or the like to request results associated with a medium degree of sentiment, the word "high" or the like to request results associated with a high degree of sentiment, some combination thereof, etc.) by separating the at least one command and the query by a colon or other symbol (e.g., entering the text "low: Toyota Land Cruiser" into region 1411, entering the text "medium: Toyota Land Cruiser" into region 1411, entering the text "high: Toyota Land Cruiser" into region 1411, etc.). Alternatively, region 1411 may be used to enter a query (e.g., "Toyota Land Cruiser") while another region (e.g., 1416) may be used to enter or select at least one command associated with at least one particular degree of sentiment (e.g., 1, 2, 3, 4, low, medium, high, some combination thereof, etc.). In either case, sentiment data (e.g., 1340) may be accessed (e.g., in step 1240) based on at least a portion of the query and/or the at least one command. The sentiment data may be associated with or include at least one sentiment (e.g., associated with at least one degree of 1, 2, 3, 4, low, medium, high, or some combination thereof as selected or indicated using region 1411 and/or region 1416) of the Toyota Land Cruiser. As such, the sentiment data may be used to perform (e.g., in step 1250 as discussed herein) at least one operation (e.g., filtering, ranking, generating data for displaying an image, displaying an image, some combination thereof, etc.) associated with search results (e.g., accessed in step 1230, generated responsive to an interaction with region 1420, etc.). In one embodiment, the search results (e.g., processed search results 1375 of Figure 13B) may include at least one document including at least one affected portion (e.g., associated with at least one particular degree of sentiment selected or indicated using region 1411 and/or region 1416), where the at least one affected portion may include the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.). As such, the search may provide search results associated with at least one particular degree of sentiment (e.g., selected or indicated using region 1411 and/or region 1416) of the Toyota Land Cruiser.

In one embodiment, region 1410 may be used to enter or input a query and at least one command associated with at least one particular classification of sentiment (e.g., an action taker, an action receiver, a description, an identity, some combination thereof, etc.). For example, region 1411 may be used to enter a query (e.g., "Toyota Land Cruiser") and at least one command associated with at least one particular classification of sentiment (e.g., the words "action taker" or the like to request results associated with a sentiment classification of "action taker," the words "action receiver" or the like to request results associated with a sentiment classification of "action receiver," the word "description" or the like to request results associated with a sentiment classification of "description," the word "identity" or the like to request results associated with a sentiment classification of "identity," some combination thereof, etc.) by separating the at least one command and the query by a colon or other symbol (e.g., entering the text "action taker: Toyota Land Cruiser" into region 1411, entering the text "action receiver: Toyota Land Cruiser" into region 1411, entering the text "description: Toyota Land Cruiser" into region 1411, entering the text "identity: Toyota Land Cruiser" into region 1411, etc.). Alternatively, region 1411 may be used to enter a query (e.g., "Toyota Land Cruiser") while another region (e.g., 1417) may be used to enter or select at least one command associated with at least one particular classification of sentiment (e.g., an action taker, an action receiver, a description, an identity, some combination thereof, etc.). In either case, sentiment data (e.g., 1340) may be accessed (e.g., in step 1240) based on at least a portion of the query and/or the at least one command. The sentiment data may be associated with or include at least one sentiment (e.g., associated with at least one classification of action taker, action receiver, description, identity, some combination thereof, etc. as selected or indicated using region 1411 and/or region 1417) of the Toyota Land Cruiser. As such, the sentiment data may be used to perform (e.g., in step 1250 as discussed herein) at least one operation (e.g., filtering, ranking, generating data for displaying an image, displaying an image, some combination thereof, etc.) associated with search results (e.g., accessed in step 1230, generated responsive to an interaction with region 1420, etc.). In one embodiment, the search results (e.g., processed search results 1375 of Figure 13B) may include at least one document including at least one affected portion (e.g., associated with at least one particular classification of sentiment selected or indicated using region 1411 and/or region 1417), where the at least one affected portion may include the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.). As such, the search may provide search results associated with at least one particular classification of sentiment (e.g., selected or indicated using region 1411 and/or region 1417) of the Toyota Land Cruiser.

Region 1410 may be used to enter or input a plurality of commands. For example, at least one command associated with a category of sentiment may be input (e.g., using region 1411, region 1412, region 1413, region 1414, region 1415, some combination thereof, etc.) in conjunction with at least one command associated with a degree of sentiment (e.g., input using region 1416) and/or at least one command associated with a classification of sentiment (e.g., input using region 1417). As another example, at least one command associated with a degree of sentiment may be input (e.g., using region 1416) in conjunction with at least one command associated with a category of sentiment (e.g., input using region 1411, region 1412, region 1413, region 1414, region 1415, some combination thereof, etc.) and/or at least one command associated with a classification of sentiment (e.g., input using region 1417). As yet another example, at least one command associated with a classification of sentiment may be input (e.g., using region 1417) in conjunction with at least one command associated with a degree of sentiment (e.g., input using region 1416) and/or at least one command associated with a category of sentiment (e.g., input using region 1411, region 1412, region 1413, region 1414, region 1415, some combination thereof, etc.).

The plurality of commands may cause a filtering of the sentiment data or a return of less sentiment data in one embodiment. For example, where commands for a specific category of sentiment and a specific degree of sentiment are input, sentiment data returned responsive thereto may include sentiment data associated with the specific category and also with the specific degree. As such, in one embodiment, the sentiment data (e.g., accessed in step 1240) may be free of or not include at least one portion (e.g., that is not associated with all of the commands input or accessed) as a result of the plurality of commands.

In one embodiment, region 1411 may be used to input the plurality of commands. For example, the text "positive medium description: Toyota Land Cruiser" (e.g., entered into region 1411) may be used to input the command "positive" (e.g., a request for at least one document associated with positive sentiment of the Toyota Land Cruiser), the command "medium" (e.g., a request for at least one document associated with a medium degree of sentiment of the Toyota Land Cruiser), and the command "description" (e.g., a request for at least one document associated with sentiment of the Toyota Land Cruiser that can be classified as a description or the like). Alternatively, the plurality of commands may be input using region 1411 in combination with at least one other region (e.g., 1412, 1413, 1414, 1415, 1416, 1417, some combination thereof, etc.).

Region 1410 may be used to input at least one command associated with one portion of a query and not with another in one embodiment. For example, the text "positive: Toyota Land Cruiser, performance" may be entered into region 1411, where the command "positive" may be associated with the query portion "Toyota Land Cruiser" and not associated with the query portion "performance." Based on the text entered into region 1411, a search (e.g., a keyword search, a search based on at least one theme and/or at least one theme element, a search based on at least one semantic key and/or at least one semantic sub-key, some combination thereof, etc.) may be performed (responsive to an interaction with region 1420) to generate search results including at least one document including: at least one affected portion (e.g., associated with a positive category of sentiment) including the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.); and the word "performance" or other data associated therewith (e.g., at least one theme associated with "performance," at least one theme element associated with "performance," at least one semantic key associated with "performance," at least one semantic sub-key associated with "performance," some combination thereof, etc.). As such, region 1410 may be used to limit search results associated with sentiment data, use sentiment data to limit keyword search results or other types of search results, provide more relevant search results, etc.

In one embodiment, region 1410 may be used to input a plurality of commands associated with a plurality of portions of a query. For example, the text "neutral: Toyota Land Cruiser, positive: performance" may be entered into region 1411, where the command "neutral" may be associated with the query portion "Toyota Land Cruiser" and the command "positive" may be associated with the query portion "performance." Based on the text entered into region 1411, a search (e.g., a keyword search, a search based on at least one theme and/or at least one theme element, a search based on at least one semantic key and/or at least one semantic sub-key, some combination thereof, etc.) may be performed (responsive to an interaction with region 1420) to generate search results including at least one document including: at least one affected portion (e.g., associated with a neutral category of sentiment) including the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.); and at least one affected portion (e.g., associated with a positive category of sentiment) including the words or phrase "performance" or other data associated therewith (e.g., at least one theme associated with "performance," at least one theme element associated with "performance," at least one semantic key associated with "performance," at least one semantic sub-key associated with "performance," some combination thereof, etc.).

Figure 14B shows exemplary on-screen graphical user interface (GUI) 1400B for accessing at least one portion of data associated with a search (e.g., 1310) in accordance with one embodiment of the present invention. A shown in Figure 14B, GUI 1400B may include regions 1410, 1420 and 1430. Region 1430 may operate similarly to or identically to region 1410 in one embodiment. For example, region 1431 may correspond to region 1411, region 1432 may correspond to region 1412, region 1433 may correspond to region 1413, region 1434 may correspond to region 1414, region 1435 may correspond to region 1415, region 1436 may correspond to region 1416, region 1437 may correspond to region 1417, etc. In this manner, GUI 1400B may be used to input a first portion of data (e.g., including a query and/or at least one command) and a second portion of data (e.g., including at least one other query and/or at least one other command), where the first and second portions of data may be used to access sentiment data (e.g., in step 1240) and/or perform at least one operation associated with search results (e.g., in step 1250).

The first and second portions of data (e.g., input using regions 1410 and 1430, respectively) may be used to implement a Boolean function (e.g., and "AND" function) in one embodiment. For example, if region 1410 is used to enter the query portion "Toyota Land Cruiser" and the command "positive" (e.g., using region 1411, using region 1413, etc.) while region 1430 is used to enter the query portion "performance," then a search (e.g., a keyword search, a search based on at least one theme and/or at least one theme element, a search based on at least one semantic key and/or at least one semantic sub-key, some combination thereof, etc.) may be performed (responsive to an interaction with region 1420) to generate search results including at least one document including: at least one affected portion (e.g., associated with a positive category of sentiment) including the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.); and the word "performance" or other data associated therewith (e.g., at least one theme associated with "performance," at least one theme element associated with "performance," at least one semantic key associated with "performance," at least one semantic sub-key associated with "performance," some combination thereof, etc.). As another example, if region 1410 is used to enter the query portion "Toyota Land Cruiser" and the command "neutral" (e.g., using region 1411, using region 1415, etc.) while region 1430 is used to enter the query portion "performance" and the command "positive" (e.g., using region 1431, using region 1433, etc.), then a search (e.g., a keyword search, a search based on at least one theme and/or at least one theme element, a search based on at least one semantic key and/or at least one semantic sub-key, some combination thereof, etc.) may be performed (responsive to an interaction with region 1420) to generate search results including at least one document including: at least one affected portion (e.g., associated with a neutral category of sentiment) including the words or phrase "Toyota Land Cruiser" or other data associated therewith (e.g., at least one theme associated with "Toyota Land Cruiser," at least one theme element associated with "Toyota Land Cruiser," at least one semantic key associated with "Toyota Land Cruiser," at least one semantic sub-key associated with "Toyota Land Cruiser," some combination thereof, etc.); and at least one affected portion (e.g., associated with a positive category of sentiment) including the words or phrase "performance" or other data associated therewith (e.g., at least one theme associated with "performance," at least one theme element associated with "performance," at least one semantic key associated with "performance," at least one semantic sub-key associated with "performance," some combination thereof, etc.).

Figure 15 shows exemplary on-screen graphical user interface (GUI) 1500 for automatically suggesting at least one command in accordance with one embodiment of the present invention. As shown in Figure 15, at least one command (e.g., "sentiment") may be automatically suggested using region 1520. The at least one command may be identified by one or more elements (e.g., dashed line 1522, colored or grayed background 1524, some combination thereof, etc.). The at least one command may be automatically suggested based on text (e.g., the letters "sen") entered in region 1510 in one embodiment. And in one embodiment, element 1526 (e.g., a slider, scroll bar, etc.) may be used to scroll through and/or select one or more items listed in region 1520 (e.g., including the command "sentiment," other than the command "sentiment," etc.).

Accordingly, embodiments enable more efficient selection and entry of at least one command. Additionally, embodiments allow users to determine and/or select commands without prior knowledge of the commands. For example, where a user is not aware that the word "sentiment" is a command, region 1520 may display the command "sentiment" (and/or one or more other commands related thereto such as positive, negative, neutral, etc.) responsive to entry of one or more letters in region 1510 (e.g., the letter "s," the letters "se," the letters "sen," etc.). As such, region 1520 may be used to inform a user of one or more possible commands for selection and/or use.

As shown in Figures 14A, 14B and 15, each region (e.g., of GUI 1400A, 1400B, 1500, some combination thereof, etc.) may include one or more respective form fields. Each form field may be or include at least one text entry box, at least one drop-down list box, at least one radio button, at least one checkbox, etc.

Although Figures 14A, 14B and 15 show GUIs (e.g., 1400A, 1400B and 1500, respectively) with a specific number and arrangement of elements, it should be appreciated that the GUIs (e.g., 1400A, 1400B and 1500) may include a different number and arrangement of elements in other embodiments. For example, a GUI (e.g., 1400A, 1400B, 1500, etc.) may include more than three regions similar to region 1410 and/or region 1430. As another example, one or more regions of a GUI (e.g., 1400A, 1400B, 1500, etc.) may include a different number of sub-regions.

Additionally, although Figures 14A, 14B and 15 show GUIs (e.g., 1400A, 1400B and 1500, respectively) with specific functionality, it should be appreciated that the GUIs (e.g., 1400A, 1400B and 1500) may include elements with different or additional functionality in other embodiments. For example, at least one region (e.g., 1416, 1417, 1426, 1427, etc.) may be implemented using another type of form field (e.g., at least one radio button, at least one checkbox, etc.).

Further, although the GUIs (e.g., 1400A, 1400B, 1500, etc.) have been discussed with respect to one or more specific configurations of the query and/or command, it should be appreciated that the configuration of the query and/or command may be different in other embodiments. For example, the query and command may be entered (e.g., into region 1411, into region 1431, etc.) in a different order (e.g., query before at least one command, etc.), separated by a different symbol (e.g., other than a colon, etc.), consecutively (e.g., region 1411 and/or region 1431 may be cleared after entry of the at least one command to allow entry of the query, region 1411 and/or region 1431 may be cleared after entry of the query to allow entry of the at least one command, etc.), some combination thereof, etc. And further yet, it should be appreciated that the commands may be alternatively expressed (e.g., using different words, using different phrases, using different text, using a symbol such as "+" instead of a word such as "positive," etc.) in other embodiments.

Turning back to Figure 12, step 1250 involves performing, using the sentiment data (e.g., accessed in step 1240), at least one operation associated with the search results (e.g., accessed in step 1230). In one embodiment, step 1250 may involve processing (e.g., using search result processing component 1380) the search results (e.g., 1365) based on the sentiment data (e.g., 1340) to generate processed search results (e.g., 1375). The processing may involve filtering the search results (e.g., removing at least one search result or data associated therewith from the search results) based on the sentiment data (e.g., accessed in step 1240), ranking the search results (e.g., reordering the search results or data associated therewith) based on the sentiment data (e.g., accessed in step 1240), some combination thereof, etc. For example, one or more search results (or data associated therewith) that are not associated with the sentiment data (e.g., accessed in step 1240) may be removed from the search results in step 1250. As another example, the search results (or data associated therewith) may be ordered based on a respective score, a respective category of sentiment, a respective degree of sentiment, a respective classification of sentiment, etc.

In one embodiment, step 1250 may involve generating data for displaying an image associated with the sentiment data (e.g., accessed in step 1240) and/or displaying the image. The data generated in step 1250 may include pixel data, texture data, at least one frame, at least one image, some combination thereof, etc. In one embodiment, display component 1390 may be used to generate data for displaying the image (e.g., associated with sentiment data 1340) and/or used to display the image in step 1250. In one embodiment, the data for displaying the image may be generated (e.g., by display component 1390) based on search results 1365 and/or processed search results 1375 (e.g., as shown in Figure 13B). And in one embodiment, search results 1365 and/or processed search results 1375 may be directly displayed using display component 1390.

The image associated with the sentiment data (e.g., 1340) may include a background (e.g., region 1640 of GUI 1600B of Figure 16B, region 1690 of GUI 1600C of Figure 16C, etc.) of a webpage associated with the search results, a background (e.g., region 1651 of GUI 1600B of Figure 16B, region 1652 of GUI 1600B of Figure 16B, region 1653 of GUI 1600B of Figure 16B, region 1654 of GUI 1600B of Figure 16B, etc.) of a webpage associated with at least one search result, at least one icon (e.g., 1652 of Figure 16B, 1662 of Figure 16B, 1672 of Figure 16B, 1682 of Figure 16B, 1684 of Figure 16B, etc.) associated with at least one search result, formatting (e.g., highlighting, bolding, underlining, italicizing, making larger, making smaller, superscripting, subscripting, changing the color of, capitalization, alternatively formatting, etc.) of text associated with at least one search result, some combination thereof, etc.

Figure 16A shows exemplary on-screen graphical user interface (GUI) 1600A associated with at least one search result in accordance with one embodiment of the present invention. As shown in Figure 16A, GUI 1600A may include at least one region (e.g., 1610, 1620, 1630, etc.). In one embodiment, GUI 1600A may be used to implement or be displayed as at least a portion of a webpage.

In one embodiment, region 1610 may include at least one element (e.g., of GUI 1400A of Figure 14A, of GUI 1400B of Figure 14B, of GUI 1500 of Figure 15, etc.) for accessing data associated with a search (e.g., 1310, in accordance with step 1110, etc.). For example, region 1610 may include at least one form field allowing the entry or input of at least one query and/or at least one command. Region 1610 may include at least one element (e.g., of GUI 1400A of Figure 14A, of GUI 1400B of Figure 14B, of GUI 1500 of Figure 15, etc.) allowing a search for at least one document (e.g., performed in accordance with step 1220) to be initiated in one embodiment. For example, region 1610 may include at least one element (e.g., similar to region 1420 of Figure 14A and/or Figure 14B) allowing the initiation of a search for at least one document. And in one embodiment, region 1610 may be implemented by at least one GUI (e.g., 1400A of Figure 14A, 1400B of Figure 14B, 1500 of Figure 15, another GUI, etc.).

As shown in Figure 16, region 1620 may include at least one search result and/or data associated therewith. For example, region 1620 may include at least one respective identifier associated with each search result. As another example, region 1620 may include at least one respective snippet or portion of text associated with each search result. As yet another example, region 1620 may include at least one respective portion of sentiment data (e.g., at least one score, at least one category, at least one degree, at least one classification, some combination thereof, etc.) associated with each search result. And in one embodiment, region 1620 may be implemented by at least one GUI (e.g., 1600B of Figure 16B, another GUI, etc.).

Figure 16B shows exemplary on-screen graphical user interface (GUI) 1600B for displaying at least one search result in accordance with one embodiment of the present invention. In one embodiment, GUI 1600B may be used to implement or be displayed in region 1630 of GUI 1600A of Figure 16A. And in one embodiment, GUI 1600B may be used to implement or be displayed as at least a portion of a webpage.

As shown in Figure 16B, GUI 1600 may include at least one respective region (e.g., 1650, 1660, 1670, 1680, etc.) for displaying information associated with each search result of at least one search result. The information may include at least one respective identifier associated with each search result (e.g., "Document 1," "Document 2," "Document 3," "Document 4," etc.), at least one respective snippet or portion of text associated with each search result (e.g., "The steering of the Toyota Land Cruiser is very good," "However, the fuel economy is bad," "The engine of the Toyota Land Cruiser is very good," etc.), some combination thereof, etc. Display of the snippets or portions of text of the search results or documents may function as a preview of a search result or document (e.g., allowing a user to view a portion of a document without having to access or download the entire document).

GUI 1600B may also include an image or information associated with sentiment data (e.g., associated with a particular search result, associated with a plurality of search results, etc.). In one embodiment, a respective image may be displayed as a respective background of at least one region of GUI 1600B (e.g., within region 1650, within region 1660, within region 1670, within region 1680, etc.), where the respective images may be associated with respective sentiment data of each search result. For example, a green image may be displayed as the background of region 1650 to indicate a positive sentiment score (e.g., a combined sentiment score determined based on respective sentiment scores associated with a plurality of affected portions, a single sentiment score where at least one document only includes a single respective affected portion, etc.) of "+1" associated with "Document 1," a red image may be displayed as the background of region 1670 to indicate a negative sentiment score (e.g., a combined sentiment score determined based on respective sentiment scores associated with a plurality of affected portions, a single sentiment score where at least one document only includes a single respective affected portion, etc.) of "-1" associated with "Document 3," a white image may be displayed as the background of region 1650 to indicate a neutral sentiment score (e.g., a combined sentiment score determined based on respective sentiment scores associated with a plurality of affected portions, a single sentiment score where at least one document only includes a single respective affected portion, etc.), etc. The image may be a solid color or shade of gray, a color or shade of gray that is at least partially translucent (e.g., to all the contemporaneous viewing of overlapping text or other images), a pattern, a pixilated image include a plurality of pixels, some combination thereof, etc. In this manner, GUI 1600B may communicate and/or provide a relatively large amount of data in a comprehensible and intuitive manner, thereby allowing the respective sentiment of each search result to be quickly and easily determined and/or identified by a viewer or user of GUI 1600B in one embodiment.

Each image displayed in each region (e.g., 1650, 1660, 1670, 1680, etc.) may be determined based on at least one score and/or at least one category associated with each search result (e.g., from one or more columns of data structure 500). For example, an image associated with a positive sentiment may be displayed if: a positive score (e.g., in column 520) is larger than at least one other score (e.g., in column 530, in column 540, etc.) for a given search result or document; and/or a net score (e.g., in column 550) is positive. As another example, an image associated with a negative sentiment may be displayed if: a negative score (e.g., in column 530) is larger than at least one other score (e.g., in column 520, in column 540, etc.) for a given search result or document; and/or a net score (e.g., in column 550) is negative. As a further example, an image associated with a neutral sentiment may be displayed if: a neutral score (e.g., in column 540) is larger than at least one other score (e.g., in column 520, in column 530, etc.) for a given search result or document; and/or a net score (e.g., in column 550) is neutral (e.g., zero, within a predetermined positive range from zero, within a predetermined negative range from zero, etc.).

Each image displayed in each region (e.g., 1650, 1660, 1670, 1680, etc.) may be determined based on at least one score and/or at least one degree associated with each search result (e.g., from one or more columns of data structure 500). For example, an image associated with a low degree may be displayed if the absolute value of a score (e.g., in one or more columns of data structure 500) is below a predetermined threshold. As another example, an image associated with a medium degree may be displayed if the absolute value of a score (e.g., in one or more columns of data structure 500) is below a first predetermined threshold and/or above a second predetermined threshold. As a further example, an image associated with a high degree may be displayed if the absolute value of a score (e.g., in one or more columns of data structure 500) is above a predetermined threshold.

Each image displayed in each region (e.g., 1650, 1660, 1670, 1680, etc.) may be determined based on at least one classification associated with each search result (e.g., from column 1040 of data structure 1000). For example, a first image associated with a first classification may be displayed for any search results associated with the first classification, a second image associated with a second classification may be displayed for any search results associated with the second classification, etc.

In one embodiment, an image associated with sentiment data may be displayed as a background of GUI 1600B (e.g., within region 1640), where the image may be associated with sentiment data of a plurality of search results (e.g., associated with region 1650, region 1660, region 1670, region 1680, etc.). For example, a green image may be displayed as the background of region 1640 to indicate a positive sentiment score (e.g., a combined sentiment score determined based on respective sentiment scores associated with each of the search results) of the search results (e.g., where the respective sentiment scores add to make a positive sentiment score for the search results), a red image may be displayed as the background of region 1640 to indicate a negative sentiment score (e.g., a combined sentiment score determined based on respective sentiment scores associated with each of the search results) of the search results (e.g., where the respective sentiment scores add to make a negative sentiment score for the search results), a white image may be displayed as the background of region 1640 to indicate a neutral sentiment score (e.g., a combined sentiment score determined based on respective sentiment scores associated with each of the search results) of the search results (e.g., where the respective sentiment scores add to make a sentiment score of zero for the search results, a score of within a predetermined range for the search results, etc.), etc. The image may be a solid color or shade of gray, a color or shade of gray that is at least partially translucent (e.g., to all the contemporaneous viewing of overlapping text or other images), a pattern, a pixilated image include a plurality of pixels, some combination thereof, etc. In this manner, GUI 1600B may communicate and/or provide a relatively large amount of data in a comprehensible and intuitive manner, thereby allowing the respective sentiment of each search result to be quickly and easily determined and/or identified by a viewer or user of GUI 1600B in one embodiment.

Each image displayed in region 1640 may be determined based on at least one score and/or at least one category associated with the search results (e.g., from one or more columns of data structure 500). For example, an image associated with a positive sentiment may be displayed if: a sum of the positive scores for the search results or documents (e.g., in column 520) is larger than at least one other score (e.g., in column 530, in column 540, etc.) for the search results or documents; and/or a sum of the net scores for the search results or documents (e.g., in column 550) is positive. As another example, an image associated with a negative sentiment may be displayed if: a sum of the negative scores for the search results or documents (e.g., in column 530) is larger than at least one other score (e.g., in column 520, in column 540, etc.) for the search results or documents; and/or a sum of the net scores for the search results or documents (e.g., in column 550) is negative. As a further example, an image associated with a neutral sentiment may be displayed if: a sum of the neutral scores for the search results or documents (e.g., in column 540) is larger than at least one other score (e.g., in column 520, in column 530, etc.) for the search results or documents; and/or a sum of the net scores for the search results or documents (e.g., in column 550) is neutral (e.g., zero, within a predetermined positive range from zero, within a predetermined negative range from zero, etc.).

Each image displayed in region 1640 may be determined based on at least one score and/or at least one degree associated with each search result (e.g., from one or more columns of data structure 500). For example, an image associated with a low degree may be displayed if the absolute value of a sum of the scores for the search results or documents (e.g., in one or more columns of data structure 500) is below a predetermined threshold. As another example, an image associated with a medium degree may be displayed if the absolute value of a sum of the scores for the search results or documents (e.g., in one or more columns of data structure 500) is below a first predetermined threshold and/or above a second predetermined threshold. As a further example, an image associated with a high degree may be displayed if the absolute value of a sum of the scores for the search results or documents (e.g., in one or more columns of data structure 500) is above a predetermined threshold.

Each image displayed in region 1640 may be determined based on at least one classification associated with the search results or documents (e.g., from column 1040 of data structure 1000). For example, a first image associated with a first classification may be displayed if any search results are associated with the first classification, a second image associated with a second classification may be displayed if any search results are associated with the second classification, etc.

In one embodiment, an image associated with sentiment data may include at least one icon (e.g., 1652 of Figure 16B, 1662 of Figure 16B, 1672 of Figure 16B, 1682 of Figure 16B, 1684 of Figure 16B, etc.) associated with at least one search result. For example, icon 1652 may be displayed (e.g., in or around region 1650) to indicate a sentiment (e.g., a score, a category, a degree, a classification, some combination thereof, etc.) associated with a first search result or document (e.g., "Document 1"), icon 1662 may be displayed (e.g., in or around region 1660) to indicate a sentiment (e.g., a score, a category, a degree, a classification, some combination thereof, etc.) associated with a second search result or document (e.g., "Document 2"), icon 1672 may be displayed (e.g., in or around region 1670) to indicate a sentiment (e.g., a score, a category, a degree, a classification, some combination thereof, etc.) associated with a third search result or document (e.g., "Document 3"), icon 1682 may be displayed (e.g., in or around region 1680) to indicate a sentiment (e.g., a score, a category, a degree, a classification, some combination thereof, etc.) associated with a fourth search result or document (e.g., "Document 4"), etc. Although numbers are shown in each of the regions (e.g., 1652, 1662, 1672, 1682, etc.) in Figure 16B, it should be appreciated that other icons (e.g., thumbs up, thumbs down, a particular number of stars, etc.) may be displayed or used in other embodiments.

As another example, other icons or images may be displayed to indicate other features related to sentiment. For example, arrow 1684 may be displayed to indicate that the word "good" is an effecting portion that modifies or expresses a sentiment of the word "handling" (e.g., the affected portion). It should be appreciated that effecting portions can modify affected portions in other sentences, paragraphs, etc., and therefore, icons or images such as arrow 1684 may assist the viewer or user in quickly and easily determining the types and relationships of different portions of one or more documents.

In one embodiment, an image associated with sentiment data may include formatting of text associated with at least one search result. The formatting may include highlighting (e.g., displaying the text contemporaneously with an overlapping image that is a different color, shade, etc. than the background of the encompassing region and/or the text), bolding, underlining, italicizing, making larger, making smaller, superscripting, subscripting, changing the color of, capitalization, alternatively formatting, some combination thereof, etc.

The formatted text may include at least one effecting portion (e.g., "very good" and "bad" of "Document 1," "very good" of "Document 2," "bad" of "Document 3," "good" of "Document 4," etc.) and/or at least one affected portion (e.g., "steering" and "fuel economy" of "Document 1," "engine" of "Document 2," "acceleration" of "Document 3," "handling" and "braking" of "Document 4," etc.). In this case, each effecting portion is shown with highlighting, whereas each affected portion is shown with other formatting (e.g., underlining, bolding, italicizing, strikethrough, etc.). As such, a viewer or user may quickly determine which portions of the search results or documents are effecting portions and affected portions. Additionally, display of the image (e.g., including the formatted text) may allow additional information (e.g., a sentiment score, a sentiment category, a sentiment degree, a sentiment classification, etc.) to be quickly and intuitively deduced (e.g., without displaying the additional information), where the additional information may be deduced based on the content of the effecting portions and/or the affected portions, based on the context of the effecting portions and/or the affected portions in the search results or documents, etc.

In one embodiment, different portions of text may be formatted differently to indicate different sentiment scores, different sentiment categories, different sentiment degrees, different sentiment classifications, etc. For example, affected portions associated with a positive sentiment may be formatted or displayed using green text, affected portions associated with a negative sentiment may be formatted or displayed using red text, affected portions associated with a neutral sentiment may be formatted or displayed using white text, etc. As another example, affected portions associated with a positive sentiment may be underlined (e.g., "steering" of "Document 1," "engine" of "Document 2," "handling" and "braking" of Document 4, etc.), whereas affected portions associated with a negative sentiment may be formatted with a strikethrough (e.g., "fuel economy" of "Document 1," "acceleration" of "Document 3," etc.).

As a further example, affected portions associated with a low degree of sentiment may be italicized (e.g., "handling" and "braking" of "Document 4," etc.), whereas affected portions associated with a medium degree of sentiment may be italicized and bolded (e.g., "engine" of "Document 2," etc.). And as yet another example, a label associated with a low degree of sentiment (e.g., "low," etc.) may be displayed adjacent to or near affected portions associated with a low degree of sentiment (e.g., "acceleration" of "Document 3," etc.), whereas a label associated with a medium degree of sentiment (e.g., "med," etc.) may be displayed adjacent to or near affected portions associated with a medium degree of sentiment (e.g., "steering" of "Document 1," etc.).

Figure 16C shows exemplary on-screen graphical user interface (GUI) 1600C for displaying sentiment data associated with at least one search result in accordance with one embodiment of the present invention. In one embodiment, GUI 1600C may be used to implement or be displayed in region 1620 of GUI 1600A of Figure 16A. And in one embodiment, GUI 1600C may be used to implement or be displayed as at least a portion of a webpage.

As shown in Figure 16C, GUI 1600C may include at least one element (e.g., 1691, 1692, 1693, 1694, 1695, 1696, 1697, etc.) in region 1690. Each element may be associated with a respected affected portion (e.g., associated with one or more of the search results or documents of GUI 1600B) in one embodiment. Additionally, each element may include a respective image associated with respective sentiment data (e.g., a score, a category, a degree, a classification, etc.) corresponding to a respective affected portion, where the respective images may include backgrounds behind text associated with the affected portions, icons associated with the affected portions, formatting (e.g., highlighting, bolding, underlining, italicizing, making larger, making smaller, superscripting, subscripting, changing the color of, capitalization, alternatively formatting, etc.) of text associated with the affected portions, some combination thereof, etc.

Accordingly, GUI 1600C may provide information about respective sentiments of respective affected portions of the search results. In one embodiment, the sentiment data presented using GUI 1600C may be determined using sentiment data from multiple search results or documents (e.g., by adding, averaging, etc. the respective sentiment data of each search result or document to determine the combined sentiment data). Moreover, this information may be conveyed in a compact and intuitive form using GUI 1600C.

In one embodiment, one or more of the elements (e.g., 1691, 1692, 1693, 1694, 1695, 1696, 1697, etc.) of GUI 1600C may be associated with other data (e.g., at least one theme, at least one theme element, at least one semantic key, at least one semantic sub-key, etc.) associated with at least one affected portion of a document. In one embodiment, the other data may be determined or accessed (e.g., in accordance with step 1120 of process 1100) based on one or more portions of a query (e.g., where the first data accessed in step 1110 of process 1100 includes at least one portion of a query such as query 1350), where the one or more portions of the query do not include the other data.

For example, data associated with a search (e.g., 1310) may include: a query (e.g., 1350) of "Toyota Land Cruiser" and "performance;" and the command of "sentiment" (e.g., associated with or requesting any category of sentiment such as positive, negative, neutral, some combination thereof, etc.) modifying or associated with the query portion "performance." A search may be performed (e.g., in accordance with step 1220 of process 1200) to generate search results (e.g., accessed in accordance with step 1230 of process 1200) including one or more documents that include: the words or phrases "Toyota Land Cruiser" and "performance;" and at least one affected portion (e.g., associated with any category of sentiment as selected or indicated based on the command "sentiment") including the word "performance" or other data associated therewith (e.g., at least one theme associated with "performance," at least one theme element associated with "performance," at least one semantic key associated with "performance," at least one semantic sub-key associated with "performance," some combination thereof, etc.). In one embodiment, the other data associated with the word "performance" may include the words "steering," "fuel economy," "engine," "acceleration," "handling," "braking," etc.

Sentiment data associated with the word performance or the other data associated therewith (e.g., the words "steering," "fuel economy," "engine," "acceleration," "handling," "braking," etc.) may be accessed (e.g., in accordance with step 1240). For example, sentiment data associated with the word "steering" may include a score of "+2" (e.g., based on the effecting portion "very good" as shown in Figure 16B), sentiment data associated with the word "fuel economy" may include a score of "-1" (e.g., based on the effecting portion "bad" as shown in Figure 16B), sentiment data associated with the word "engine" may include a score of "+2" (e.g., based on the effecting portion "very good" as shown in Figure 16B), sentiment data associated with the word "acceleration" may include a score of "-1" (e.g., based on the effecting portion "bad" as shown in Figure 16B), sentiment data associated with the word "handling" may include a score of "+1" (e.g., based on the effecting portion "good" as shown in Figure 16B), sentiment data associated with the word "braking" may include a score of "+1" (e.g., based on the effecting portion "good" as shown in Figure 16B), etc. Data for displaying an image associated with the sentiment data (e.g., associated with the word "performance" or other data associated therewith) may be generated (e.g., in accordance with step 1250 of process 1200) and/or the image may be displayed (e.g., in accordance with step 1250 of process 1200) to produce a GUI (e.g., 1600C of Figure 16C) that includes the sentiment data (e.g., respective sentiment data associated with each of the elements 1691, 1692, 1693, 1694, 1695, 1696, 1697, etc.).

Accordingly, in one embodiment, a GUI (e.g., 1600C) may be generated and/or displayed that advantageously includes sentiment data associated with other data (e.g., the words "steering," "fuel economy," "engine," "acceleration," "handling," "braking," etc.) that is not part of the query (e.g., which includes the word "performance" but does not include the words "steering," "fuel economy," "engine," "acceleration," "handling" or "braking"). As such, a user entering the query need not know the other data associated with the word performance or spend the time and effort to enter those words in as part of the query. Instead, embodiments may automatically determine those words (e.g., as one or more themes, one or more theme elements, one or more semantic keys, one or more semantic sub-keys, etc.) based on the simpler and more concise query of "Toyota Land Cruiser" and "performance," where those words (e.g., the "other data") may then be used to generate and/or display the GUI (or perform at least one operation associated with the search results such as filtering, ranking, etc.). Thus, the GUI may provide valuable and relevant information by displaying the sentiment (e.g., associated with sentiment data) of one or more features (e.g., "steering," "fuel economy," "engine," "acceleration," "handling," "braking," etc.) of the Toyota Land Cruiser as determined from at least one search result or document. Further, the sentiment data (e.g., of GUI 1600C) may be displayed contemporaneously with the corresponding search results (e.g., of GUI 1600B) as an image or GUI (e.g., 1600A) in one embodiment, thereby providing even more valuable and relevant information related to the initial query (e.g., which may be displayed in region 1610 of GUI 1600A).

In one embodiment, the data of the previous example may be entered (e.g., by a user, automatically, etc.) using a GUI (e.g., 1400A of Figure 14A, 1400B of Figure 14B, 1500 of Figure 15, etc.). For example, "Toyota Land Cruiser" may be entered in region 1411, "performance" may be entered in region 1431, and the command may be entered using region 1431 (e.g., by entering "sentiment: performance," etc.) and/or using region 1432. As another example, "Toyota Land Cruiser" may be entered in region 1431, "performance" may be entered in region 1411, and the command may be entered using region 1411 (e.g., by entering "sentiment: performance," etc.) and/or using region 1412.

In one embodiment, the other data may not be found in the search results or documents (e.g., of GUI 1600B). In this case, another portion of data may be determined this can be found in the search results or documents and also that is associated with sentiment data. For example, where the word "engine" is not found in at least one document, the word "motor" may be determined (e.g., to be a theme where "engine" is a theme element, to be a theme element where "engine" is a theme, to be a semantic key where "engine" is a semantic sub-key, to be a semantic sub-key where "engine" is a semantic key, etc.). Sentiment data associated with "motor" may be applied to "engine," thereby allowing sentiment data to be displayed (e.g., using GUI 1600C) for "engine" even though "engine" may not be found in at least one document.

Although Figures 16A, 16B and 16C show GUIs (e.g., 1600A, 1600B and 1600C, respectively) with a specific number and arrangement of elements, it should be appreciated that the GUIs (e.g., 1600A, 1600B and 1600C) may include a different number and arrangement of elements in other embodiments. For example, GUI 1600A may include more or less than three regions (e.g., 1610, 1620, 1630, etc.) in other embodiments. As another example, GUI 1600B may include more or less than four regions (e.g., 1650, 1660, 1670 and 1680) in other embodiments. And as yet another example, elements of GUI 1600B and/or GUI 1600C may have a different appearance, content, etc. in other embodiments.

In one embodiment, a user could be charged based on the number of searches carried out for which sentiment data is accessed. A user could be charged based on the number of results returned as a result of the search (e.g., performed in step 1220 of process 1200) in one embodiment. A user could be charged based on the number of search results or documents associated with the sentiment data (e.g., accessed in step 1240) in one embodiment. And in one embodiment, a user could be charged based on a number of accesses to sentiment data (e.g., in step 1240 of process 1200) and/or an amount of sentiment data accessed (e.g., in step 1240 of process 1200). Accordingly, one or more features of the sentiment analysis (e.g., as discussed or shown with respect to GUI 1400A, GUI 1400B, GUI 1500, GUI 1600A, GUI 1600B, GUI 1600C, etc.) may be enabled or offered to certain users responsive to payment in one embodiment.

In one embodiment, the sentiment data (e.g., accessed in step 1240, shown in GUI 1600B, etc.) may be used to determine or select advertising content. The advertising content may be displayed (e.g., using GUI 1600A, GUI 1600B, GUI 1600C, etc.) contemporaneously with the search results and/or the sentiment data associated with the search results in one embodiment. For example, where the search term or query is "Nikon D7000" and the sentiment data associated with the search results is positive, then advertising content for the Nikon D7000 camera may be displayed contemporaneously with the search results and/or the sentiment data associated with the search results. As another example, where the search term or query is "Nikon D7000" and the sentiment data associated with the search results is negative, then advertising content for another brand or model of camera may be displayed contemporaneously with the search results and/or the sentiment data associated with the search results. In this manner, relevant advertising content may be provided or displayed at a time where a consumer is more likely to purchase a product or service (e.g., responsive to the display of positive sentiment data related to the product or service of the query, responsive to the display of negative sentiment data related to another product or service of the query, etc.).

### Ordering of Semantic Sub-Keys Utilizing Superlatives Adjectives

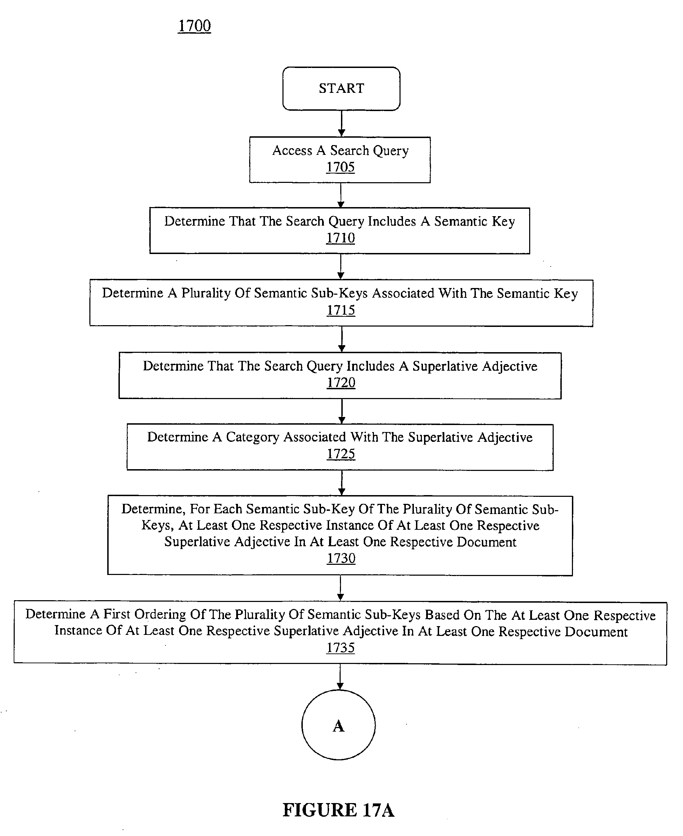

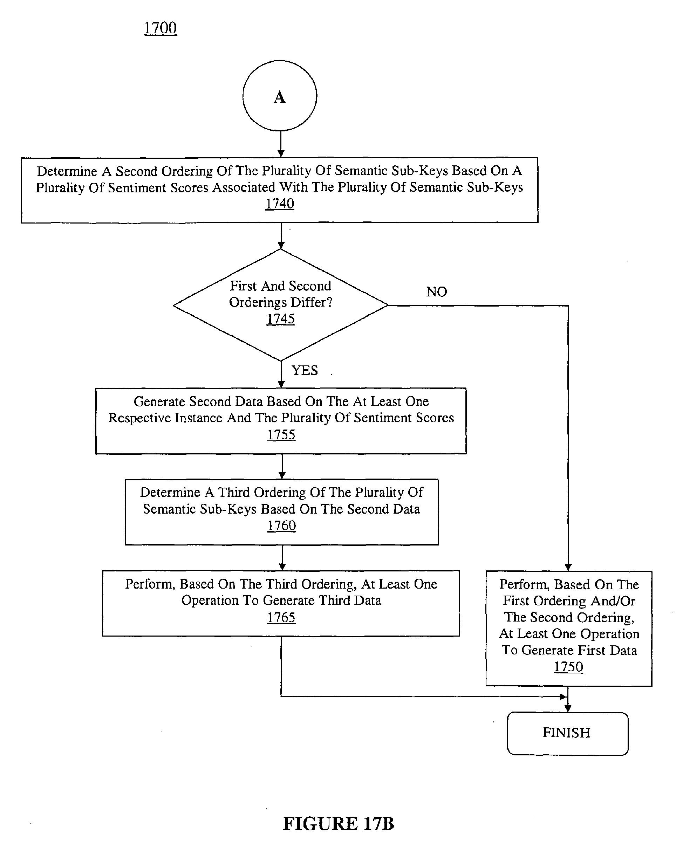

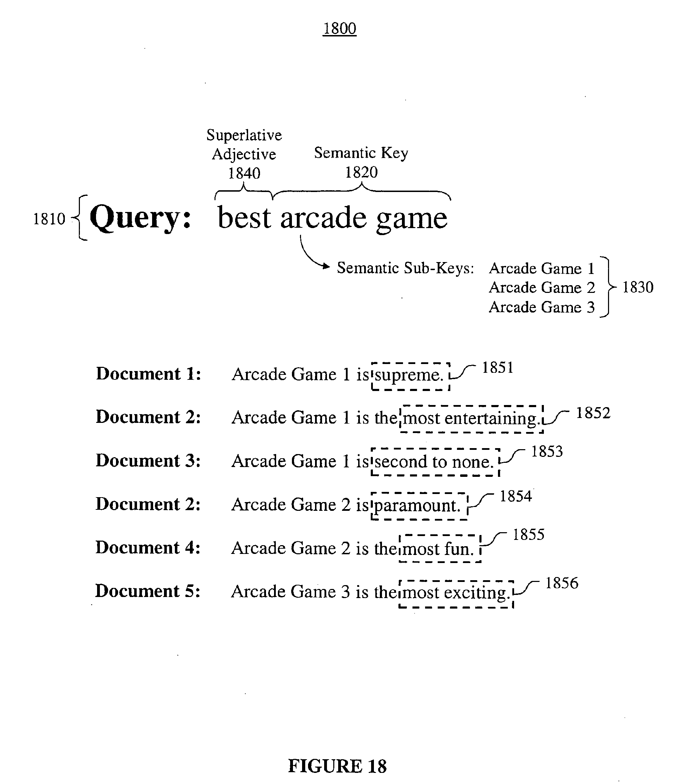

Figures 17A and 17B show a flowchart of exemplary computer-implemented process 1700 for determining an ordering in accordance with one embodiment of the present invention. As the steps of process 1700 are described herein, reference will be made to exemplary diagram 1800 of Figure 18 to provide examples and help clarify the discussion.

As shown in Figure 17A, step 1705 involves accessing a search query. The search query may be accessed in step 1705 by a sentiment component (e.g., 1320 of Figure 13A) in one embodiment. The search query may be included in or include data associated with a search (e.g., 1310 of Figure 13A). In one embodiment, the search query (e.g., 1350 of Figure 13B) may be accessed in step 1705 by a search component (e.g., 1360 of Figure 13B).

The search query accessed in step 1705 may include at least one word, at least one phrase, at least one name, semantic data, score data, classification data, a portion of data (e.g., an effecting portion; an affected portion; a portion of data similar to the first portion, second portion, third portion, fourth portion, etc. as discussed with respect to process 100; etc.), some combination thereof, etc. And in one embodiment, the query accessed in step 1705 may be input using a region (e.g., 1411, 1431, 1510, 1610, some combination thereof, etc.) of a graphical user interface (e.g., 1400A, 1400B, 1500, 1600, some combination thereof, etc.).

As shown in Figure 17A, step 1710 involves determining that the search query (e.g., accessed in step 1705) includes a semantic key. Step 1710 may be performed by a sentiment component (e.g., 1320) in one embodiment. In one embodiment, step 1710 may involve determining that the search query (e.g., 1350, at least a portion of data 1310, accessed in step 1705, etc.) includes a semantic key by indexing or otherwise using a database (e.g., semantic key and/or theme database 1330). For example, a database (e.g., semantic key and/or theme database 1330) may be indexed using at least a portion of the search query to access or retrieve the semantic key.

For example, where a query (e.g., 1810 of Figure 18) includes the words "best arcade game," it may be determined in step 1710 that the query (e.g., 1810) includes a semantic key (e.g., semantic key 1820 of "arcade game"). In one embodiment, the semantic key "arcade game" may be determined (e.g., in step 1710) by indexing a database (e.g., semantic key and/or theme database 1330) using a portion of query 1810 (e.g., that includes the words "arcade game") to access or retrieve the semantic key "arcade game" (e.g., 1820).

Turning back to Figure 17A, step 1715 involves determining a plurality of semantic sub-keys associated with the semantic key (e.g., determined in step 1710). Step 1715 may be performed by a sentiment component (e.g., 1320) in one embodiment. In one embodiment, step 1715 may involve determining a plurality of semantic sub-keys associated with the semantic key by indexing a database (e.g., semantic key and/or theme database 1330) using the semantic key to access or retrieve the plurality of semantic sub-keys.

For example, as shown in Figure 18, it may be determined (e.g., in step 1715) that plurality of semantic sub-keys 1830 (e.g., "Arcade Game 1," "Arcade Game 2," "Arcade Game 3," etc.) may be associated with semantic key 1820 (e.g., "arcade game"). In this case, each of semantic sub-keys 1830 may be a different arcade game title. In one embodiment, semantic sub-keys 1830 (e.g., "Arcade Game 1," "Arcade Game 2," "Arcade Game 3," etc.) may be determined (e.g., in step 1715) by indexing a database (e.g., semantic key and/or theme database 1330) or data structure (e.g., 400, 500, 600A, 600B, 600C, 700A, 700B, 800A, 800B, 900, 1000, some combination thereof, etc.) using semantic key 1820 (e.g., "arcade game") to access or retrieve semantic sub-keys 1830.

Turning back to Figure 17A, step 1720 involves determining that the search query (e.g., 1350, at least a portion of data 1310, accessed in step 1705, etc.) includes a superlative adjective. Step 1720 may be performed by a sentiment component (e.g., 1320) in one embodiment. A superlative adjective may be one or more words that modify, describe, affect, effect, etc. at least one other word, where the superlative adjective indicates that the at least one other word has an attribute or quality associated with the adjective to a high degree (e.g., either positive or negative) or the highest degree (e.g., either positive or negative). For example, the following words may be superlative adjectives: best; worst; most interesting; least interesting; top; bottom; strongest; weakest; highest; lowest; etc.

In one embodiment, a listing of superlative adjectives may be stored in a database (e.g., sentiment database 230, semantic key and/or theme database 1330, another database including a listing of known superlative adjectives, etc.) and/or data structure (e.g., 400, 500, 600A, 600B, 600C, 700A, 700B, 800A, 800B, 900, 1000, some combination thereof, etc.). The listing of superlative adjectives may be stored and/or accessed by a sentiment analysis component (e.g., 220). In one embodiment, the listing of superlative adjectives may be stored (e.g., in a database and/or data structure) in accordance with step 155 of process 100. As such, in one embodiment, the listing of superlative adjectives may be accessed and/or utilized at a later time (e.g., responsive to and/or in conjunction with the performance of a search by search component 1360, in step 1720 of process 1700, etc.).

As an example, it may be determined in step 1720 that query 1810 of Figure 18 includes superlative adjective 1840 (e.g., "best"). In one embodiment, superlative adjective 1840 (e.g., "best") may be determined (e.g., in step 1720) by indexing a database (e.g., sentiment database 230, semantic key and/or theme database 1330, another database including a listing of known superlative adjectives, etc.) or data structure (e.g., 400, 500, 600A, 600B, 600C, 700A, 700B, 800A, 800B, 900, 1000, some combination thereof, etc.) using a portion of query 1810 (e.g., that includes the word "best") to access or retrieve the superlative adjective "best" (e.g., 1840) and/or information associated therewith.

Turning back to Figure 17A, step 1725 involves determining a category associated with the superlative adjective (e.g., determined in step 1720). Step 1725 may be performed by a sentiment component (e.g., 1320) in one embodiment. The category may be a positive category or a negative category. For example, where the superlative adjective determined in step 1720 is "best," it may be determined in step 1725 that the category of "positive" is associated with the superlative adjective "best." As another example, where the superlative adjective determined in step 1720 is "worst," it may be determined in step 1725 that the category of "negative" is associated with the superlative adjective "worst."

In one embodiment, category data associated with superlative adjectives may be stored in a database (e.g., sentiment database 230, semantic key and/or theme database 1330, another database including a listing of known superlative adjectives, etc.) and/or data structure (e.g., 400, 500, 600A, 600B, 600C, 700A, 700B, 800A, 800B, 900, 1000, some combination thereof, etc.) that also stores the listing of superlative adjectives. In one embodiment, the category data may be stored and/or accessed by a sentiment analysis component (e.g., 220). In one embodiment, the category data may be stored (e.g., in a database and/or data structure) in accordance with step 155 of process 100. As such, in one embodiment, the category data may be accessed and/or utilized at a later time (e.g., responsive to and/or in conjunction with the performance of a search by search component 1360, in step 1725 of process 1700, etc.).

As an example, it may be determined in step 1725 that superlative adjective 1840 (e.g., "best") of query 1810 may be associated with a category of "positive." In one embodiment, the category of "positive" may be determined (e.g., in step 1725) by indexing a database (e.g., sentiment database 230, semantic key and/or theme database 1330, another database including a listing of known superlative adjectives, etc.) or data structure (e.g., 400, 500, 600A, 600B, 600C, 700A, 700B, 800A, 800B, 900, 1000, some combination thereof, etc.) using superlative adjective 1840 (e.g., "best") to access or retrieve the category of "positive."

Turning back to Figure 17A, step 1730 involves determining, for each semantic sub-key of the plurality of semantic sub-keys, at least one respective instance of at least one respective superlative adjective in at least one respective document (e.g., associated with search results generated responsive to a search performed based on the search query accessed in step 1705). Step 1730 may be performed by a sentiment component (e.g., 1320) in one embodiment. Each document of the at least one document may include a webpage, an electronic document, an electronic file, advertising content, etc. Each instance of the at least one respective instance may include a respective superlative adjective of the at least one superlative adjective that is associated with a respective sentiment of a respective semantic sub-key of the plurality of semantic sub-keys. As such, in one embodiment, step 1730 may involve determining a respective quantity of instances (e.g., associated with or determined based on the at least one respective instance) for each semantic sub-key of the plurality of semantic sub-keys.

For example, for a first semantic sub-key (e.g., "Arcade Game 1" as shown in Figure 18), step 1730 may involve determining at least one instance of at least one superlative adjective in at least one document (e.g., instance 1851 of the superlative adjective "supreme" in "Document 1," instance 1852 of the superlative adjective "most entertaining" in "Document 2," instance 1853 of the superlative adjective "second to none" in "Document 3," etc.). Additionally, for the first semantic sub-key (e.g., "Arcade Game 1" as shown in Figure 18), each instance of the at least one respective instance may include a respective superlative adjective of the at least one superlative adjective that is associated with a respective sentiment of a respective instance of the first semantic sub-key. For example, the superlative adjective "supreme" (e.g., of instance 1851) may be associated with a sentiment of the semantic sub-key "Arcade Game 1" (e.g., where "supreme" may be the effecting portion and "Arcade Game 1" may be the affected portion), the superlative adjective "most entertaining" (e.g., of instance 1852) may be associated with a sentiment of the semantic sub-key "Arcade Game 1" (e.g., where "most entertaining" may be the effecting portion and "Arcade Game 1" may be the affected portion), and the superlative adjective "second to none" (e.g., of instance 1853) may be associated with a sentiment of the semantic sub-key "Arcade Game 1" (e.g., where "second to none" may be the effecting portion and "Arcade Game 1" may be the affected portion). As such, step 1730 may involve determining, for the semantic sub-key "Arcade Game 1," a quantity of three instances (e.g., of superlative adjectives, in at least one document, that are associated with sentiments of the semantic sub-key "Arcade Game 1") in one embodiment.

As another example, for a second semantic sub-key (e.g., "Arcade Game 2" as shown in Figure 18), step 1730 may involve determining at least one instance of at least one superlative adjective in at least one document (e.g., instance 1854 of the superlative adjective "paramount" in "Document 2," instance 1855 of the superlative adjective "most fun" in "Document 4," etc.). Additionally, for the second semantic sub-key (e.g., "Arcade Game 2" as shown in Figure 18), each instance of the at least one respective instance may include a respective superlative adjective of the at least one superlative adjective that is associated with a respective sentiment of a respective instance of the second semantic sub-key. For example, the superlative adjective "paramount" (e.g., of instance 1854) may be associated with a sentiment of the semantic sub-key "Arcade Game 2" (e.g., where "paramount" may be the effecting portion and "Arcade Game 2" may be the affected portion), and the superlative adjective "most fun" (e.g., of instance 1855) may be associated with a sentiment of the semantic sub-key "Arcade Game 2" (e.g., where "most fun" may be the effecting portion and "Arcade Game 2" may be the affected portion). As such, step 1730 may involve determining, for the semantic sub-key "Arcade Game 2," a quantity of two instances (e.g., of superlative adjectives, in at least one document, that are associated with sentiments of the semantic sub-key "Arcade Game 2") in one embodiment.

As yet another example, for a third semantic sub-key (e.g., "Arcade Game 3" as shown in Figure 18), step 1730 may involve determining at least one instance of at least one superlative adjective in at least one document (e.g., instance 1856 of the superlative adjective "most exciting" in "Document 5," etc.). Additionally, for the third semantic sub-key (e.g., "Arcade Game 3" as shown in Figure 18), each instance of the at least one respective instance may include a respective superlative adjective of the at least one superlative adjective that is associated with a respective sentiment of a respective instance of the third semantic sub-key. For example, the superlative adjective "most exciting" (e.g., of instance 1856) may be associated with a sentiment of the semantic sub-key "Arcade Game 3" (e.g., where "most exciting" may be the effecting portion and "Arcade Game 3" may be the affected portion). As such, step 1730 may involve determining, for the semantic sub-key "Arcade Game 3," a quantity of one instance (e.g., of superlative adjectives, in at least one document, that are associated with sentiments of the semantic sub-key "Arcade Game 3") in one embodiment.

In one embodiment, each sentence depicted in Figure 18 may be (or be included in) a portion of a document. For example, the sentence "Arcade Game 1 is supreme" (e.g., including instance 1851 of the superlative adjective "supreme") may be (or be included in) a portion of "Document 1," the sentence "Arcade Game 1 is the most entertaining" (e.g., including instance 1852 of the superlative adjective "most entertaining") may be (or be included in) a portion of "Document 1," etc.

In one embodiment, the at least one respective instance determined in step 1730 may be associated with the category determined in step 1725 (e.g., based on the superlative adjective included in the search query). For example, each of the instances depicted in Figure 18 (e.g., 1851, 1852, 1853, 1854, 1855, 1856, etc.) may be associated with a positive category (e.g., determined in step 1725 based on superlative adjective 1840 of "best"). Alternatively, where it is determined in step 1720 that the search query includes another superlative adjective (e.g., "worst" or another superlative adjective that is determined in step 1725 to be associated with a negative category), the at least one respective instance determined in step 1730 may include one or more different portions of at least one document. In this case, a quantity of instances determined in step 1730 may be different from or the same as that determined for superlative adjective 1840 (e.g., "best") or any other superlative adjective included in a query.

A quantity of instances determined in step 1730 may be a net quantity of instances (e.g., taking into account one or more instances of a superlative adjective associated with category that is different from the category determined in step 1725) in one embodiment. For example, step 1730 may involve subtracting a number of instances of negative superlative adjectives (e.g., that are each associated with a sentiment of a particular semantic sub-key) from a number of instances of positive superlative adjectives (e.g., that are each associated with a sentiment of the particular semantic sub-key) to produce a net quantity of instances for the particular semantic sub-key, where the number of instances of the negative superlative adjectives may be included in one or more documents (e.g., the same as, or different from, the at least one document including the instances of the positive superlative adjectives). As another example, step 1730 may involve subtracting a number of instances of positive superlative adjectives (e.g., that are each associated with a sentiment of a particular semantic sub-key) from a number of instances of negative superlative adjectives (e.g., that are each associated with a sentiment of the particular semantic sub-key) to produce a net quantity of instances for the particular semantic sub-key, where the number of instances of the negative superlative adjectives may be included in one or more documents (e.g., the same as, or different from, the at least one document including the instances of the positive superlative adjectives).

In one embodiment, the at least one respective superlative adjective of the at least one respective instance determined in step 1730 may be different from or not include the superlative adjective (e.g., 1840) included in the search query (e.g., accessed in step 1705, depicted in Figure 18, etc.). Alternatively, the at least one respective superlative adjective of the at least one respective instance determined in step 1730 may include or be the same as the superlative adjective (e.g., 1840) included in the search query (e.g., accessed in step 1705, depicted in Figure 18, etc.).

In one embodiment, information associated with superlative adjectives may be stored in a database (e.g., sentiment database 230, semantic key and/or theme database 1330, another database, etc.) and/or data structure (e.g., 400, 500, 600A, 600B, 600C, 700A, 700B, 800A, 800B, 900, 1000, some combination thereof, etc.). For example, a data structure (e.g., 400 of Figure 4) may include information (e.g., as a separate column or portion of data from that depicted in Figure 4) that indicates that one or more effecting portions (e.g., of column 450) are superlative adjectives. As another example, a data structure (e.g., 900 of Figure 9) may include information (e.g., as a separate column or portion of data from that depicted in Figure 9) that indicates that one or more portions (e.g., themes or semantic keys of column 920, theme elements or semantic sub-keys of column 930, etc.) are modified by, affected by, effected by, etc. one or more superlative adjectives (e.g., that are associated with a sentiment of the one or more portions).

In one embodiment, information associated with superlative adjectives may be stored in a database (e.g., 230, 1330, another database, etc.) and/or data structure (e.g., 400, 500, 600A, 600B, 600C, 700A, 700B, 800A, 800B, 900, 1000, some combination thereof, etc.) by a sentiment analysis component (e.g., 220). In one embodiment, information associated with superlative adjectives may be stored (e.g., in a database and/or data structure) in accordance with step 155 of process 100. As such, in one embodiment, the information associated with superlative adjectives may be accessed and/or utilized at a later time (e.g., responsive to and/or in conjunction with the performance of a search by search component 1360, in step 1730 of process 1700, etc.).

Accordingly, in one embodiment, step 1730 may involve accessing a database (e.g., 230, 1330, another database, etc.) and/or data structure (e.g., 400, 500, 600A, 600B, 600C, 700A, 700B, 800A, 800B, 900, 1000, some combination thereof, etc.) using at least one portion of data (e.g., at least one document associated with search results generated responsive to a performance of a search based on the search query accessed in step 1705, any effecting portions that are superlative adjectives associated with a category determined in step 1725, any affected portion that is a semantic sub-key of the plurality of semantic sub-keys determined in step 1715, etc.) to access or retrieve, for each semantic sub-key of the plurality of semantic sub-keys, at least one respective instance (e.g., forming a respective quantity or number of instances corresponding to each semantic sub-key) of at least one respective superlative adjective in at least one respective document. And in other embodiments, step 1730 may involve alternatively determining at least one respective instance of at least one respective superlative adjective in at least one respective document.

As shown in Figure 17A, step 1735 involves determining a first ordering of the plurality of semantic sub-keys based on the at least one respective instance of at least one respective superlative adjective in at least one respective document. Step 1735 may be performed by a sentiment component (e.g., 1320) in one embodiment.

In one embodiment, step 1735 may involve ranking or ordering the plurality of semantic sub-keys based on respective quantities (e.g., of at least one respective instance of at least one respective superlative adjective in at least one respective document) determined in step 1730. For example, a first semantic sub-key (e.g., "Arcade Game 1" con-esponding to three instances determined in step 1730) may be ranked ahead of a second semantic sub-key (e.g., "Arcade Game 2" corresponding to two instances determined in step 1730) since more instances were determined in step 1730 for the first semantic sub-key than the second semantic sub-key. As another example, the second semantic sub-key (e.g., "Arcade Game 2" corresponding to two instances determined in step 1730) may be ranked ahead of a third semantic sub-key (e.g., "Arcade Game 3" corresponding to one instance determined in step 1730) since more instances were determined in step 1730 for the second semantic sub-key than the third semantic sub-key. As such, in this case, the first ordering of the three semantic sub-keys determined in step 1735 may be: Arcade Game 1 (e.g. ranked first); Arcade Game 2 (e.g. ranked second); and Arcade Game 3 (e.g. ranked third).

Accordingly, where a search query (e.g., accessed in step 1705) is associated with sentiment (e.g., the search query includes a superlative adjective), an ordering (e.g., the first ordering) of semantic sub-keys (e.g., associated with a semantic key included in the search query) may be automatically determined (e.g., by determining in step 1735, for each semantic sub-key, at least one respective instance of at least one respective superlative adjective in at least one respective document). The ordering of semantic sub-keys may provide information relevant to the search query. For example, where the search query includes the words "best arcade game" (e.g., as depicted in Figure 18), the ordering of semantic sub-keys (e.g., determined in step 1735) may indicate the best arcade game title (e.g., associated with the highest ranked semantic sub-key) and/or the top arcade game titles (e.g., associated with the highest ranked semantic sub-keys) as determined from at least one sentiment associated with at least one document (e.g., included in or associated with search results generated responsive to a search performed based on the search query).

As shown in Figure 17B, step 1740 involves determining a second ordering of the plurality of semantic sub-keys based on a plurality of sentiment scores associated with the plurality of semantic sub-keys. Step 1740 may be performed by a sentiment component (e.g., 1320) in one embodiment. Each semantic sub-key of the plurality of semantic sub-keys may be associated with a respective sentiment score of the plurality of sentiment scores. In one embodiment, step 1740 may involve adding respective score data (e.g., of column 940 of data structure 900) for each semantic sub-key of the plurality of semantic sub-keys to determine the plurality of sentiment scores, where each portion of the score data (e.g., including at least one score, at least one degree, at least one category, other sentiment data, etc.) may be associated with a sentiment of a respective semantic sub-key (e.g., that is an affected portion that is modified, affected, effected, etc. by an effecting portion). Accordingly, a respective sentiment score may be determined for each semantic sub-key in step 1740, where the plurality of semantic sub-keys may then be ranked or ordered based on the respective sentiment scores.

For example, step 1740 may involve determining a sentiment score for a first semantic sub-key (e.g., "Arcade Game 1 ") of +10, a sentiment score for a second semantic sub-key (e.g., "Arcade Game 2") of +6, and a sentiment score for a third semantic sub-key (e.g., "Arcade Game 3") of +4. As such, the second ordering determined in step 1740 may include the semantic sub-keys ordered based on respective sentiment scores: Arcade Game 1 (e.g. ranked first); Arcade Game 2 (e.g. ranked second); and Arcade Game 3 (e.g. ranked third).

In one embodiment, sentiment scores for the semantic sub-keys may be determined based on effecting portions which are only superlative adjectives (e.g., associated with only the category determined in step 1725, associated with both positive and negative categories, etc.). And in one embodiment, sentiment scores for the semantic sub-keys may be determined based on effecting portions of any degree (e.g., associated with only the category determined in step 1725, associated with both positive and negative categories, etc.).

In one embodiment, sentiment scores for the semantic sub-keys may be determined based on effecting portions associated with only the category determined in step 1725. And in one embodiment, sentiment scores for the semantic sub-keys may be determined based on effecting portions associated with both positive and negative categories.

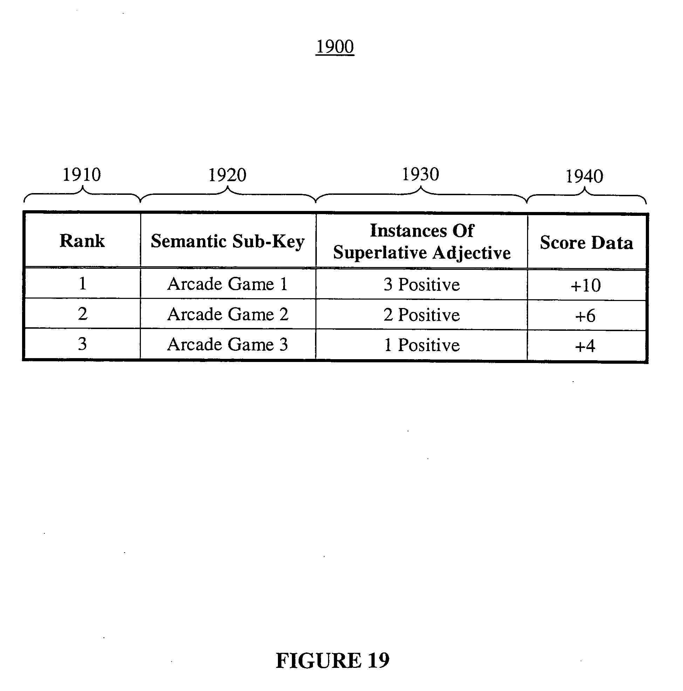

Figure 19 shows exemplary data structure 1900 including an ordering of semantic sub-keys in accordance with one embodiment of the present invention. As shown in Figure 19, each semantic sub-key of a plurality of semantic sub-keys (e.g., of column 1920) may be associated with a respective rank or ordering value (e.g., of column 1910). Column 1930 may include at least one respective instance (e.g., a respective quantity of instances of at least one respective superlative adjective in at least one respective document) associated with each semantic sub-key of column 1920. Column 1940 may include respective score data (e.g., including at least one score, at least one degree, at least one category, other sentiment data, etc.) associated with each semantic sub-key of column 1920.

In one embodiment, data structure 1900 may be generated and/or stored in a memory of, or coupled to, a sentiment component (e.g., 1320). The data of column 1930 may be generated and/or added to data structure 1900 responsive to or as part of a first set of steps (e.g., steps 1705 through 1735, or some combination thereof, of process 1700) in one embodiment. And in one embodiment, the data of column 1940 may be generated and/or added to data structure 1900 responsive to or as part of a second set of steps (e.g., steps 1705 through 1725 of process 1700, step 1740 of process 1700, some combination thereof, etc.).

In one embodiment, the data within data structure 1900 may be specific to and/or generated responsive to a search query (e.g., accessed in step 1705) and/or search results generated responsive to a search performed based on the search query. For example, the data of column 1930 and/or column 1940 may be specific to the search query (e.g., accessed in step 1705) and/or associated search results, and therefore, may change or be different where a different search query is accessed and/or the associated search results are different. As another example, where the rank or order values of column 1910 are determined based on the data of column 1930 and/or column 1940, the rank or order values may be specific to the search query (e.g., accessed in step 1705) and/or associated search results, and therefore, may change or be different where a different search query is accessed and/or the associated search results are different.

Turning back to Figure 17B, step 1745 involves determining if the first and second orderings differ. In one embodiment, step 1745 may involve comparing the first ordering (e.g., determined in step 1735) to the second ordering (e.g., determined in step 1740). Step 1745 may be performed by a sentiment component (e.g., 1320) and/or a search result processing component (e.g., 1380) in one embodiment. In one embodiment, the first ordering and/or the second ordering may be output (e.g., from sentiment component 1320) as sentiment data (e.g., 1340).

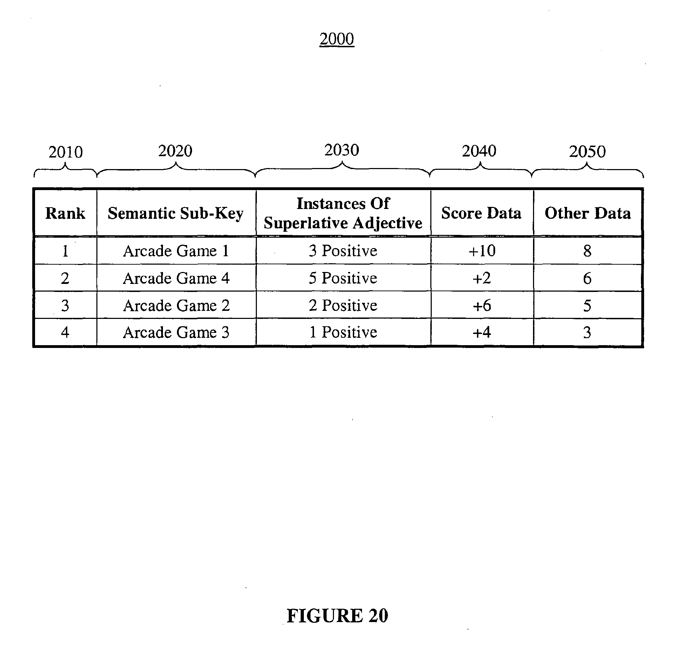

If the first ordering does not differ from the second ordering (e.g., the first and second orderings match as depicted in Figure 19), then process 1700 may proceed to step 1750. Alternatively, if the first ordering differs from the second ordering (e.g., as depicted in Figure 20), then process 1700 may proceed to step 1755.

As shown in Figure 17B, step 1750 involves performing, based on the first ordering (e.g., determined in step 1735) and/or the second ordering (e.g., determined in step 1740), at least one operation to generate first data (e.g., processed search results 1375, data for displaying an image, etc.). Step 1750 may be performed by a search result processing component (e.g., 1380) and/or a display component (e.g., 1390) in one embodiment.

In one embodiment, the at least one operation performed in step 1750 may involve filtering (e.g., using search result processing component 1380) search results (e.g., 1365) that are generated responsive to a search performed (e.g., by search component 1360) based on the search query (e.g., 1350, accessed in step 1705, etc.). For example, documents which do not include at least one instance of at least one of the plurality of semantic sub-keys (e.g., determined in step 1715) may be removed from the search results to generate processed search results (e.g., 1375).

The at least one operation performed in step 1750 may involve ranking (e.g., using search result processing component 1380) search results (e.g., 1365) that are generated responsive to a search performed (e.g., by search component 1360) based on the search query (e.g., 1350, accessed in step 1705, etc.), where the ranking may generate processed search results (e.g., 1375). For example, at least one document that includes at least one instance of at least one semantic sub-key of the plurality of semantic sub-keys may be ranked above at least one other document that does not include at least one instance of at least one semantic sub-key of the plurality of semantic sub-keys. As another example, at least one document that includes at least one instance of a first semantic sub-key may be ranked above at least one other document that that includes at least one instance of a second semantic sub-key (e.g., and does not include at least one instance of the first semantic sub-key), where the first semantic sub-key is ranked above the second semantic sub-key in the first ordering and/or the second ordering. As yet another example, at least one document that includes more instances of at least one semantic sub-key of the plurality of semantic sub-keys may be ranked above at least one other document that that includes fewer instances of the at least one semantic sub-key.

In one embodiment, the at least one operation performed in step 1750 may involve filtering and ranking of search results. For example, the search results (e.g., 1365) may be filtered and then ranked in step 1750. As another example, the search results (e.g., 1365) may be ranked and then filtered in step 1750.

The at least one operation performed in step 1750 may involve generating data for displaying an image and/or displaying the image. The data generated in step 1750 may include pixel data, texture data, at least one frame, at least one image, some combination thereof, etc. In one embodiment, generation of the data in step 1750 may be performed using search result processing component 1380 and/or display component 1390. And in one embodiment, display of the image may be performed using display component 1390.

In one embodiment, the image may be associated with search results generated responsive to a search performed based on the search query. In this case, the image may include respective portions of each search result (e.g., a snippet of a document, etc.), respective titles of each search results (e.g., titles, etc.), other information associated with the search results (e.g., URLs, etc.), some combination thereof, etc. The image may include a background (e.g., region 1640 of GUI 1600B of Figure 16B, region 1690 of GUI 1600C of Figure 16C, etc.) of a webpage associated with the search results, a background (e.g., region 1651 of GUI 1600B of Figure 16B, region 1652 of GUI 1600B of Figure 16B, region 1653 of GUI 1600B of Figure 16B, region 1654 of GUI 1600B of Figure 16B, etc.) of a webpage associated with at least one search result, at least one icon (e.g., 1652 of Figure 16B, 1662 of Figure 16B, 1672 of Figure 16B, 1682 of Figure 16B, 1684 of Figure 16B, etc.) associated with at least one search result, formatting (e.g., highlighting, bolding, underlining, italicizing, making larger, making smaller, superscripting, subscripting, changing the color of, capitalization, alternatively formatting, etc.) of text associated with at least one search result, some combination thereof, etc.

The image may be associated with the plurality of semantic sub-keys (e.g., determined in step 1715) in one embodiment. In this case, the image may include a listing of semantic sub-keys (e.g., at least a portion of the plurality of semantic sub-keys ranked in accordance with the first ordering and/or the second ordering). The image may include a background of a webpage used to display the plurality of semantic sub-keys (e.g., region 1690 of GUI 1600C of Figure 16C), formatting (e.g., highlighting, bolding, underlining, italicizing, making larger, making smaller, superscripting, subscripting, changing the color of, capitalization, alternatively formatting, etc.) of text associated with the plurality of semantic sub-keys, some combination thereof, etc.

In one embodiment, the image may be associated with search results (e.g., generated responsive to a search performed based on the search query) and the plurality of semantic sub-keys (e.g., determined in step 1715). The image may involve contemporaneous display of the search results and the plurality of semantic sub-keys in one embodiment.

The at least one operation performed in step 1750 may involve performing a new search based on a search query associated with a semantic sub-key (e.g., of the plurality of semantic sub-keys). For example, where the plurality of semantic sub-keys are displayed (e.g., in GUI 1600C of Figure 16C), a user may select a semantic sub-key to cause a new search to be performed based on the selected semantic sub-key. The new search may be performed based on a new search query that includes the selected semantic sub-key. In one embodiment, the new search query may include at least a portion of the original search query (e.g., accessed in step 1705). Search results generated responsive to the new search may be displayed (e.g., in region 1630 of GUI 1600A) in one embodiment, where the new search results may be displayed (e.g., in region 1630 of GUI 1600A) sequentially or contemporaneously with the plurality of semantic sub-keys (e.g., in region 1620 of GUI 1600A). And in one embodiment, one or more steps of process 1700 may be repeated for a new plurality of semantic sub-keys associated with the new search query and/or new search results.

As shown in Figure 17B, step 1755 involves generating second data based on the at least one respective instance (e.g., used in step 1735 to determine the first ordering) and the plurality of sentiment scores (e.g., used in step 1740 to determine the second ordering). The second data generated in step 1755 may include a plurality of scores or values, where each score or value is associated with a respective semantic sub-key of the plurality of semantic sub-keys. In one embodiment, step 1755 may involve performing an operation such as normalizing the at least one respective instance with respect to the plurality of sentiment scores to generate the second data, normalizing the plurality of sentiment scores with respect to the at least one respective instance to generate the second data, averaging the at least one respective instance and the plurality of sentiment scores to generate the second data, some combination thereof, etc.

Figure 20 shows exemplary data structure 2000 including an ordering of semantic sub-keys in accordance with one embodiment of the present invention. As shown in Figure 20, each semantic sub-key of a plurality of semantic sub-keys (e.g., of column 2020) may be associated with a respective rank or ordering value (e.g., of column 2010). Each semantic sub-key (e.g., of column 2020) may be associated with a semantic key (e.g., included in the search query as determined in step 1710) in one embodiment. Column 2030 may include at least one respective instance (e.g., a respective quantity of instances of at least one respective superlative adjective in at least one respective document) associated with each semantic sub-key of column 2020. Column 2040 may include respective score data (e.g., including at least one score, at least one degree, at least one category, other sentiment data, etc.) associated with each semantic sub-key of column 2020.

Column 2050 may include other data (e.g., second data generated in step 1755), where each portion of the other data (e.g., in column 2050) may be associated with a respective semantic sub-key (e.g., in column 2020). The other data (e.g., in column 2050) may be generated based on data in one or more other columns (e.g., 2030, 2040, etc.) of data structure 2000 in one embodiment.

In one embodiment, where it is determined (e.g., in step 1745) that the orderings of semantic sub-keys (e.g., of column 2020) are different (e.g., based on the data in columns 2030 and 2040), the other data (e.g., in column 2050) may be generated (e.g., in step 1755) by normalizing the data in column 2030 with respect to the data in column 2040. For example, the data of column 2030 may be scaled based on a multiplier (e.g., "2" in this example) which may be determined by dividing the largest value of column 2040 (e.g., 10) by the largest value of column 2030 (e.g., 5). The resulting data may be stored in column 2050 as the other data.

In one embodiment, where it is determined (e.g., in step 1745) that the orderings of semantic sub-keys (e.g., of column 2020) are different (e.g., based on the data in columns 2030 and 2040), the other data (e.g., in column 2050) may be generated (e.g., in step 1755) by normalizing the data in column 2040 with respect to the data in column 2030. For example, the data of column 2040 may be scaled based on a multiplier which may be determined by dividing the largest value of column 2030 by the largest value of column 2040. The resulting data may be stored in column 2050 as the other data.

In one embodiment, where it is determined (e.g., in step 1745) that the orderings of semantic sub-keys (e.g., of column 2020) are different (e.g., based on the data in columns 2030 and 2040), the other data (e.g., in column 2050) may be generated (e.g., in step 1755) by averaging the data in columns 2030 and 2040. The resulting data may be stored in column 2050 as the other data.

And in one embodiment, where it is determined (e.g., in step 1745) that the orderings of semantic sub-keys (e.g., of column 2020) are different (e.g., based on the data in columns 2030 and 2040), the other data (e.g., in column 2050) may be generated (e.g., in step 1755) by normalizing and averaging the data in columns 2030 and 2040. For example, the data in column 2030 may be normalized with respect to the data in column 2040 by scaling the data of column 2030 based on a multiplier (e.g., "2" in this example) which may be determined by dividing the largest value of column 2040 (e.g., 10) by the largest value of column 2030 (e.g., 5). The resulting data and the data of column 2040 may be then be averaged such that the result may be stored in column 2050 as the other data (e.g., as depicted in Figure 20). For example, the value of "3" (e.g., in the first row of column 2030) may be scaled by a multiplier of "2" (e.g., to produce a scaled value of "6") and then averaged with the value of "10" (e.g., in the first row of column 2040) to provide a value of "8" (e.g., in the first row of column 2050). As another example, the value of "5" (e.g., in the second row of column 2030) may be scaled by a multiplier of "2" (e.g., to produce a scaled value of "10") and then averaged with the value of "2" (e.g., in the second row of column 2040) to provide a value of "6" (e.g., in the second row of column 2050).

Data structure 2000 may be generated and/or stored in a memory of, or coupled to, a sentiment component (e.g., 1320) in one embodiment. The data of column 2030 may be generated and/or added to data structure 2000 responsive to or as part of a first set of steps (e.g., steps 1705 through 1735, or some combination thereof, of process 1700) in one embodiment. In one embodiment, the data of column 2040 may be generated and/or added to data structure 2000 responsive to or as part of a second set of steps (e.g., steps 1705 through 1725 of process 1700, step 1740 of process 1700, some combination thereof, etc.). And in one embodiment, the data of column 2050 may be generated and/or added to data structure 2000 responsive to or as part of a third set of steps (e.g., one or more of steps 1705 through 1760 of process 1700).

Turning back to Figure 17B, step 1760 involves determining a third ordering of the plurality of semantic sub-keys based on the second data (e.g., generated in step 1755). Step 1760 may be performed by a sentiment component (e.g., 1320) in one embodiment.

In one embodiment, step 1760 may involve ranking or ordering the plurality of semantic sub-keys based on the second data determined in step 1755. For example, a first semantic sub-key (e.g., "Arcade Game 1" corresponding to other data of "8" as shown in the first row of data structure 2000 of Figure 20) may be ranked ahead of a second semantic sub-key (e.g., "Arcade Game 4" corresponding to other data of "6" as shown in the second row of data structure 2000 of Figure 20) since the value of "8" (e.g., in the first row of column 2050) is greater than the value of "6" (e.g., in the second row of column 2050). As another example, a second semantic sub-key (e.g., "Arcade Game 4" corresponding to other data of "6" as shown in the second row of data structure 2000 of Figure 20) may be ranked ahead of a third semantic sub-key (e.g., "Arcade Game 2" corresponding to other data of "5" as shown in the third row of data structure 2000 of Figure 20) since the value of "6" (e.g., in the second row of column 2050) is greater than the value of "5" (e.g., in the third row of column 2050). As yet another example, a third semantic sub-key (e.g., "Arcade Game 2" corresponding to other data of "5" as shown in the third row of data structure 2000 of Figure 20) may be ranked ahead of a fourth semantic sub-key (e.g., "Arcade Game 3" corresponding to other data of "3" as shown in the fourth row of data structure 2000 of Figure 20) since the value of "5" (e.g., in the third row of column 2050) is greater than the value of "3" (e.g., in the fourth row of column 2050). As such, in this case, the third ordering of the semantic sub-keys determined in step 1760 may be: Arcade Game 1 (e.g. ranked first); Arcade Game 4 (e.g. ranked second); Arcade Game 2 (e.g. ranked third); and Arcade Game 3 (e.g. ranked fourth).

In one embodiment, the data within data structure 2000 may be specific to and/or generated responsive to a search query (e.g., accessed in step 1705) and/or search results generated responsive to a search performed based on the search query. For example, the data of one or more columns (e.g., 2030, 2040, 2050, etc.) may be specific to the search query (e.g., accessed in step 1705) and/or associated search results, and therefore, may change or be different where a different search query is accessed and/or the associated search results are different. As another example, where the rank or order values of column 2010 are determined based on the data of one or more columns (e.g., 2030, 2040, 2050, etc.), the rank or order values may be specific to the search query (e.g., accessed in step 1705) and/or associated search results, and therefore, may change or be different where a different search query is accessed and/or the associated search results are different.

Turning back to Figure 17B, step 1765 involves performing, based on the third ordering (e.g., determined in step 1760), at least one operation to generate third data (e.g., processed search results 1375, data for displaying an image, etc.). Step 1765 may be performed by a search result processing component (e.g., 1380) and/or a display component (e.g., 1390) in one embodiment.

In one embodiment, the at least one operation performed in step 1765 may involve filtering (e.g., using search result processing component 1380) search results (e.g., 1365) that are generated responsive to a search performed (e.g., by search component 1360) based on the search query (e.g., 1350, accessed in step 1705, etc.). For example, documents which do not include at least one instance of at least one of the plurality of semantic sub-keys (e.g., determined in step 1715) may be removed from the search results to generate processed search results (e.g., 1375).

The at least one operation performed in step 1765 may involve ranking (e.g., using search result processing component 1380) search results (e.g., 1365) that are generated responsive to a search performed (e.g., by search component 1360) based on the search query (e.g., 1350, accessed in step 1705, etc.), where the ranking may generate processed search results (e.g., 1375). For example, at least one document that includes at least one instance of at least one semantic sub-key of the plurality of semantic sub-keys may be ranked above at least one other document that does not include at least one instance of at least one semantic sub-key of the plurality of semantic sub-keys. As another example, at least one document that includes at least one instance of a first semantic sub-key may be ranked above at least one other document that that includes at least one instance of a second semantic sub-key (e.g., and does not include at least one instance of the first semantic sub-key), where the first semantic sub-key is ranked above the second semantic sub-key in the first ordering and/or the second ordering. As yet another example, at least one document that includes more instances of at least one semantic sub-key of the plurality of semantic sub-keys may be ranked above at least one other document that that includes fewer instances of the at least one semantic sub-key.

In one embodiment, the at least one operation performed in step 1765 may involve filtering and ranking of search results. For example, the search results (e.g., 1365) may be filtered and then ranked in step 1765. As another example, the search results (e.g., 1365) may be ranked and then filtered in step 1765.

The at least one operation performed in step 1765 may involve generating data for displaying an image and/or displaying the image. The data generated in step 1765 may include pixel data, texture data, at least one frame, at least one image, some combination thereof, etc. In one embodiment, generation of the data in step 1765 may be performed using search result processing component 1380 and/or display component 1390. And in one embodiment, display of the image may be performed using display component 1390.

In one embodiment, the image may be associated with search results generated responsive to a search performed based on the search query. In this case, the image may include respective portions of each search result (e.g., a snippet of a document, etc.), respective titles of each search results (e.g., titles, etc.), other information associated with the search results (e.g., URLs, etc.), some combination thereof, etc. The image may include a background (e.g., region 1640 of GUI 1600B of Figure 16B, region 1690 of GUI 1600C of Figure 16C, etc.) of a webpage associated with the search results, a background (e.g., region 1651 of GUI 1600B of Figure 16B, region 1652 of GUI 1600B of Figure 16B, region 1653 of GUI 1600B of Figure 16B, region 1654 of GUI 1600B of Figure 16B, etc.) of a webpage associated with at least one search result, at least one icon (e.g., 1652 of Figure 16B, 1662 of Figure 16B, 1672 of Figure 16B, 1682 of Figure 16B, 1684 of Figure 16B, etc.) associated with at least one search result, formatting (e.g., highlighting, bolding, underlining, italicizing, making larger, making smaller, superscripting, subscripting, changing the color of, capitalization, alternatively formatting, etc.) of text associated with at least one search result, some combination thereof, etc.

The image may be associated with the plurality of semantic sub-keys (e.g., determined in step 1715) in one embodiment. In this case, the image may include a listing of semantic sub-keys (e.g., at least a portion of the plurality of semantic sub-keys ranked in accordance with the third ordering). The image may include a background of a webpage used to display the plurality of semantic sub-keys (e.g., region 1690 of GUI 1600C of Figure 16C), formatting (e.g., highlighting, bolding, underlining, italicizing, making larger, making smaller, superscripting, subscripting, changing the color of, capitalization, alternatively formatting, etc.) of text associated with the plurality of semantic sub-keys, some combination thereof, etc.

In one embodiment, the image may be associated with search results (e.g., generated responsive to a search performed based on the search query) and the plurality of semantic sub-keys (e.g., determined in step 1715). The image may involve contemporaneous display of the search results and the plurality of semantic sub-keys in one embodiment.

The at least one operation performed in step 1765 may involve performing a new search based on a search query associated with a semantic sub-key (e.g., of the plurality of semantic sub-keys). For example, where the plurality of semantic sub-keys are displayed (e.g., in GUI 1600C of Figure 16C), a user may select a semantic sub-key to cause a new search to be performed based on the selected semantic sub-key. The new search may be performed based on a new search query that includes the selected semantic sub-key. In one embodiment, the new search query may include at least a portion of the original search query (e.g., accessed in step 1705). Search results generated responsive to the new search may be displayed (e.g., in region 1630 of GUI 1600A) in one embodiment, where the new search results may be displayed (e.g., in region 1630 of GUI 1600A) sequentially or contemporaneously with the plurality of semantic sub-keys (e.g., in region 1620 of GUI 1600A). And in one embodiment, one or more steps of process 1700 may be repeated for a new plurality of semantic sub-keys associated with the new search query and/or new search results.

Although process 1700 is depicted in Figures 17A and 17B with a specific number of steps, it should be appreciated that process 1700 may include a different number of steps in other embodiments. Additionally, although process 1700 is depicted in Figures 17A and 17B with a specific ordering of steps, it should be appreciated that process 1700 may include a different ordering of steps in other embodiments.

Although Figure 18 depicts a specific number of elements (e.g., of query 1810, semantic key 1820, semantic sub-keys 1830, documents, document portions, instances of superlative adjectives in at least one document, etc.), it should be appreciated that Figure 18 may include a different number of elements in other embodiments. Additionally, although Figure 18 depicts a semantic key (e.g., 1820) with a plurality of words, it should be appreciated that the semantic key (e.g., 1820) may include any number of words. Further, although Figure 18 depicts a query

(e.g., 1810) with only one semantic key (e.g., 1820), it should be appreciated that the query may include any number of semantic keys in other embodiments.

Although Figure 19 depicts data structure 1900 with a certain amount and type of data, it should be appreciated that data structure 1900 may include a different amount and/or type of data in other embodiments. Additionally, although Figure 19 depicts data structure 1900 with a certain arrangement of data, it should be appreciated that data structure 1900 may include a different arrangement of data in other embodiments.

Although Figure 20 depicts data structure 2000 with a certain amount and type of data, it should be appreciated that data structure 2000 may include a different amount and/or type of data in other embodiments. Additionally, although Figure 20 depicts data structure 2000 with a certain arrangement of data, it should be appreciated that data structure 2000 may include a different arrangement of data in other embodiments.

### Computer System Platform

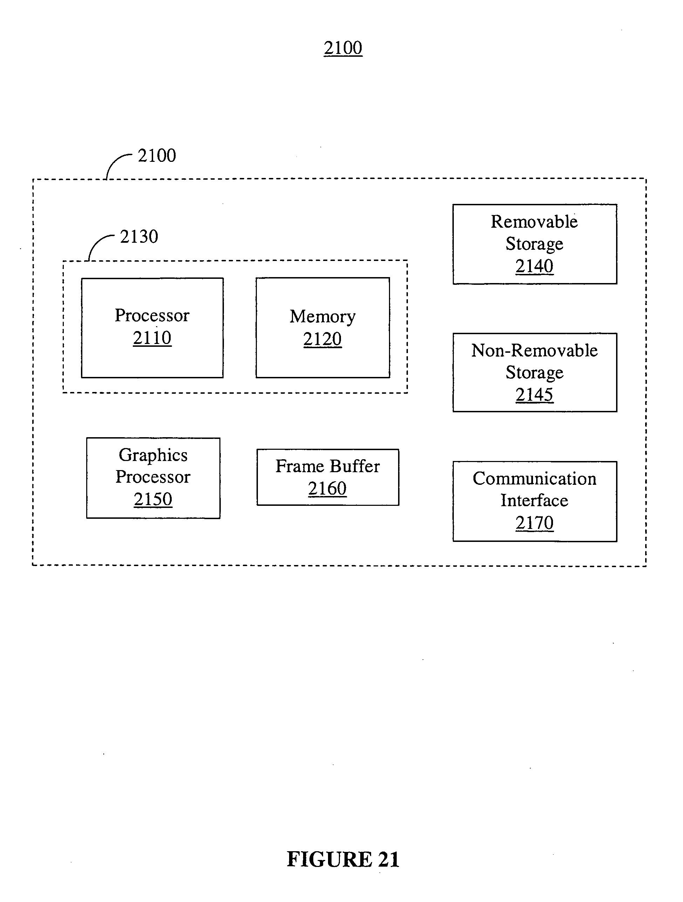

Figure 21 shows exemplary computer system platform 2100 upon which embodiments of the present invention may be implemented. As shown in Figure 21, portions of the present invention may be implemented by execution of computer-readable instructions or computer-executable instructions that may reside in components of computer system platform 2100 and which may be used as a part of a general purpose computer network. It is appreciated that computer system platform 2100 of Figure 21 is merely exemplary. As such, the present invention can operate within a number of different systems including, but not limited to, general-purpose computer systems, embedded computer systems, laptop computer systems, hand-held computer systems, portable computer systems, or stand-alone computer systems.

In one embodiment, computer system platform 2100 may be used to implement system 200 (e.g., as shown in Figure 2), sentiment analysis component 220 (e.g., as shown in Figure 3), system 1300A (e.g., as shown in Figure 13A), system 1300B (e.g., as shown in Figure 13B), some combination thereof, etc. And in one embodiment, one or more components of computer system platform 2100 may be disposed in and/or coupled with a housing or enclosure.

In one embodiment, depicted by dashed lines 2130, computer system platform 2100 may include at least one processor 2110 and at least one memory 2120. Processor 2110 may include a central processing unit (CPU) or other type of processor. Depending on the configuration and/or type of computer system environment, memory 2120 may include volatile memory (e.g., RAM), non-volatile memory (e.g., ROM, flash memory, etc.), or some combination of the two. Additionally, memory 2120 may be removable, non-removable, etc.

In other embodiments, computer system platform 2100 may include additional storage (e.g., removable storage 2140, non-removable storage 2145, etc.). Removable storage 2140 and/or non-removable storage 2145 may include volatile memory, non-volatile memory, or any combination thereof. Additionally, removable storage 2140 and/or non-removable storage 2145 may include CD-ROM, digital versatile disks (DVD) or other optical storage, magnetic cassettes, magnetic tape, magnetic disk storage or other magnetic storage devices, or any other medium which can be used to store information for access by computer system platform 2100.

As shown in Figure 21, computer system platform 2100 may communicate with other systems, components, or devices via communication interface 2170. Communication interface 2170 may embody computer-readable instructions, data structures, program modules or other data in a modulated data signal (e.g., a carrier wave) or other transport mechanism. By way of example, and not limitation, communication interface 2170 may couple to wired media (e.g., a wired network, direct-wired connection, etc.) and/or wireless media (e.g., a wireless network, a wireless connection utilizing acoustic, radio frequency (RF), infrared, or other wireless signaling, etc.).

Communication interface 2170 may also couple computer system platform 2100 to one or more input devices (e.g., a keyboard, mouse, pen, voice input device, touch input device or touch screen, etc.). In one embodiment, communication interface 2170 may couple computer system platform 2100 to one or more output devices (e.g., a display, speaker, printer, etc.).

As shown in Figure 21, graphics processor 2150 may perform graphics processing operations on graphical data stored in frame buffer 2160 or another memory (e.g., 2120, 2140, 2145, etc.) of computer system platform 2100. Graphical data stored in frame buffer 2160 may be accessed, processed, and/or modified by components (e.g., graphics processor 2150, processor 2110, etc.) of computer system platform 2100 and/or components of other systems/devices. Additionally, the graphical data may be accessed (e.g., by graphics processor 2150) and displayed on an output device coupled to computer system platform 2100. Accordingly, memory 2120, removable storage 2140, non-removable storage 2145, frame buffer 2160, or a combination thereof, may be a computer-readable medium or computer-usable medium and may include instructions that when executed by a processor (e.g., 2110, 2150, etc.) implement a method of automatically generating sentiment data (e.g., in accordance with process 100 of Figures 1A, 1B and 1C), a method of processing data (e.g., in accordance with process 1100 of Figure 11), a method of performing at least one operation (e.g., in accordance with process 1200 of Figure 12), a method of determining an ordering (e.g., in accordance with process 1700 of Figures 17A and 17B), some combination thereof, etc.

In the foregoing specification, embodiments of the invention have been described with reference to numerous specific details that may vary from implementation to implementation. Thus, the sole and exclusive indicator of what is, and is intended by the applicant to be, the invention is the set of claims that issue from this application, in the specific form in which such claims issue, including any subsequent correction. Hence, no limitation, element, property, feature, advantage, or attribute that is not expressly recited in a claim should limit the scope of such claim in any way. Accordingly, the specification and drawings are to be regarded in an illustrative rather than a restrictive sense.

## Claims

1. A computer-implemented method of determining an ordering, said method comprising:
accessing a search query, wherein said search query comprises a semantic key and a superlative adjective;
determining a plurality of semantic sub-keys associated with said semantic key;
determining, for each semantic sub-key of said plurality of semantic sub-keys, at least one respective instance of at least one respective superlative adjective in at least one respective document, wherein each instance of said at least one respective instance comprises a respective superlative adjective that is associated with a respective sentiment of a respective semantic sub-key; and
determining a first ordering of said plurality of semantic sub-keys based on said at least one respective instance of said at least one respective superlative adjective in said at least one respective document.

2. The method of Claim 1 further comprising:
determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
comparing said first and second orderings; and
if said first and second orderings match, performing at least one operation to generate first data, and wherein said performing further comprises performing said at least one operation based on an ordering selected from a group consisting of said first ordering and said second ordering.

3. The method of Claim 2, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.

4. The method of any one of Claims 1 to 3 further comprising:
determining a second ordering of said plurality of semantic sub-keys based on a plurality of sentiment scores associated with said plurality of semantic sub-keys, wherein each semantic sub-key of said plurality of semantic sub-keys is associated with a respective sentiment score of said plurality of sentiment scores;
comparing said first and second orderings;
if said first and second orderings differ, generating second data based on said at least one respective instance and said plurality of sentiment scores; and
determining a third ordering of said plurality of semantic sub-keys based on said second data.

5. The method of Claim 4, wherein said generating second data further comprises performing an operation selected from a group consisting of: normalizing said at least one respective instance with respect to said plurality of sentiment scores to generate said second data; normalizing said plurality of sentiment scores with respect to said at least one respective instance to generate said second data; and averaging said at least one respective instance and said plurality of sentiment scores to generate said second data.

6. The method of any one of Claims 4 to 5 further comprising:
performing, based on said third ordering, at least one operation to generate third data.

7. The method of Claim 6, wherein said at least one operation is selected from a group consisting of filtering search results generated responsive to a search performed based on said search query, ranking search results generated responsive to a search performed based on said search query, generating data for displaying an image associated with search results generated responsive to a search performed based on said search query, and generating data for displaying an image associated with said plurality of semantic sub-keys.

8. The method of any one of Claims 1to 7 further comprising:
determining a category associated with said superlative adjective, and
wherein said determining said respective quantity of instances further comprises determining said respective quantity of instances in said at least one document of at least one superlative adjective associated with said category.

9. The method of Claim 8, wherein said category is selected from a group consisting of positive and negative.

10. A computer-readable medium having computer-readable program code embodied therein for causing a computer system to perform a method of any of Claims 1 through 9.

11. A system comprising a processor and a memory, wherein said memory comprises instructions for causing said processor to implement a method of any of Claims 1 through 9.
